# EUROPEAN PATENT APPLICATION

(11) **EP 4 657 230 A1**
(43) Date of publication of application: **03.12.2025**
(21) Application number: 24838359.8
(22) Date of filing: 22.03.2024
(51) Int. Cl.: G06F 3/0488

(54) **SPEECH PROCESSING METHOD AND ELECTRONIC DEVICE**

(30) Priority: 12.07.2023 CN 202310862032; 12.07.2023 CN 202310855258
(71) Applicant: Honor Device Co., Ltd., Shenzhen, Guangdong 518040 (CN)
(72) Inventor: YIN, Dan, Shenzhen, Guangdong 518040 (CN)
(74) Representative: Goddar, Heinz J.
(86) International application number: PCT/CN2024/083416
(87) International publication number: WO 2025/011099

(57) **Abstract**

This application relates to the field of audio processing technologies, and provides a voice processing method and an electronic device. If the electronic device receives a long-press operation after transcribing a voice file into a text, it indicates that a user may intend to select speech content located in different segments simultaneously. The electronic device may concatenate all displayed speech information to obtain a concatenated character string. Next, the electronic device determines a target character range based on a start position and an end position corresponding to the long-press operation in combination with the concatenated character string. The target character range represents selected characters corresponding to the long-press operation in the concatenated character string. Next, the electronic device displays the concatenated character string in plain text format, and sets a selection state for characters in the target character range to achieve the cross-segment selection of speech information. The electronic device may perform corresponding processing, for example, sharing, searching, copying, among other operations, according to a function control selected by the user, to provide the user with diverse services, thereby enhancing user experience.

## Description

This application claims priority to Chinese Patent Application No. 202310862032.1, filed with the China National Intellectual Property Administration on July 12, 2023 and entitled "VOICE PROCESSING METHOD AND ELECTRONIC DEVICE" and Chinese Patent Application No. 202310855258.9, filed with the China National Intellectual Property Administration on July 12, 2023 and entitled "VOICE PROCESSING METHOD AND ELECTRONIC DEVICE", which are incorporated herein by reference in their entireties.

### TECHNICAL FIELD

This application relates to the field of audio processing technologies, and in particular, to a voice processing method and an electronic device.

### BACKGROUND

With the advancement of electronic devices, functionalities offered by electronic devices have become increasingly diverse. For example, electronic devices offer recording functionality. In daily work and study, many users utilize the recording functionality of electronic devices. For examples, users add recordings to notes.

Currently, electronic devices typically provide basic services for recorded voice data, for example, support a service of transcribing voice data into a text, enabling users to visually access a speech of a speaker through a transcript. However, when users require additional use requirements related to voice data, the lack of corresponding services on electronic devices leaves the use requirements of the users unmet. Therefore, there is an urgent need for electronic devices to offer more diverse services for voice data to meet the use requirements of the users.

### SUMMARY

In view of this, this application provides a voice processing method and an electronic device, to achieve the cross-segment selection or merging of speech texts, thereby providing more diverse services for voice data.

According to a first aspect, this application provides a voice processing method. During recording, an electronic device displays a first interface of a first note in a notes application. The first interface includes a first recording card. The first recording card displays a first control configured to trigger recording stop.

After receiving the latest voice data, the electronic device transcribes the latest voice data to obtain the latest speech information corresponding to the latest voice data.

Next, the electronic device adds the latest speech information to the first recording card. Next, after receiving a trigger operation (for example, a click operation) on the first control by a user, the electronic device stops recording and displays a second interface of the first note in response to the trigger operation. A recording card displayed on the second interface is used as a second recording card. The second recording card may include all speech information obtained during recording and a second control. Generally, all the speech information includes a plurality of pieces of speech information. The second control is configured to trigger the electronic device to continue recording.

After a long-press operation inputted by the user is received, it indicates that the user intends to select the content of speech information. The electronic device updates the second recording card to a third recording card. A target character range in a concatenated character string is selected in the third recording card. The concatenated character is obtained by concatenating the plurality of pieces of speech information. That is to say, the speech information is displayed in text format.

The target character range is determined based on a start position and an end position corresponding to the long-press operation. The target character range includes at least two pieces of speech information in the plurality of pieces of speech information or information in different lines in one piece of speech information in the plurality of pieces of speech information.

The electronic device may display at least one function control. The function control is configured to trigger the electronic device to perform corresponding processing on characters in the target character range.

In this application, the notes application provides a recording function. In a process of editing a note (for example, the first note), the user may add a recording. Correspondingly, during recording, the electronic device transcribes received voice data into speech information in real time and displays the speech information to visually present speech content, to enable the user to quickly access the speech content corresponding to the voice data. Next, when recording is stopped, if the user intends to select speech information, the user may input a long-press operation. After receiving the long-press operation, the electronic device may obtain a start position and an end position corresponding to the long-press operation and concatenate characters in all the speech information to obtain a concatenated character string. The content of the concatenated character string is consistent with that of the speech information. The electronic device displays the concatenated character string to achieve the display of the speech information in plain text format, and sets a selection state for a target character range in the concatenated character string. Because the concatenated character string, i.e., concatenated speech information, is plain text, the electronic device can simultaneously select different speech information, for example, simultaneously select characters in a plurality of consecutive pieces of speech information, or simultaneously select different types of information (for example, simultaneously select a speaker label and a speech text) located in different lines in one piece of speech information, thereby achieving the cross-segment selection of speech information. Next, the electronic device may display function controls to enable the user to select a function control according to a use requirement, and the electronic device performs corresponding processing based on the function control selected by the user, to provide the user with diverse services and meeting the use requirement of the user, thereby enhancing user experience.

The first control may be a pause recording control. The second control may be a start recording control.

In a possible design embodiment, the electronic device may start concatenating from the first character in all speech information displayed on the third recording card and stop concatenating when reaching the last character in all the speech information to achieve the concatenation of the speech information, thereby achieving the format conversion of the speech information.

In a possible design embodiment, the target character range includes a character corresponding to an offset character position and characters within a selected character count succeeding the offset character position.

A process of determining the offset character position may include: The electronic device counts corresponding characters from the first character in the plurality of pieces of speech information to the start position corresponding to the long-press operation to obtain the offset character position. The offset character position represents a position of the first selected character with respect to the concatenated character string.

The selected character count is determined based on the start position and the end position corresponding to the long-press operation.

In this application, the position of the first selected character in the concatenated character string may be determined by using the offset character position, so that the selected character can be accurately determined. That is to say, the target character range can be accurately determined.

In a possible design embodiment, the second recording card includes a scrollable component, and the plurality of pieces of speech information are carried by the scrollable component. The scrollable component include a plurality of items items. The speech information corresponds one to one to the items. Each item carries the corresponding speech information. The item includes at least two text components. One text component in the at least two text components may include a speaker label, and another text component may include a speech text. The speech text and the speaker label are typically located in different lines. The plurality of items cannot be simultaneously selected, and the content of different text components cannot be simultaneously selected either. Therefore, the electronic device may replace the scrollable component in the second recording card with a preset text component, that is to say, instead of using the scrollable component to carry speech information, use the preset text component to display the concatenated speech information, that is to say, use the preset text component to display speech information in plain text format, to enable the electronic device to simultaneously select a plurality of pieces of speech information or simultaneously select information in different lines in the same piece of speech information, thereby achieving the cross-line (or referred to as cross-segment) selection of speech information.

Optionally, the types of text components in the at least two text components may be the same or may be different. The text components may include an EditText and a textview. A preset speech text may be a textview.

In a possible design embodiment, after at least one function control is displayed, when the function control stops displaying, the electronic device may replace the preset text component with the scrollable component again for a layout component of the speech information, that is to say, replace the preset text component of the third recording card with the scrollable component. The scrollable component carries a plurality of pieces of speech information, to facilitate the response of the electronic device to operations of the user, thereby ensuring the accuracy of operations.

In a possible design embodiment, the notes application further supports response to a click operation.

After receiving a click operation inputted by the user, in response to the click operation, when a click position corresponding to the click operation is a speech text, it is determined whether the electronic device is in a playback state.

If the electronic device is not in the playback state, the electronic device enters an edit mode.

If the electronic device is in the playback state, the electronic device plays voice data corresponding to a first speech time. The first speech time represents a speech time corresponding to a character corresponding to the click position. The playback state represents that the electronic device plays voice data.

In the embodiments of this application, when determining that the user has clicked a speech text, the electronic device may determine whether a tablet computer is in the playback state to determine a use intention of the user, that is to say, determine whether the user intends to edit the clicked speech text or intends to display and move a playback position of a progress bar to a time corresponding to the clicked speech text. When the electronic device is not in the playback state, the user is less likely to intend to play voice data but more likely to intend to edit the speech text. Therefore, the electronic device may enter the edit mode, to enable the user to edit the clicked speech text. When the electronic device is in the playback state, the user is more likely to intend to play voice data but less likely to intend to edit the speech text. Therefore, the electronic device may play voice data corresponding to a speech time corresponding to the clicked character, thereby achieving the precise playback of voice data without manual adjustment by the user.

In a possible design embodiment, the second recording card further includes a progress bar. If the electronic device is in the playback state,

the electronic device moves a playback position of the progress bar to the first speech time, making it convenient for the user to visually access the playback of voice data.

In a possible design embodiment, the first speech time is obtained by adding an offset time to a speech start time corresponding to a first target speech text. The offset time is obtained based on a speech speed corresponding to the first target speech text and an offset character count. The offset character count is a quantity of characters preceding the click position in the first target speech text. The first target speech text represents a speech text in which the click position is located. Based on this, the speech time can be precisely determined.

In a possible design embodiment, the speech information further includes a speaker label. That is to say, the electronic device may further display the speaker label.

When the click position corresponding to the click operation is in the speech text, it is determined whether the electronic device is in the playback state.

If the electronic device is not in the playback state, the user is less likely to intend to play the voice data but is more likely to intend to edit the speaker label, the electronic device may enter the edit mode and display a speaker modification control. The speaker modification control is configured to trigger the electronic device to modify the speaker label, so that the user modifies the speaker label by using the speaker modification control to achieve the modification of speech content, thereby meeting a modification requirement of the user.

If the electronic device is in the playback state, the user is more likely to intend to play the voice data but less likely to intend to edit the speaker label, the electronic device plays voice data corresponding to a target speech start time. The target speech start time is a speech start time corresponding to the speaker label, i.e., a speech start time corresponding to the speaker label clicked by the user, thereby achieving the precise playback of voice data.

In a possible design embodiment, the electronic device may alternatively move the playback position of the progress bar to the target speech start time, making it convenient for the user to visually access the playback of voice data.

According to a second aspect, this application provides a voice processing method. During recording, an electronic device displays a first interface of a first note in a notes application. The first interface includes a first recording card. The first recording card displays a first control configured to trigger recording stop.

After receiving the latest voice data, the electronic device transcribes the latest voice data to obtain the latest speech information corresponding to the latest voice data.

Next, the electronic device adds the latest speech information to the first recording card. Next, after receiving a trigger operation (for example, a click operation) on the first control by a user, the electronic device stops recording and displays a second interface of the first note in response to the trigger operation. A recording card displayed on the second interface is used as a second recording card. The second recording card may include all speech information obtained during recording and a second control, for example, include first speech information and second speech information. The first speech information includes a first speech text. The second speech information includes a second speech text. A speech time corresponding to the first speech information is earlier than a speech time corresponding to the second speech information. The first speech information and the second speech information are displayed adjacently. The second recording card further includes the second control configured to trigger recording continuance.

Next, after a first operation on the second speech text by the user is received, in response to the first operation, a cursor is displayed at the beginning of a line in the second speech text. That is to say, the first operation is configured for triggering the electronic device to display the cursor at the beginning of a line in the second speech text.

Next, after receiving a deletion operation inputted by the user, the electronic device updates the second recording card to a fourth recording card in response to the deletion operation. The second speech text and the first speech text are merged into third speech information. That is to say, the second speech text is merged into the first speech text, and the second speech information is deleted in the fourth recording card. A speaker label corresponding to the third speech information is the same as a speaker label corresponding to the second speech text.

In this application, the notes application provides a recording function. In a process of editing a note (for example, the first note), the user may add a recording. Correspondingly, during recording, the electronic device transcribes received voice data into speech information in real time and displays the speech information to visually present speech content, to enable the user to quickly access the speech content corresponding to the voice data. Next, after recording is stopped, if the user intends to merge one speech text (for example, the second speech text) into another speech text (for example, the first speech text), the first operation may be performed on the second speech text. The electronic device displays the cursor at the beginning of a line in the second speech text in response to the first operation. Next, after the electronic device receives the deletion operation inputted by the user, the cursor is located at the beginning of a line in the second speech text, and no character of the second speech text is present before the cursor. Therefore, the electronic device may determine that the deletion operation is not intended to delete characters preceding the cursor, but instead is intended to merge the second speech text into the first speech text. The electronic device may merge the second speech text into the first speech text in response to the deletion operation, thereby achieving the cross-line merging of speech texts, so that when an error occurs in speaker recognition, the user perceives an association between two adjacent speech texts, or the user intends to consolidate speech texts of the same speaker, the electronic device can merge speech texts accordingly, to provide the user with diverse services and meet use requirements of the user, thereby enhancing user experience.

The first operation may be a click operation at the position of the beginning of a line in the second speech text. For example, the user clicks the beginning of a line in the second speech text with a finger or mouse.

In a possible design embodiment, when the second recording card does not display a speaker label, it indicates that the electronic device is not in a speaker display mode, and the electronic device may update the second recording card to the fourth recording card, to achieve the cross-segment merging of speech texts. If the second recording card displays a speaker label, it indicates that the electronic device is in the speaker display mode, and speech texts in different speech information, i.e., speech texts in different segments, are separated by a speaker label. The electronic device adds the second speech text to a previous segment (or described as a previous line) of the second speech text in response to the deletion operation inputted by the user, that is to say, merges the second speech text into a line in which the speaker label corresponding to the second speech text is located. In this case, the second speech text cannot be merged into the first speech text, and as a result the cross-line merging of speech texts fails. Therefore, the electronic device needs to perform cross-line merging of speech texts when being not in a speaker state.

In a possible design embodiment, to achieve the cross-line merging of speech texts, when the electronic device displays a speaker label corresponding to the first speech text and the speaker label corresponding to the second speech text in the second recording card, it indicates that the electronic device is in the speaker display mode. The electronic device receives a second operation inputted by the user. The second operation can trigger the electronic device to stop displaying a speaker label.

The electronic device updates the second recording card to a fifth recording card in response to the second operation. The fifth recording card includes the first speech text and the second speech text and does not include the speaker label corresponding to the first speech text and the speaker label corresponding to the second speech text. That is to say, the electronic device stops displaying a speaker label on the second recording card, but displays only a speech text, thereby achieving the switching of the speaker display mode. Correspondingly, after receiving the deletion operation, the electronic device may update the fifth recording card to the fourth recording card in response to the deletion operation, that is to say, perform cross-line merging of speech texts.

Optionally, the second operation may be a click operation on a stop speaker display control.

In another possible design embodiment, to ensure the cross-line merging of speech texts, in the speaker display mode, when receiving the deletion operation, the electronic device may automatically switch to the speaker display mode, that is to say, automatically update the second recording card to the fifth recording card, so that the quick switching of the speaker display mode is achieved, and the cross-line merging of speech texts can be achieved.

In a possible design embodiment, the first speech information and the second speech information are arranged by a scrollable component (for example, a recycleview). The first speech information is carried by a first item in the scrollable component. The second speech information is carried by a second item in the scrollable component. The first item is different from the second item. A text component in the first item includes the first speech text, and a text component in the second item includes the second speech text.

In a possible design embodiment, the text component may be a textview. The first item includes at least two textviews. One textview in the two textviews is configured to carry a speaker label, and the other textview is configured to carry a speech text. The textview to which the speaker label belongs (or corresponds) is typically located above the textview to which the speech text belongs.

Correspondingly, a process of the text merging may include: The electronic device merges the second speech text in the text component in the second item into the text component in the first item, and deletes the second item.

In a possible design embodiment, the speaker label corresponding to the first speech text is different from the speaker label corresponding to the second speech text. When an error occurs in voiceprint recognition, the second speech text is actually speech content of a speaker corresponding to the first speech text, and speaker correction can be achieved by merging the second speech text into the first speech text, thereby ensuring text accuracy.

In a possible design embodiment, the second recording card may further include fourth speech information. The fourth speech information includes a fourth speech text. A speech time corresponding to the fourth speech information lies between the speech time corresponding to the first speech information and the speech time corresponding to the second speech information. The first speech text and the second speech text correspond to a first speaker label. A speaker label corresponding to the fourth speech text is different from the first speaker label.

To consolidate speech information of the same speaker, the electronic device may first extract speech information of the speaker, and then perform cross-line merging. Specifically, the electronic device may receive a third operation on the second recording card. The third operation is configured for triggering the electronic device to display speech information corresponding to the first speaker label in a plurality of pieces of speech information.

In response to the third operation, the electronic device displays a sixth recording card. The sixth recording card includes all speech information corresponding to the first speaker label, and does not include the fourth speech information. That is to say, the electronic device stops displaying speech information other than the speech information corresponding to the first speaker label on the second recording card, thereby achieving the filtering of speech information.

Correspondingly, after receiving the deletion operation, the electronic device may update the sixth recording card to the fourth recording card in response to the deletion operation, that is to say, perform cross-line merging of speech texts.

Optionally, the fourth operation may be a selection operation on an option corresponding to the first speaker label.

In a possible design embodiment, after consolidating a plurality of pieces of speech information of the same speaker, the electronic device may display speech information corresponding to all speaker labels again. Specifically, the electronic device receives a fourth operation on the fourth recording card. The fourth operation is configured for triggering the electronic device to display all speech information. The electronic device displays a seventh recording card in response to the fourth operation. The seventh recording card displays the speech information corresponding to all the speaker labels. For example, the seventh recording card includes the fourth speech information. The fourth speech information succeeds the third speech information, so that the second speech text is displayed above the fourth speech information.

In a possible design embodiment, the electronic device saves all currently displayed speech information based on a first target format in response to a fifth operation. The first target format represents a default file format or a selected file format; All the currently displayed speech information corresponds to the same speaker label, thereby achieving the targeted saving of speech information.

In a possible design embodiment, the electronic device shares all the currently displayed speech information to an application on the electronic device based on a second target format in response to a sixth operation. The second target format represents a default file format or a selected file format. All the currently displayed speech information corresponds to the same speaker label, thereby achieving the targeted sharing of speech information.

In a possible design embodiment, speech information obtained during recording is saved in a target data list file. When performing cross-text merging, the electronic device may merge the second speech text in the target data list file into the first speech text, and delete the second speech information. Specifically, the target data list file includes a plurality of records. Each record in the plurality of records corresponds to one piece of speech information. That is to say, content in speech information is stored through a record. Each record includes a speech text corresponding to a speech text field (or referred to as a column name). Correspondingly, after receiving the deletion operation inputted by the user, the electronic device may merge the second speech text corresponding to a speech text field in a second record in the target data list into the first speech text corresponding to a speech text field in a first record in response to the deletion operation. The first record corresponds to the first speech information, and the second record corresponds to the second speech information.

According to a third aspect, this application provides a voice processing method. An electronic device displays a first interface of a first note in a notes application. The first interface includes a first recording card. The first recording card includes a first control. The first control is configured to trigger recording stop.

When the electronic device displays the first interface of the first note in the notes application, the electronic device transcribes the obtained latest voice data into the corresponding latest speech information. The first interface includes a first recording card. The first recording card includes a first control. The first control is configured to trigger recording stop.

The electronic device displays the latest speech information in the first recording card.

The electronic device displays a second interface of the first note in response to a trigger operation on the first control. The second interface includes a second recording card. The second recording card includes first speech information, second speech information, and a second control. The first speech information includes a first speech text. The second speech information includes a second speech text. A speech time corresponding to the first speech information is earlier than a speech time corresponding to the second speech information. The first speech information and the second speech information are displayed adjacently. The second control is configured to trigger recording.

In response to a seventh operation (for example, clicking on the second speech text) on the second speech text, a merge control is displayed.

The electronic device updates the second recording card to a fourth recording card in response to a click operation on the merge control by a user. The second speech text and the first speech text are merged into third speech information and the second speech information is deleted in the fourth recording card. A speaker label corresponding to the third speech information is the same as a speaker label corresponding to the second speech text.

According to a fourth aspect, this application provides an electronic device. The electronic device includes a display, a memory, and one or more processors. The display and the memory are coupled to the processor. The display is configured to display an image generated by the processor. The memory is configured to store computer program code, and the computer program code includes computer instructions. When the processor executes the computer instructions, the electronic device is enabled to perform the voice processing method described above.

According to a fifth aspect, this application provides a computer-readable storage medium, including computer instructions. When the computer instructions are run on an electronic device, the electronic device is enabled to perform the voice processing method described above.

According to a sixth aspect, this application provides a computer program product. When the computer program product runs on an electronic device, the electronic device is enabled to perform the voice processing method described above.

It may be understood that for beneficial effects that can be achieved by the voice processing method described in the third aspect, the electronic device described in the fourth aspect, the computer-readable storage medium described in the fifth aspect, and the computer program product described in the sixth aspect provided above, refer to the beneficial effects in the first aspect, the second aspect, and any possible design manner of the first aspect and the second aspect. Details are not described herein again.

### BRIEF DESCRIPTION OF DRAWINGS

FIG. 1A is a schematic diagram 1 of an interface of a recording note according to an embodiment of this application;
FIG. 1B is a schematic diagram 2 of an interface of a recording note according to an embodiment of this application;
FIG. 1C is a schematic diagram 3 of an interface of a recording note according to an embodiment of this application;
FIG. 2A is a schematic diagram 1 of an interface of a recording application according to an embodiment of this application;
FIG. 2B is a schematic diagram 2 of an interface of a recording application according to an embodiment of this application;
FIG. 2C is a schematic diagram 3 of an interface of a recording application according to an embodiment of this application;
FIG. 2D is a schematic diagram 1 of an interface of a recording file according to an embodiment of this application;
FIG. 3A is a schematic diagram 1 of an interface of call recording according to an embodiment of this application;
FIG. 3B is a schematic diagram 2 of an interface of call recording according to an embodiment of this application;
FIG. 3C is a schematic diagram 2 of an interface of a recording file according to an embodiment of this application;
FIG. 4A is a schematic diagram 1 of a voice-to-text interface according to an embodiment of this application;
FIG. 4B is a schematic diagram 2 of a voice-to-text interface according to an embodiment of this application;
FIG. 4C is a schematic diagram 3 of a voice-to-text interface according to an embodiment of this application;
FIG. 5 is a schematic diagram of a hardware structure of an electronic device according to an embodiment of this application;
FIG. 6 is a schematic diagram of a software framework of an electronic device according to an embodiment of this application;
FIG. 7A and FIG. 7B are a schematic flowchart 1 of a voice processing method according to an embodiment of this application;
FIG. 8A is a schematic diagram 4 of a voice-to-text interface according to an embodiment of this application;
FIG. 8B is a schematic diagram 5 of a voice-to-text interface according to an embodiment of this application;
FIG. 8C is a schematic diagram 6 of a voice-to-text interface according to an embodiment of this application;
FIG. 8D is a schematic diagram 7 of a voice-to-text interface according to an embodiment of this application;
FIG. 8E is a schematic diagram 8 of a voice-to-text interface according to an embodiment of this application;
FIG. 8F is a schematic diagram 9 of a voice-to-text interface according to an embodiment of this application;
FIG. 9A is a schematic diagram 1 of a display interface of a notes application according to an embodiment of this application;
FIG. 9B is a schematic diagram 2 of a display interface of a notes application according to an embodiment of this application;
FIG. 10A is a schematic diagram 1 of an interface layout according to an embodiment of this application;
FIG. 10B is a schematic diagram 2 of an interface layout according to an embodiment of this application;
FIG. 10C is a schematic diagram 3 of an interface layout according to an embodiment of this application;
FIG. 11A is a schematic diagram 1 of editing according to an embodiment of this application;
FIG. 11B is a schematic diagram 2 of editing according to an embodiment of this application;
FIG. 12A, FIG. 12B, and FIG. 12C are a schematic diagram 1 of an editing process according to an embodiment of this application;
FIG. 13 is a schematic diagram 2 of an editing process according to an embodiment of this application;
FIG. 14 is a schematic diagram of synchronized playback according to an embodiment of this application;
FIG. 15A is a schematic diagram 3 of an editing process according to an embodiment of this application;
FIG. 15B is a schematic diagram 4 of an editing process according to an embodiment of this application;
FIG. 15C is a schematic diagram 5 of an editing process according to an embodiment of this application;
FIG. 15D is a schematic diagram 6 of an editing process according to an embodiment of this application;
FIG. 15E is a schematic diagram 7 of an editing process according to an embodiment of this application;
FIG. 15F is a schematic diagram 8 of an editing process according to an embodiment of this application;
FIG. 16A is a schematic diagram 1 of display of speech information according to an embodiment of this application;
FIG. 16B is a schematic diagram 2 of display of speech information according to an embodiment of this application;
FIG. 17A is a schematic diagram 1 of a long press according to an embodiment of this application;
FIG. 17B is a schematic diagram 2 of a long press according to an embodiment of this application;
FIG. 17C is a schematic diagram of selection according to an embodiment of this application;
FIG. 17D is a schematic diagram of a layout replacement according to an embodiment of this application;
FIG. 17E is a schematic diagram of display of function control according to an embodiment of this application;
FIG. 18A is a schematic diagram 1 of filtering according to an embodiment of this application;
FIG. 18B is a schematic diagram 2 of filtering according to an embodiment of this application;
FIG. 18C is a schematic diagram 3 of filtering according to an embodiment of this application;
FIG. 19A is a schematic diagram 1 of a text saving interface according to an embodiment of this application;
FIG. 19B is a schematic diagram 2 of a text saving interface according to an embodiment of this application;
FIG. 19C is a schematic diagram 3 of a text saving interface according to an embodiment of this application;
FIG. 19D is a schematic diagram 4 of a text saving interface according to an embodiment of this application;
FIG. 19E is a schematic diagram 1 of a text sharing interface according to an embodiment of this application;
FIG. 19F is a schematic diagram 2 of a text sharing interface according to an embodiment of this application;
FIG. 19G is a schematic diagram 3 of a text sharing interface according to an embodiment of this application;
FIG. 19H is a schematic diagram 5 of a text saving interface according to an embodiment of this application;
FIG. 20A, FIG. 20B, and FIG. 20C are a schematic flowchart 2 of a voice processing method according to an embodiment of this application;
FIG. 21 is a schematic diagram 1 of a voice processing process according to an embodiment of this application;
FIG. 22 is a schematic flowchart 3 of a voice processing method according to an embodiment of this application;
FIG. 23A is a schematic diagram 1 of a delete control according to an embodiment of this application;
FIG. 23B is a schematic diagram 2 of a delete control according to an embodiment of this application;
FIG. 23C is a schematic diagram 3 of a delete control according to an embodiment of this application;
FIG. 23D is a schematic diagram 1 of a text processing interface according to an embodiment of this application;
FIG. 24A and FIG. 24B are a schematic diagram 2 of a text processing interface according to an embodiment of this application;
FIG. 25A is a schematic diagram 3 of a text processing interface according to an embodiment of this application;
FIG. 25B is a schematic diagram 4 of a text processing interface according to an embodiment of this application;
FIG. 26 is a schematic diagram of a prompt interface according to an embodiment of this application;
FIG. 27 is a schematic diagram 5 of a text processing interface according to an embodiment of this application;
FIG. 28A is a schematic diagram 6 of a text processing interface according to an embodiment of this application;
FIG. 28B is a schematic diagram 7 of a text processing interface according to an embodiment of this application;
FIG. 28C is a schematic diagram 8 of a text processing interface according to an embodiment of this application;
FIG. 29A is a schematic diagram 9 of a text processing interface according to an embodiment of this application;
FIG. 29B is a schematic diagram 10 of a text processing interface according to an embodiment of this application;
FIG. 29C is a schematic diagram 11 of a text processing interface according to an embodiment of this application;
FIG. 30 is a schematic diagram 12 of a text processing interface according to an embodiment of this application;
FIG. 31A is a schematic diagram 13 of a text processing interface according to an embodiment of this application;
FIG. 31B is a schematic diagram 14 of a text processing interface according to an embodiment of this application;
FIG. 32A is a schematic diagram 6 of a text saving interface according to an embodiment of this application;
FIG. 32B is a schematic diagram 7 of a text saving interface according to an embodiment of this application;
FIG. 32C is a schematic diagram 8 of a text saving interface according to an embodiment of this application;
FIG. 32D is a schematic diagram 9 of a text saving interface according to an embodiment of this application;
FIG. 32E is a schematic diagram 4 of a text sharing interface according to an embodiment of this application;
FIG. 32F is a schematic diagram 5 of a text sharing interface according to an embodiment of this application;
FIG. 32G is a schematic diagram 6 of a text sharing interface according to an embodiment of this application;
FIG. 32H is a schematic diagram 10 of a text saving interface according to an embodiment of this application;
FIG. 33A, FIG. 33B, and FIG. 33C are a schematic flowchart 4 of a voice processing method according to an embodiment of this application;
FIG. 34 is a schematic diagram of data storage and display according to an embodiment of this application;
FIG. 35 is a schematic diagram of data storage according to an embodiment of this application; and
FIG. 36 is a schematic diagram 2 of a voice processing process according to an embodiment of this application.

### DESCRIPTION OF EMBODIMENTS

Hereinafter, the terms "first" and "second" are for descriptive purposes only and are not to be construed as indicating or implying their relative importance or implicitly specifying the number of indicated technical features. Therefore, a feature defined by "first" or "second" may explicitly or implicitly include one or more features. In descriptions of embodiments of this embodiment, unless otherwise stated, "a plurality of" means two or more.

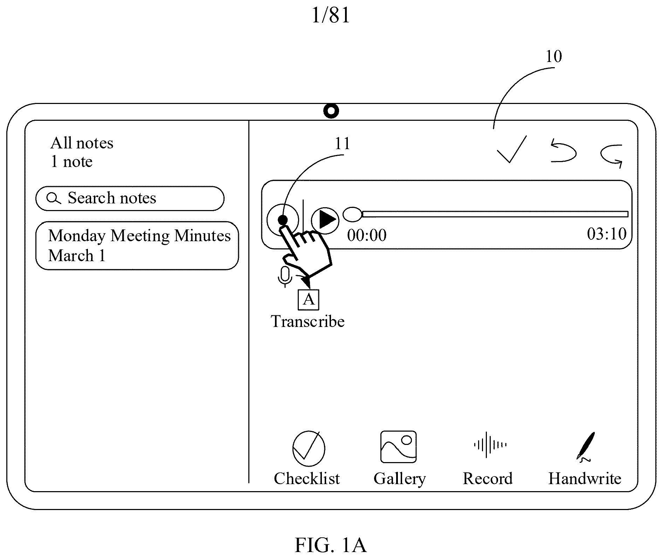

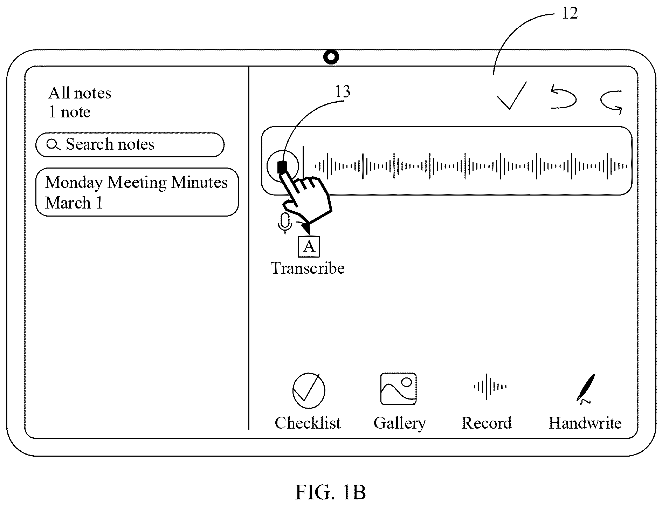

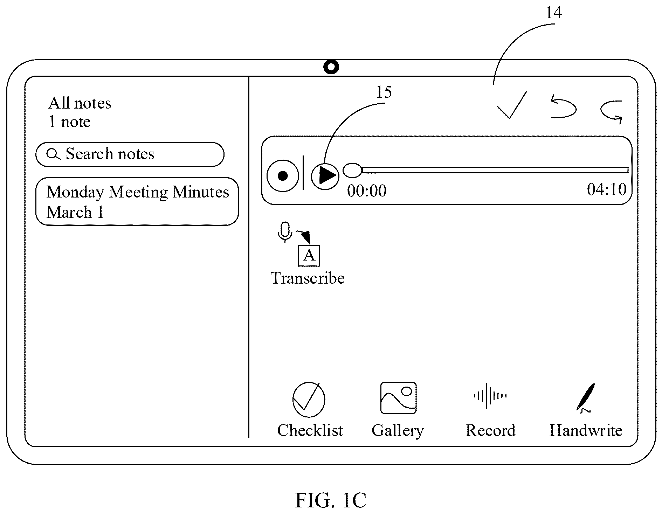

An electronic device (for example, a tablet computer) is typically provided with recording functionality. A user may perform recording by using the recording functionality of a tablet computer. For example, the tablet computer can support a recording note function. In a process of recording a note by using a notes application of the tablet computer, the user may add a recording to the note, that is to say, add a recording card. For example, the user clicks a start recording control 11 on a first note interface 10 shown in FIG. 1A. The tablet computer starts recording in response to the click operation on the start recording control 10 and displays a second note interface 12 shown in FIG. 1B. The tablet computer receives a click operation on a pause recording control (or referred to as a stop recording control) 13 on the second note interface 12. It indicates that the user intends to stop recording. The tablet computer may stop recording in response to the click operation on the pause recording control 13 and display a third note interface 14 shown in FIG. 1C. Compared with recording duration (i.e., 03:10) displayed on the first note interface 10, recording duration (i.e., 04:10) displayed on the third note interface 14 is longer. The third note interface 14 may further include a recording playback control 15 or other controls. The recording playback control 15 may be configured to trigger the tablet computer to play a recording.

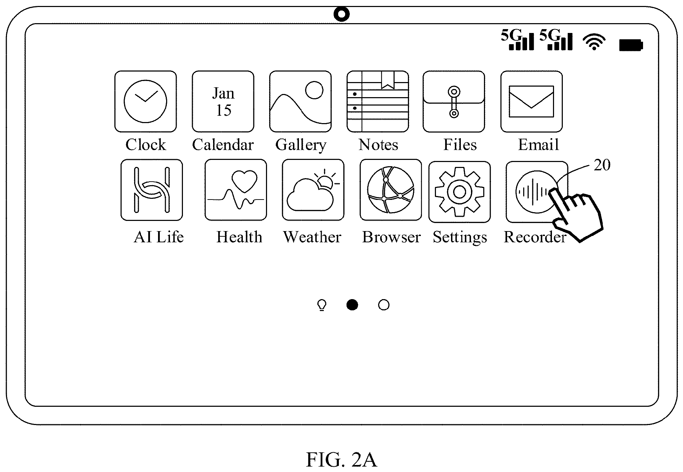

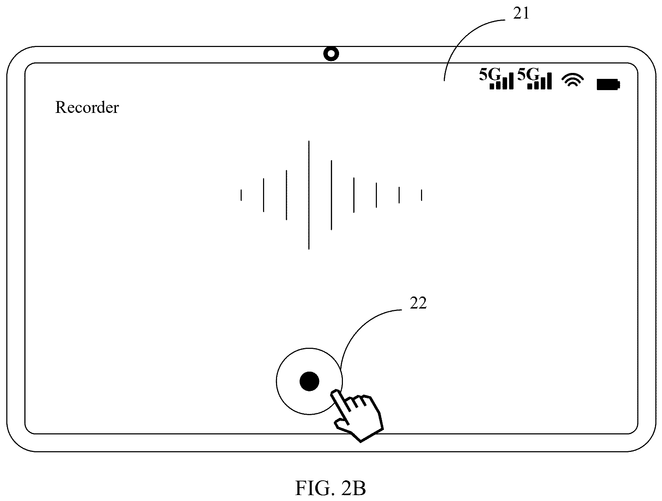

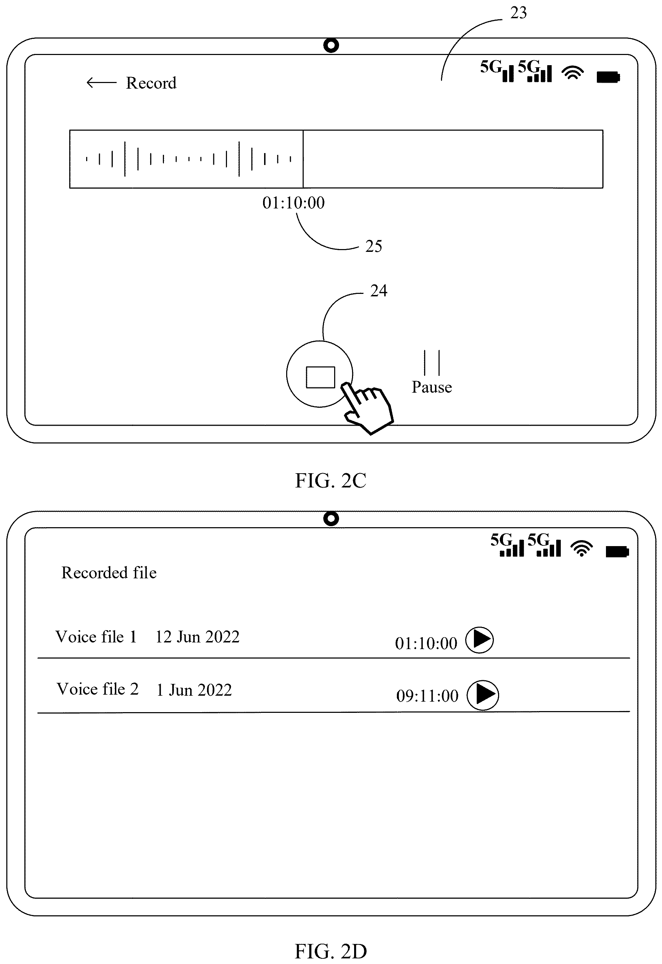

For another example, the tablet computer further includes a recording application for the user to perform recording by using the recording application. For example, the user clicks an icon 20 of the recording application shown in FIG. 2A. The tablet computer starts the recording application in response to a click operation on the icon 20 of the recording application, and displays an interface 21 shown in FIG. 2B. The recording interface includes a start recording control 22. The start recording control 22 may be configured to trigger the tablet computer to start recording. Next, when the user intends to perform recording, the user may click the start recording control 22. The tablet computer may start recording in response to the click operation on the start recording control 22, and display an interface 23 shown in FIG. 2C. The interface 23 includes a stop recording control 24 and recording duration prompt information 25. The stop recording control 24 may be configured to trigger the tablet computer to stop recording. The recording duration prompt information represents duration for which the recording has been performed. Next, when the user intends to stop recording, the user may click the stop recording control 24. The tablet computer may stop recording in response to a click operation on the stop recording control 24, and generate a corresponding voice file (a voice file 1 shown in FIG. 2D).

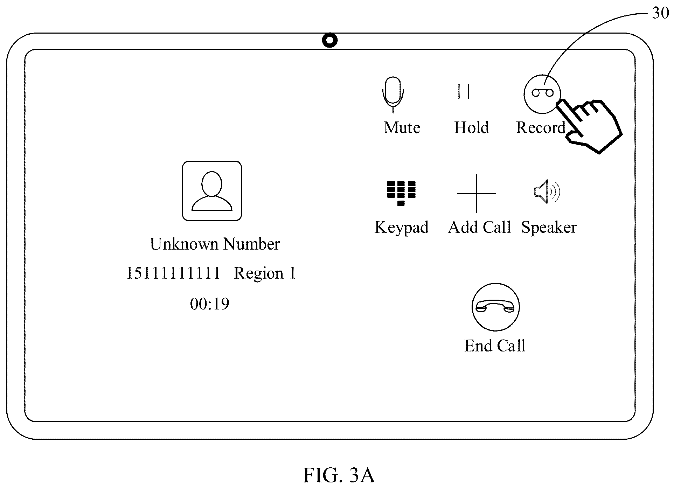

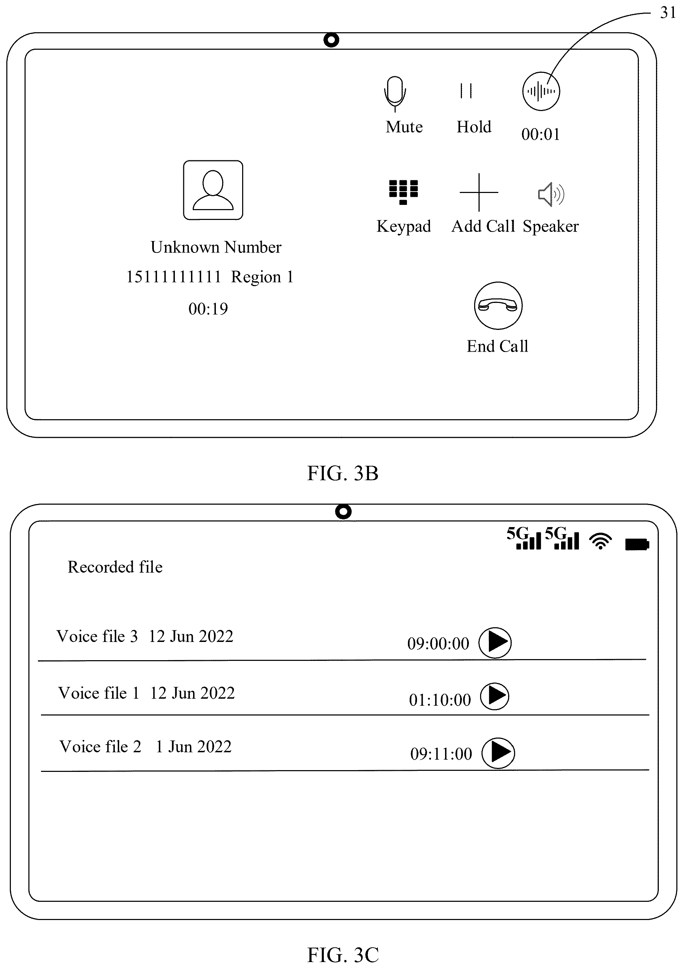

For another example, in a call process, the tablet computer supports a call recording function. That is to say, the user may record call content by using the recording functionality provided by the tablet computer. The user may click a start recording control 30 shown in FIG. 3A. The tablet computer may start recording in response to the click operation on the start recording control 30 and display a stop recording control 31 shown in FIG. 3B. When the user intends to stop recording call content, the user may click the stop recording control 31. The tablet computer may stop recording in response to the click operation on the stop recording control 31, and generate a corresponding voice file (a voice file 3 shown in FIG. 3C). Alternatively, when the call ends, the tablet computer may automatically end recording, and generate a corresponding recording file without manual stop of recording by the user.

It needs to be noted that the start recording control 11 and the pause recording control 13 may be different controls or may be the same control. Specifically, when the tablet computer is recording, the control is in a recording-enabled state, and the control may be used as the pause recording control 13. After receiving the click operation on the pause recording control 13 by the user, the tablet computer may stop recording, the control is in a recording stop state, and the control may be used as the start recording control 11. Similarly, the start recording control 22 and the stop recording control 24 may be different controls or may be the same control. The start recording control 30 and the stop recording control 31 may be different controls or may be the same control. This is not limited in this application.

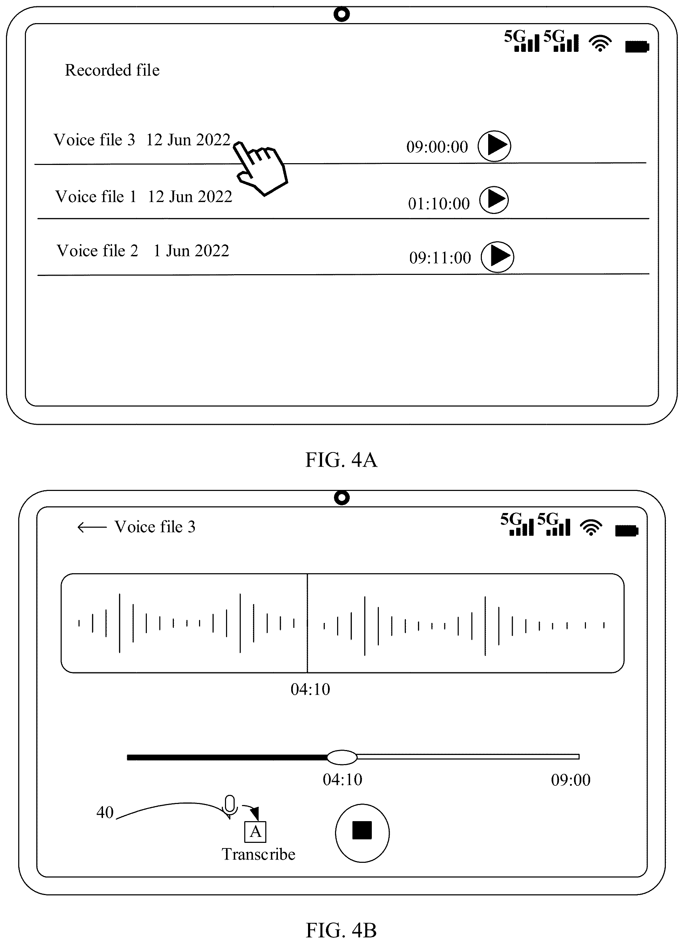

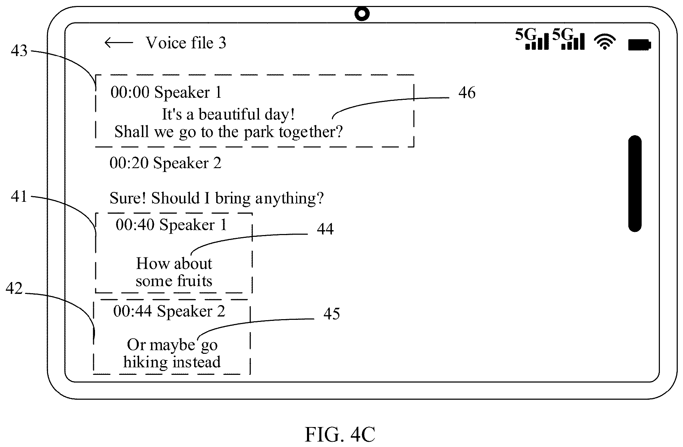

In some embodiments, the electronic device further supports a voice file transcription service. For example, the user clicks a voice file 3 shown in FIG. 4A. The electronic device starts playing the voice file 3, and displays an interface shown in FIG. 4B. The interface provides a transcription control 40. The transcription control 40 is configured to trigger the electronic device to transcribe a voice file (or referred to as a recording file) into a text. After receiving a trigger operation (for example, a click operation) on the transcription control 40, the electronic device may transcribe the voice file 3 into a text. Next, after transcription succeeds, the electronic device may display an interface shown in FIG. 4C. The interface displays speaker labels (for example, a speaker 1 and a speaker 2) and speech information such as a speech text and a speech time corresponding to each of the speaker labels. The speech text represents speech content of a speaker, and is obtained by transcribing a voice file (content such as "It's a beautiful day! Shall we go to the park together?" shown in FIG. 4C). The speech time corresponding to the speech text represents a speech time (00:00, 00:20, or the like shown in FIG. 4C) of the speech content.

However, the user may further have other use requirements, for example, cross-line (or referred to as cross-segment) selection of speech information. For example, the user intends to simultaneously process a plurality of consecutive pieces of speech information. For example, the user intends to simultaneously copy or share the content of speech information 41 and speech information 42 shown in FIG. 4C. In this case, the user needs to first simultaneously select the speech information 41 and the speech information 42 for the tablet computer to perform a copying or sharing operation on the selected speech information 41 and speech information 42. For another example, the user intends to process different types of information located in different segments in one piece of speech information, for example, intends to copy, share, or search speaker labels and speech texts in speech information 43 shown in FIG. 4C. In this case, the speaker labels and the speech texts in the speech information 43 need to be simultaneously selected first for the tablet computer to perform copying, sharing, searching, among other operations on the selected speaker labels and speech texts in the speech information 43. Alternatively, however, the user may further have other use requirement, for example, a requirement of editing speech texts in a cross-line (or referred to as cross-segment) manner, that is, merging a next speech text into a previous speech text. For example, a transcription service has a probability of a conversion error (for example, an error in voiceprint recognition). For example, speech content of one speaker is recognized as speech content of another person. For example, a speech text 44 of a speaker 1 in FIG. 4C is actually speech content of a speaker 2. To improve text accuracy, the user intends to merge the speech text 44 of the speaker 1 into a previous speech text, that is, change the speech text 44 of the speaker 1 into the speech content of the speaker 2. For another example, the user perceives an association between two adjacent speech texts of the speaker 1 and intends to merge the two adjacent speech texts into one speech text. For example, the user intends to merge a speech text 45 of the speaker 1 into a speech text 46 of the speaker 1. For another example, the user intends to consolidate speech texts of one speaker, and then display speech content of other speakers. For example, the user intends to consolidate the speech text 44 of the speaker 1 and the speech text 46 of the speaker 1 in FIG. 4C, and then display speech information of the speaker 2.

Therefore, to meet more use requirements of a user, an electronic device provides a voice processing method. During recording, after receiving the latest voice data, the electronic device performs transcription and displays the latest speech information corresponding to the latest voice data. The electronic device further displays historical speech information. The historical speech information is speech information corresponding to voice data that has been received from the beginning of current recording to the point before the latest voice data is received. That is to say, during recording, the electronic device displays speech information corresponding to all recorded voice data. After receiving a long-press operation inputted by the user, the electronic device obtains a start position (for example, a position at which the user's finger touches down) and an end position (for example, a position at which the user's finger lifts off) corresponding to the long-press operation. Next, the electronic device concatenates all displayed speech information to obtain a concatenated character string. Next, the electronic device determines a target character range based on the start position and the end position corresponding to the long-press operation in combination with the concatenated character string. The target character range represents selected characters corresponding to the long-press operation.

Next, the electronic device displays the concatenated character string in plain text format, and sets a selection state for characters in the target character range. Because the concatenated character string, i.e., concatenated speech information, is plain text, the electronic device can simultaneously select speech information located in different segments, for example, simultaneously select information in a plurality of consecutive pieces of speech information, or simultaneously select different types of information located in different segments in one piece of speech information, thereby achieving the cross-segment selection of speech information.

Next, the electronic device may display function controls to enable the user to select a function control according to a use requirement, and the electronic device performs corresponding processing, for example, sharing, searching, copying, among other operations, based on the function control selected by the user, to provide the user with diverse services and meeting the use requirement of the user, thereby enhancing user experience.

Alternatively,
after transcribing received voice data in real time, the electronic device displays speech information obtained through transcription. When the user intends to merge a speech text (i.e., a speech text 1) in speech information into a speech text (i.e., a speech text 2) in previous speech information displayed adjacently to the speech information, the user may perform a first operation on the speech text 1. The electronic device displays a cursor at the beginning of a line of a speech text 1 in response to the first operation. Next, when receiving a deletion operation on the speech text 1, it indicates that the electronic device needs to perform cross-segment editing, that is to say, needs to merge the speech text 1 into a previous speech text (i.e., a speech text 2) of the speech text 1. The electronic device may add the speech text 1 to a speech text 2 to obtain an updated speech text 2 and delete the speech text 1, so that the electronic device can display the updated speech text 2 and does not display the speech text 1, thereby achieving the cross-line merging of speech texts, so that when an error occurs in speaker recognition, the user perceives an association between two adjacent speech texts, or the user intends to consolidate speech texts of the same speaker, the electronic device can merge speech texts accordingly, to provide the user with diverse services and meet use requirements of the user, thereby enhancing user experience.

For example, the electronic device in embodiments of this application may be an electronic device having recording functionality such as a mobile phone, a tablet computer, a desktop computer, a laptop computer, a handheld computer, a notebook computer, an ultra-mobile personal computer (ultra-mobile personal computer, UMPC), a netbook, a personal digital assistant (personal digital assistant, PDA), or an augmented reality (augmented reality, AR)/virtual reality (virtual reality, VR) device. A specific form of the electronic device is not specifically limited in embodiments of this application.

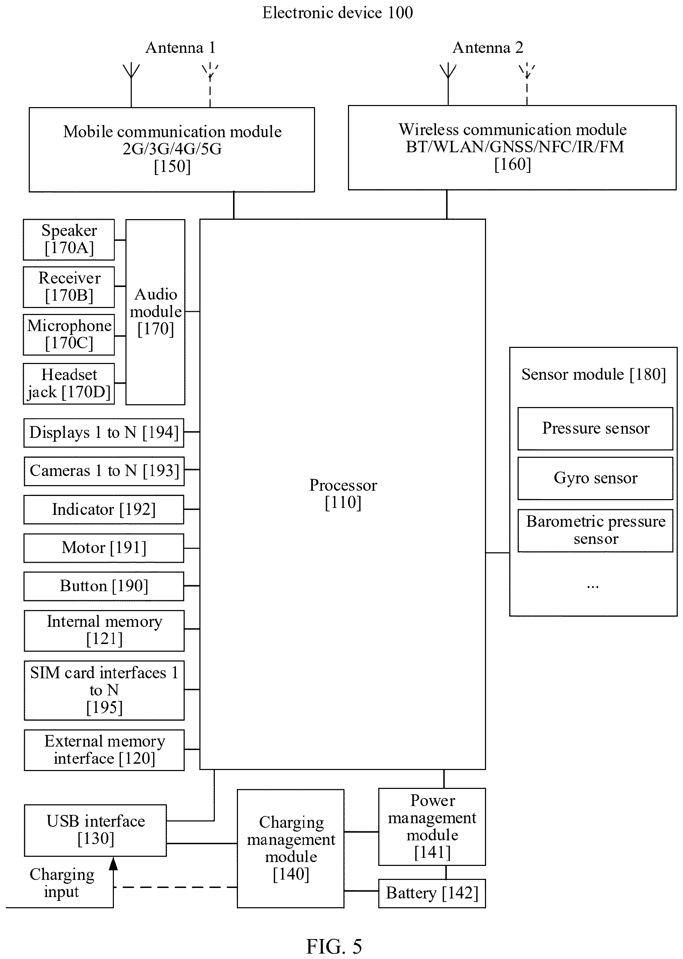

FIG. 5 is a diagram of a structure of an electronic device 100. The electronic device 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identity module (subscriber identification module, SIM) card interface 195, and the like.

It can be understood that the structure illustrated in an embodiment of the disclosure does not constitute a specific limitation on the electronic device 100. In some other embodiments of this application, the electronic device 100 may include more or fewer components than those shown in the figure, some components may be combined, or some components may be divided, or different component arrangements may be used. The components in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, and/or a neural-network processing unit (neural-network processing unit, NPU). Different processing units may be independent devices, or may be integrated into one or more processors.

The controller may be a nerve center and a command center of the electronic device 100. The controller may generate an operation control signal according to instruction operation code and a timing signal, and control obtaining and executing of instructions.

A storage may be further disposed in the processor 110 to store instructions and data. In some embodiments, the memory in processor 110 is a cache. The storage may store instructions or data recently used or cyclically used by the processor 110. If the processor 110 needs to use the instructions or the data again, the processor 110 may directly invoke the instructions or the data from the memory. Repeated access is avoided, and waiting time of the processor 110 is reduced, thereby improving the system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) port, and/or the like.

It may be understood that an interface connection relationship between modules illustrated in this embodiment of the present invention is merely an example for description, and does not constitute a limitation on the structure of the electronic device 100. In some other embodiments of this application, the electronic device 100 may use an interface connection manner different from that in the above embodiments, or use combinations of a plurality of interface connection manners.

The charge management module 140 is configured to receive charging input from a charger. When charging the battery 142, the charging management module 140 may further supply power to the electronic device through the power management module 141.

A wireless communication function of the electronic device 100 may be implemented by the antenna 1, the antenna 2, the mobile communication module 150, the wireless communication module 160, the modem, the baseband processor, etc.

The antenna 1 and the antenna 2 are configured to transmit and receive electromagnetic wave signals. Each antenna in the electronic device 100 may be configured to cover one or more communication frequency bands. Different antennas may be further multiplexed to improve antenna utilization. For example, the antenna 1 may be multiplexed into a diversity antenna of a wireless local area network. In some other embodiments, the antenna may be used together with a tuning switch.

The mobile communication module 150 may provide a solution for wireless communication that is applied to the electronic device 100 and that includes 2G/3G/4G/5G and the like. The mobile communication module 150 may include at least one filter, switch, power amplifier, low noise amplifier (LNA), etc. The mobile communication module 150 may receive an electromagnetic wave by using the antenna 1, perform processing such as filtering or amplification on the received electromagnetic wave, and transmit a processed electromagnetic wave to the modem processor for demodulation. The mobile communication module 150 may further amplify a signal obtained after modulation by the modem processor, and convert an amplified signal into an electromagnetic wave for radiation through the antenna 1. In some embodiments, at least some function modules of the mobile communication module 150 may be arranged in the processor 110. In some embodiments, at least some of the functional modules of the mobile communication module 150 may be disposed in a same device as at least some of the modules of the processor 110.

The modem processor may include a modulator and a demodulator. The modulator is configured to modulate a to-be-sent low frequency baseband signal into a medium or high frequency signal. The demodulator is configured to demodulate a received electromagnetic wave signal into a low frequency baseband signal. Then, the demodulator transfers, to the baseband processor for processing, the low frequency baseband signal obtained through demodulation. The low frequency baseband signal is processed by the baseband processor and then transferred to the application processor. The application processor outputs a sound signal by using an audio device (which is not limited to the speaker 170A, the receiver 170B, or the like), or displays an image or a video by using the display 194. In some embodiments, the modem processor may be a separate device. In some other embodiments, the modem processor may be independent of the processor 110 and may be disposed in a same device as the mobile communication module 150 or another functional module.

The wireless communication module 160 may provide a solution to wireless communication applied to the electronic device 100 and including wireless local area networks (WLAN) (such as wireless fidelity (Wi-Fi)), Bluetooth (BT), a global navigation satellite system (GNSS), frequency modulation (FM), near field communication (NFC), and an infrared (IR) technology. The wireless communication module 160 may be one or more devices into that integrate at least one communication processing module. The wireless communication module 160 receives an electromagnetic wave through the antenna 2, conducts frequency modulation and filtering on an electromagnetic wave signal, and transmits the processed signal to the processor 110. The wireless communication module 160 may further receive a to-be-transmitted signal from the processor 110, conduct frequency modulation and amplification on the to-be-transmitted signal, and convert an amplified signal into an electromagnetic wave for radiation through the antenna 2.

In some embodiments, in the electronic device 100, the antenna 1 is coupled to the mobile communication module 150, and the antenna 2 is coupled to the wireless communication module 160, so that the electronic device 100 can communicate with a network and another device through a wireless communication technology.

The electronic device 100 may implement a display function through the GPU, the display screen 194, the application processor, and the like. The GPU is a microprocessor for image processing and connects the display screen 194 and the application processor. The GPU is configured to perform mathematical and geometric computing for graphics rendering. The processor 110 may include one or more GPUs that perform program instructions to generate or change display information.

The display screen 194 is configured to display an image, a video, or the like. The display screen 194 may include a display panel. The display panel may use a liquid crystal display (liquid crystal display, LCD), an organic light-emitting diode (organic light-emitting diode, OLED), an active-matrix organic light emitting diode (active-matrix organic light emitting diode, AMOLED), a flex light-emitting diode (flex light-emitting diode, FLED), a mini-LED, a micro-LED, a micro-OLED, a quantum dot light emitting diode (quantum dot light emitting diode, QLED), or the like. In some embodiments, the electronic device 100 may include 1 or N displays 194, where N is a positive integer greater than 1.

The electronic device 100 may implement a photographing function by using the ISP, the camera 193, the video encoder and decoder, the GPU, the display 194, the application processor, and the like.

The ISP is used to process data fed back by the camera 193.

The camera 193 is configured to capture a still image or video. In some embodiments, the electronic device 100 may include 1 or N camera 193, where N is a positive integer greater than 1.

The digital signal processor is configured to process a digital signal, and may process another digital signal in addition to a digital image signal. For example, when the electronic device 100 selects a frequency, the digital signal processor is configured to perform Fourier transform, and the like on frequency energy.

The video encoder and decoder is configured to compress or decompress a digital video. The electronic device 100 can support one or more types of video encoders and decoders. In this way, the electronic device 100 may play or record videos in a plurality of encoding formats, for example, moving picture experts group (moving picture experts group, MPEG) 1, MPEG 2, MPEG 3, and MPEG 4.

The NPU is a neural-network (neural-network, NN) computing processor, quickly processes input information by referring to a structure of a biological neural network, for example, a transmission mode between neurons in a human brain, and may further continuously perform self-learning.

The external storage interface 120 may be configured to connect to an external storage card, for example, a Micro SD card, to expand a storage capability of the electronic device 100.

The internal memory 121 may be configured to store a computer-executable program code, and the computer-executable program code includes instructions. The processor 110 executes various function applications and data processing of the electronic device 100 by running the instructions stored in the internal memory 121. The internal storage 121 may include a program storage area and a data storage area. The program storage area may store an operating system, an application required by at least one function (for example, a sound playback function or an image playback function), and the like. The data storage area may store data (for example, audio data and a phone book) and the like created during use of the electronic device 100. In addition, the internal memory 121 may include a high-speed random access memory, and may also include a non-volatile memory, for example, at least one magnetic disk storage device, flash storage device, universal flash storage (universal flash storage, UFS) or the like.

The electronic device 100 may use the audio module 170, the speaker 170A, the telephone receiver 170B, the microphone 170C, the headset jack 170D, the application processor, and the like, to implement an audio function, For example, music playback or audio recording is implemented.

The audio module 170 is configured to convert digital audio information into analog audio signal for output, and is also configured to convert analog audio input into a digital audio signal. The audio module 170 may be further configured to encode and decode the audio signal. In some embodiments, the audio module 170 may be arranged in the processor 110, or some functional modules of the audio module 170 are arranged in the processor 110.

The speaker 170A, also referred to as a "horn", is configured to convert an electrical audio signal into a sound signal. The electronic device 100 may be used to listen to music or listen to a hands-free call through the speaker 170A.

The telephone receiver 170B, also referred to as a "handset", is configured to convert an audio electrical signal into a sound signal. When the electronic device 100 answers a telephone call or a voice message, the receiver 170B may be placed near a person's ear to answer the voice.

The microphone 170C, also referred to as a "mike" or a "mic", is configured to convert a sound signal into an electrical signal. When making a call or sending a voice message, a user may make a sound near the microphone 170C through the mouth of the user, to input a sound signal to the microphone 170C. At least one microphone 170C may be disposed in the electronic device 100. In some other embodiments, two microphones 170C may be disposed in the electronic device 100, to capture a sound signal and implement a noise reduction function. In some other embodiments, three, four, or more microphones 170C may alternatively be disposed in the electronic device 100, to capture a sound signal, implement noise reduction, recognize a sound source, implement a directional recording function, and the like.

The headset jack 170D is configured to be connected to a wired headset. The headset jack 170D may be the USB interface 130, or may be a 3.5 mm open mobile terminal platform (open mobile terminal platform, OMTP) standard interface or a cellular telecommunications industry association of the USA (cellular telecommunications industry association of the USA, CTIA) standard interface.

The sensor module 180 may include a pressure sensor, a gyroscope sensor, a barometric pressure sensor, a magnetic sensor, an acceleration sensor, a distance sensor, an optical proximity sensor, a fingerprint sensor, a temperature sensor, a touch sensor, an ambient light sensor, a bone conduction sensor, and the like.

The button 190 includes a power button, a volume button, or the like. The key 190 may be a mechanical key, or may be a touch key. The electronic device 100 may receive button input, and generate button signal input related to user settings and function control of the electronic device 100.

The motor 191 may generate a vibrating alert. The indicator 192 may be an indicator light, and may be configured to indicate a charging status or a battery level change, or may be configured to indicate a message, a missed call, a notification, and the like.

The SIM card interface 195 is configured to connect to an SIM card.

A software system of the electronic device 200 may use a layered architecture, an event-driven architecture, a microkernel architecture, a microservice architecture, or a cloud architecture. In embodiments of this application, an Android^{™} system with a layered architecture is used as an example to describe a software structure of the electronic device 200.

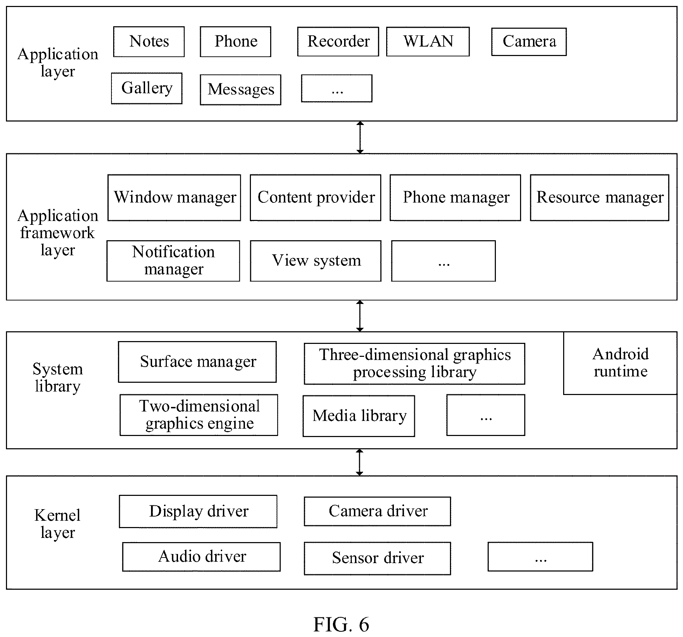

FIG. 6 is a block diagram of the software structure of the electronic device 100 according to an embodiment of the present invention.

In the layered architecture, software is divided into several layers, and each layer has a clear role and task. Layers communicate with each other through a software interface. In some embodiments, the Android system is divided into four layers from top to bottom: an application layer, an application framework layer, an Android runtime (Android runtime) and system library, and a kernel layer.

The application layer may include a series of application packages.

As shown in FIG. 6, the application packages may include applications such as camera, notes, call, recorder, WLAN, messages, gallery, and the like.

The notes application may provide a user-operable interface. A toolbar control panel, a scrollable component (for example, a recycleview), and text components (for example, a textview, and an EditTextView) may be presented on the interface. The toolbar control panel may provide user-operable controls. A user may trigger the electronic device to perform a related operation by triggering a related control. The text components may be arranged on the scrollable component. The text components may be configured to display speech information. Each item (item) in the scrollable component carries one piece of speech information. Each item may include a text component to carry information in speech information corresponding to the item.

For example, the notes application may include a note recording module, a note speaker display module, a note data management module, and a transcription engine.

The transcription engine is configured to send recorded voice data or a voice text to a cloud to transcribe the voice data or process the voice text by using the cloud.

The note recording module is configured to obtain the recorded voice data.

The note speaker display module is configured to display an interface, for example, a recording card, of the notes application. The recording card may include the toolbar control panel, the scrollable component, and the text components. The toolbar control panel may be tool controls in the recording card. The toolbar control panel is configured to trigger a tablet computer to perform corresponding operations, for example, recording, recording stop, transcription, switching of a speaker display mode, exporting, sharing, speaker filtering, among other operations. The recording card may further include speech information and the like.

The note data management module is configured to store the speech information at a preset storage position.

It should be understood that the note recording module, the note speaker display module, the note data management module, and the transcription engine may be internal implementations belonging to the notes application. The transcription engine is a software development kit (software development kit, SDK).

The application (for example, a notes, call, or recorder application) may perform operations, for example, Create, Retrieve, Update, Delete, among other operations, on data in a database by using a data management module (DataManager). That is to say, the data management module may be configured to manage data (for example, a storage path of a voice file or a data list file corresponding to the voice file) in the database.

The application may display backend data on front-end controls by using a data adapter (Adapter). That is to say, the data adapter is an adapter interface connecting backend data and front-end display, establishes adaptation relationship between a data source and a recycleview, and converts the data source into a data format that can be displayed by the recycleview.

It should be understood that the data management module and the data adapter may be internal implementations belonging to the applications.

The application framework layer provides an application programming interface (application programming interface, API) and a programming framework for an application at the application layer. The application framework layer includes some predefined functions.

Referring to FIG. 6, the application framework layer may include a window manager, a content provider, a view system, a phone manager, a resource manager, a notification manager, and the like.

The window manager is configured to manage a window application. The window manager may obtain a size of a display, determine whether a status bar exists, lock a screen, take a screenshot, and so on.

The content provider is configured to store and obtain data, and enable the data to be accessible to an application. The data may include a video, an image, audio, calls that are made and answered, a browsing history and a bookmark, a phone book, and the like.

The view system includes visual controls such as a text display control and a picture display control. The view system may be configured to construct an application. A display interface may be composed of one or more views. For example, a display interface including an SMS message notification icon may include a view for displaying text and a view for displaying a picture.

The phone manager is configured to provide the electronic device 100 with a communication function, for example, call status management (including connecting, hanging-up, and the like).

The resource manager provides various resources for an application, such as a localized string, an icon, a picture, a layout file, and a video file.

The notification manager enables an application to display notification information in a status bar, may be configured to convey a notification-type message, and may automatically disappear after a short stay without user interaction. For example, the notification manager is configured to provide a notification of download completion, a message notification, and the like. The notification manager may alternatively be a notification that appears in a top status bar of a system in a form of a graph or scroll bar text, for example, a notification of an application running in the background, or a notification that appears on a screen in a form of a dialog window. For example, text information appears in the state bar for prompt, a prompt tone is made, the electronic device vibrates, or an indicator light flashes.

The Android Runtime includes a kernel library and a virtual machine. The Android runtime is responsible for scheduling and managing the Android system.

The kernel library includes two parts: one part is a performance function that a java language needs to invoke, and the other part is a kernel library of android.

The application layer and the application framework layer run in the virtual machine. The virtual machine executes java files at the application layer and the application framework layer as binary files. The virtual machine is used to execute functions such as object lifecycle management, stack management, thread management, security and exception management, and garbage collection.

The system library may include a plurality of functional modules for example, a surface manager (surface manager), a media library (Media Libraries), a three-dimensional graphics processing library (for example, OpenGL ES), and a 2D graphics engine (for example, an SGL).

The surface manager is configured to manage a display subsystem, and provide 2D and 3D layer fusion for a plurality of applications.

The media library supports playback and recording in a plurality of common audio and video formats, a still image file, and the like. The media library may support a plurality of audio and video encoding formats, for example, MPEG4, H.264, MP3, AAC, AMR, JPG, and PNG.

The three-dimensional graphics processing library is configured to implement three-dimensional graphics drawing, image rendering and composition, layer processing, and the like.

The 2D graphics engine is a drawing engine for 2D graphics drawing.

The kernel layer is a layer between hardware and software. The kernel layer includes at least a display drive, a camera drive, an audio drive, and a sensor drive.

It can be understood that the layers in the structure shown in FIG. 6 and the components included in the layers do not constitute a specific limitation on the electronic device 100. In some other embodiments of this application, the structure may include more or fewer layers than those shown in the figure, and each layer may include more or fewer components. This is not limited in this application.

This application provides a voice processing method. After starting recording, an electronic device may transcribe voice data into a text in real time. After receiving a click operation on speech information inputted by a user, the electronic device may determine a use intention of the user based on a click position corresponding to the click operation and whether the electronic device is playing a recording, to enter an edit mode according to the use intention of the user to meeting an editing requirement for the speech information of the user, or synchronously play a recording to achieve the precise playback of the recording. After receiving a long-press operation on different types of speech information located in different lines inputted by the user, all speech information displayed on an interface is displayed in plain text format, and a selection state is set for characters selected by the user in the speech information displayed in plain text format, to meet a use requirement of cross-segment selection of speech information by the user, so that the electronic device can process simultaneously selected speech information in different lines, thereby providing diverse text services. The voice data may be a recording in a recording note scenario, a recording in a recording application scenario, a recording (or referred to as a voice file) in a call recording scenario, or the like described above. Certainly, the voice data may be recording data generated in another scenario.

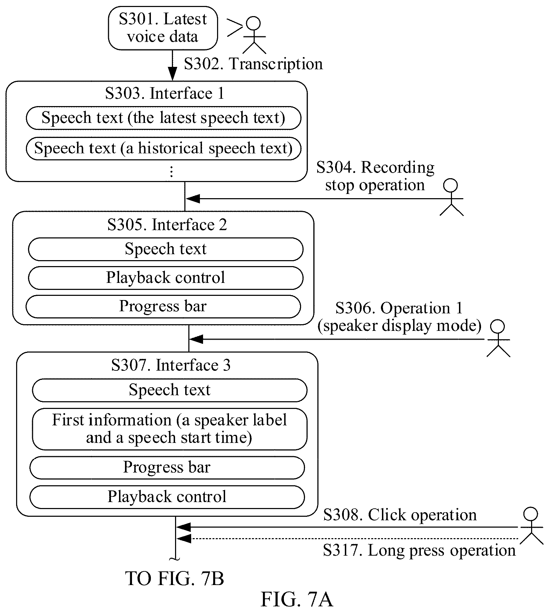

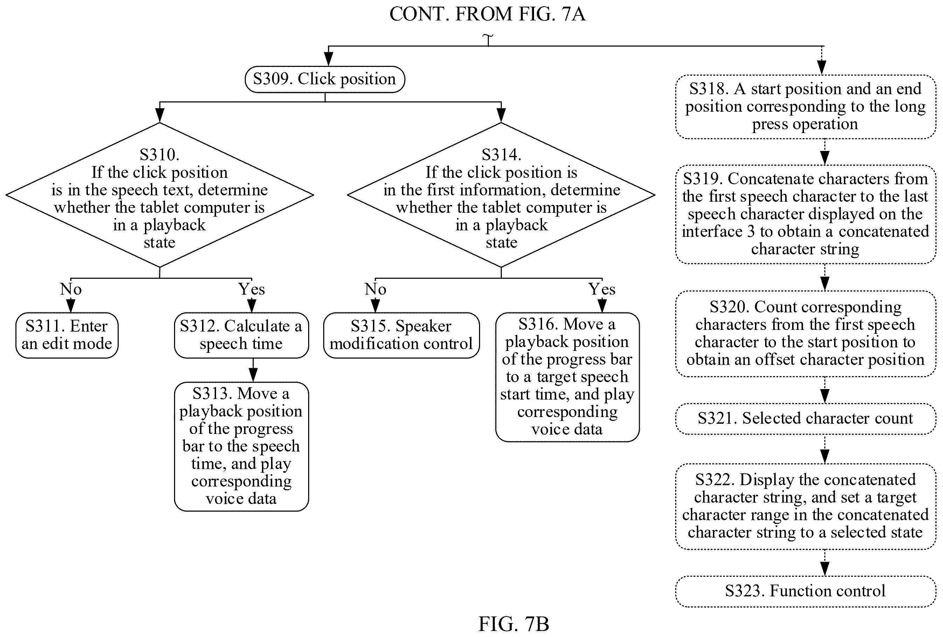

The following uses an example in which the electronic device is a tablet computer and the application scenario is a recording note scenario, i.e., a notes application, and describes, with reference to the accompanying drawings, in detail a voice processing method provided in embodiments of this application. As shown in FIG. 7A and FIG. 7B, the method may include steps S301 to S323.

S301. In a recording process, the tablet computer receives the latest voice data.

S302. The tablet computer transcribes the latest voice data to obtain the latest speech information.

The latest speech information includes the latest speaker label, the latest speech text corresponding to the latest speaker label, the latest speech start time, and the latest speech start time. The latest speech text includes at least one character. The character may be a text, a punctuation mark, a letter, or the like. The latest speech start time represents a time at which a speaker starts speaking. For example, one piece of speech information includes: "speaker 1", "00:40", and "How about some fruit?". "Speaker 1" is a speaker label, "00:40" is a speech start time (or referred to as a speech time), and "How about some fruit" is a speech text. Correspondingly, the speech information represents that the speaker speaks at 00:40, and speech content is "How about some fruit".

In the embodiments of this application, the transcription may include voice recognition and voiceprint recognition. In a process of editing a note (for example, a first note), the tablet computer may perform recording according to a use requirement of a user. During the recording, the tablet computer receives voice data (for example, the latest voice data) of a speaker, performs voice recognition on the latest voice data to transcribe voice into a text to obtain the latest speech text. In addition, to better facilitate visual access of the user to speech of different speakers, the tablet computer may perform voiceprint recognition on the voice data to discern the speech of the different speakers, thereby obtaining the latest speaker label corresponding to the latest speech text. Certainly, the tablet computer may alternatively request a server to perform voice recognition and voiceprint recognition on the voice data. This is not limited in any manner in the embodiments of this application.

In some embodiments, after obtaining speech information, the tablet computer may save the speech information at a preset storage position (for example, a database (database, DB) or another position at which data can be stored). For example, a storage format of one piece of speech information may be shown in Table 1. Offset represents a speech start time, Content represents a speech text, Speaker represents a speaker label, and Duration represents duration.

**Table 1**

| Column name | Type | Chinese description | Data description |
|---|---|---|---|
| Uuid | TEXT | id value of speech information | Key value, a unique id |
| Offset | TEXT | Time offset, i.e., a speech start time | |
| Content | TEXT | Speech text | |
| Speaker | TEXT | Speaker label, for example, a speaker name | |
| Duration | TEXT | Duration | |

The duration represents a period of time for which a speaker corresponding to a speaker label speaks continuously. The transcription content may also be referred to as a speech text.

In some embodiments, the information included in the latest speech information described above only is an example. Content included in the latest speech information may be set according to an actual requirement. For example, the latest speech information may include the speaker label and the speech text but does not include the speech start time and the duration.

S303. The tablet computer displays the latest speech text on an interface 1. The interface 1 further displays a historical speech text.

The historical speech text is obtained based on voice data received before the latest voice data.

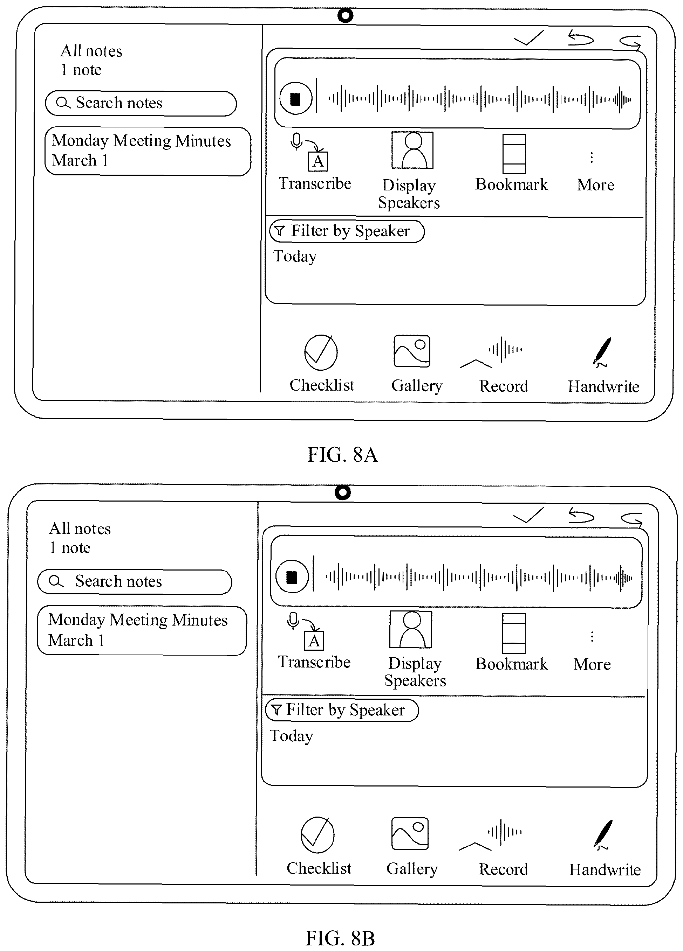

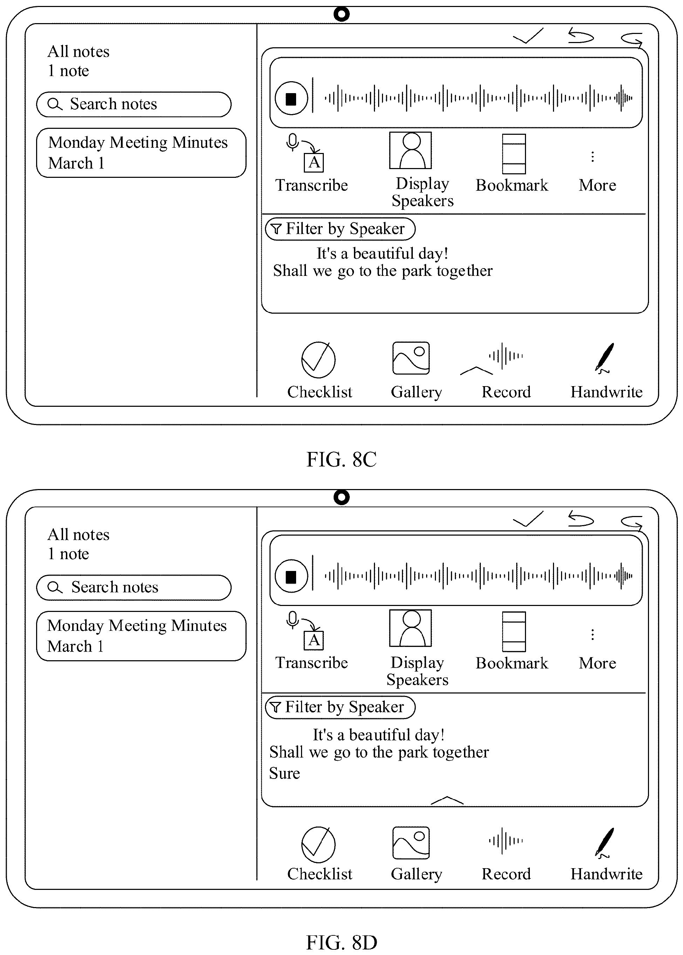

In the embodiments of this application, after obtaining the latest speech information, the tablet computer may display the latest speech text in the latest speech information on the interface 1 (or referred to as a first interface). The interface 1 (i.e., a recording card, for example, a first recording card, displayed on the interface 1) displays all speech texts obtained during the recording, thereby achieving the real-time transcription and display of speech content. Speech texts corresponding to different speaker labels are displayed in different segments. For example, during the recording, the tablet computer first receives "It's" uttered by the speaker 1, the "It's" is the latest voice data, and "It's" is displayed on the interface 1 (as shown in FIG. 8A). Next, the tablet computer receives "a" uttered by the speaker 1, and "a" is displayed on the interface 1 (as shown in FIG. 8B). "It's" shown in FIG. 8A may be considered as the historical speech text, and "a" shown in FIG. 8B may be considered as the latest speech text. As the recording duration increases, the tablet computer sequentially transcribes received voice data into a text and displays the text on the interface 1 ("It's a beautiful day! Shall we go to the park together" shown in FIG. 8C). Next, the tablet computer receives the latest voice data, for example, "Sure". The tablet computer transcribes the latest voice data to obtain the latest speech text "Sure", and recognizes that a speaker label corresponding to the latest speech text is a speaker 2. The tablet computer may display the latest speech text in a next segment of the speech text of the speaker 1 (as shown in FIG. 8D). "It's a beautiful day! Shall we go to the park together" shown in FIG. 8D may be considered as the historical speech text, and "Sure" is the latest speech text.

It should be understood that the incrementally displaying one character at a time by the tablet computer described above is only an example of displaying a speech text in real time, and the tablet computer may alternatively display a plurality of characters at a time. This is not limited in this application.

In some embodiments, if a speech start time corresponding to the latest speech text differs significantly from a speech start time corresponding to a previous speech text, regardless of whether the speaker label corresponding to the latest speech text is the same as a speaker label corresponding to the previous speech text, the latest speech text may remain discrete from the previous speech text. Certainly, if the speaker label corresponding to the latest speech text is the same as the speaker label corresponding to the previous speech text, the tablet computer may directly merge the latest speech text into the previous speech text.

In some embodiments, speech texts displayed on the interface 1 are arranged in ascending chronological order of speech start times. For example, a speech start time corresponding to "It's a beautiful day! Shall we go to the park together" is earlier than a speech start time corresponding to "Sure" shown in FIG. 8D.

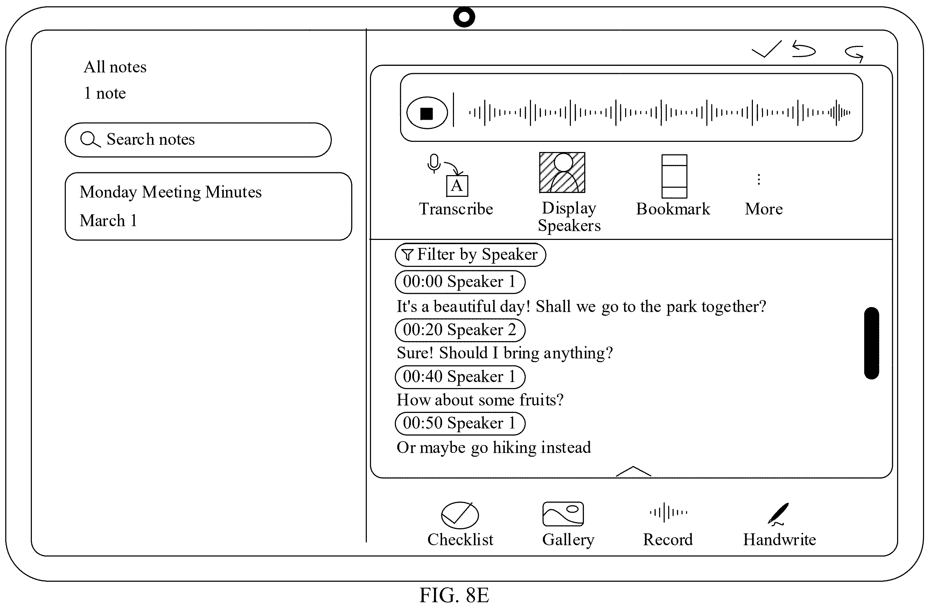

In some embodiments, the interface 1 displays a speech text, and may further display first information corresponding to the speech text. The first information includes a speaker label and/or a speech start time. For example, as shown in FIG. 8E, the interface 1 displays a speech text, a speaker label, and a speech start time. 00:00, 00:20, 00:40, and 00:44 in FIG. 8E are all speech start times, and the speaker 1 and the speaker 2 are both speaker labels.

Optionally, when the tablet computer is not in a speaker display mode (i.e., a display speaker control is not selected), the tablet computer may display only the speech text in the speech information but does not display the first information in the speech information. When the tablet computer is in the speaker display mode (i.e., a display speaker control is selected), the tablet computer may display the speech text, and may further display the first information such as the speaker label and/or the speech start time (as shown in FIG. 8E, the tablet computer displays the speech text, the speaker label, and the speech start time).

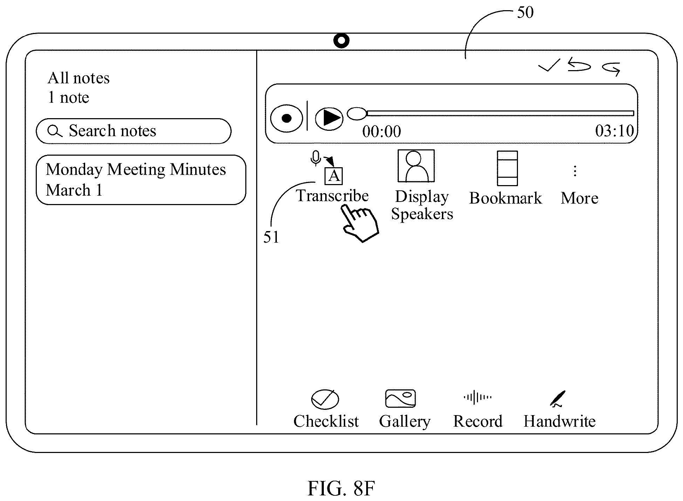

In some embodiments, instead of automatically displaying speech content in real time, the tablet computer may receive an operation a inputted by the user, and in response to the operation a, transcribe voice data recorded before and/or after the operation a is received into a text. For example, the tablet computer may display an interface 50 shown in FIG. 8F. The interface 50 includes a control 51. The control 51 can trigger the tablet computer to transcribe voice data in the note into a text. When the user intends to present speech content corresponding to voice data through a text, the user may click the control 51 shown in FIG. 8F. A click operation on the control 51 is the operation a.

Certainly, the operation a described above is only an example. The operation a may alternatively be another type of operation. For example, the operation a may be a first preset gesture inputted by the user on a related interface. For example, an S-shaped gesture or the like is inputted on the interface 50. The first preset gesture is configured for triggering the tablet computer to transcribe voice data (or referred to as a voice file) into a text. The first preset gesture may be preconfigured in the tablet computer. In addition, the tablet computer may prompt, to the user on the related interface, the function triggered by the first preset gesture.

In the embodiments of this application, when displaying speech information, the tablet computer discerns display according to different speakers, and the speech information of the different speakers are located in different segments, to visually present the speech of the different speakers.

S304. The tablet computer receives a recording stop operation.

The recording stop operation can trigger the tablet computer to stop recording, that is to say, stop receiving voice data. For example, the recording stop operation may include a click operation on a stop recording control (a stop recording control 30 shown in FIG. 8A) on the interface 1 by the user. Certainly, the recording stop operation may alternatively be another type of operation, provided that the tablet computer can be triggered to stop recording. This is not limited in this application.

S305. The tablet computer stops recording in response to the recording stop operation, and displays an interface 2. The interface 2 displays a speech text, a playback control, and a progress bar.

A speech text displayed on the interface 2 (or referred to as a second interface) includes all speech texts obtained during current recording. The playback control can trigger the tablet computer to play voice data recorded during recording. The progress bar can display a recording playback position when the tablet computer is in a playback state. The playback state represents a state in which the tablet computer is playing a recording, that is to say, playing the voice data recorded during the recording.

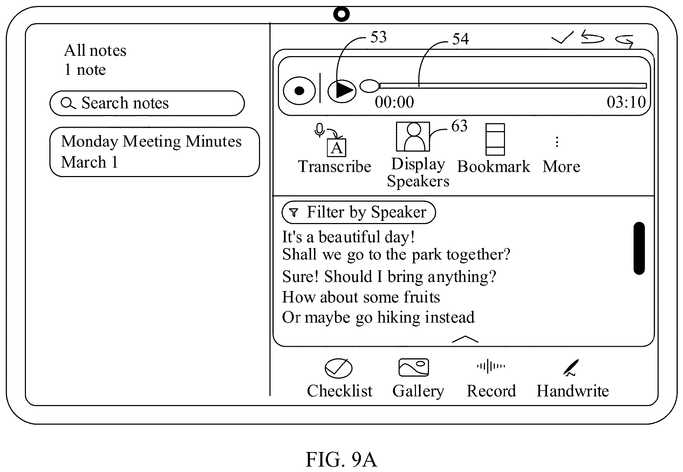

In some embodiments, when the tablet computer is not in the speaker display mode, the interface 2 displays the speech text in the speech information, but does not display other information such as the speaker label and the speech start time in the speech information, as shown in FIG. 9A. An interface (i.e., the interface 2) shown in FIG. 9A displays a playback control 53 and a progress bar 54. Moreover, a second interface may further include a start recording control.

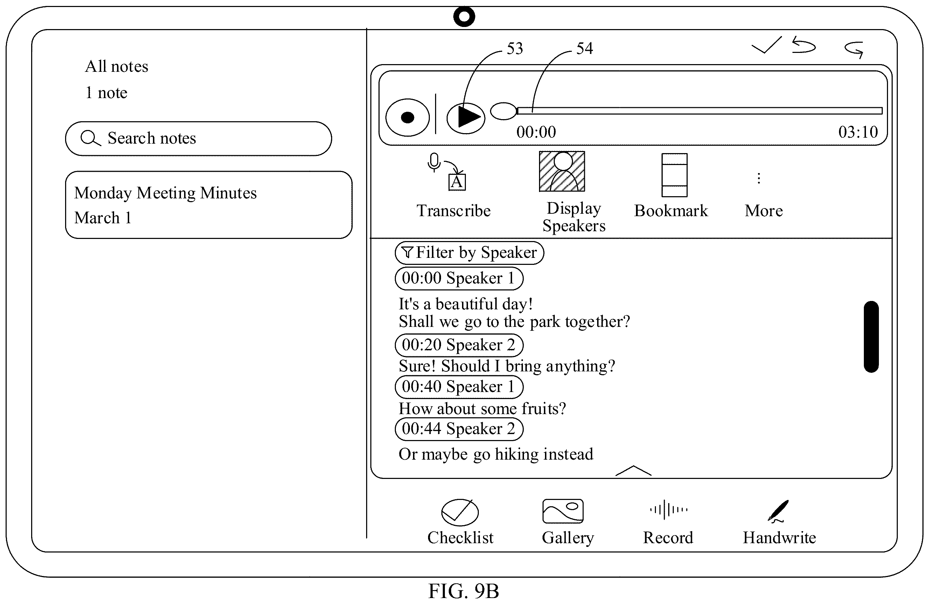

When the tablet computer is in the speaker display mode, the interface 2 displays the speech text in the speech information, and also displays the first information in the speech information. The first information includes the speaker label and/or the speech start time. For example, the first information includes the speaker label and the speech start time. The tablet computer displays the playback control 53, the progress bar 54, the speech text, the speech start time, and the speaker label on the interface 2 shown in FIG. 9B.

S306. The tablet computer receives an operation 1. The operation 1 is configured for triggering switching to the speaker display mode.

In some embodiments, when being in the speaker display mode, the tablet computer receives a click operation on a stop speaker display control displayed on an interface of the tablet computer by the user, the tablet computer may exit the speaker display mode in response to the click operation, that is to say, display only the speech text in the speech information and cancel display of information other than the speech text in the speech information, for example, cancel display of the first information and display only the speech text (as shown in FIG. 9A).

When being not in the speaker display mode, the tablet computer receives a click operation on a display speaker control displayed on an interface (for example, the interface 1 or the interface 2) of the tablet computer by the user. The tablet computer may switch to the speaker display mode in response to the click operation, that is to say, display the speech text and also display the first information (as shown in FIG. 9B), to achieve switching of speaker states. The click operation on the display speaker control by the user is the operation 1.

It needs to be noted that the stop speaker display control and the display speaker control may be different controls or may be the same control. Specifically, the tablet computer displays only the speech text in the speech information, the control is in the speaker display mode, and the control may be used as the stop speaker display control. The display speaker control shown in FIG. 9A is in a speaker display stop mode, and the control may be used as the display speaker control. The tablet computer displays the speech text and the first information in the speech information, the control is in the speaker display mode (i.e., is selected), and the control may be used as the stop speaker display control. The display speaker control shown in FIG. 9B is in the speaker display mode, and the control may be used as the stop speaker display control.

S307. The tablet computer display an interface 3 in response to the operation 1. The interface 3 displays the speech text, the first information, the playback control, and the progress bar. The first information includes the speaker label and/or the speech start time.

In some embodiments, when being in the speaker display mode, the tablet computer receives the recording stop operation. Instead of receiving the operation 1 to display the interface 3, the tablet computer may directly display the interface 3 in response to the recording stop operation. That is to say, the interface 2 may be used as the interface 3.

For ease of description, the first information is defined as that the first information includes the speaker label and the speech start time. Correspondingly, when the tablet computer is in the speaker display mode, the displayed speech information includes the speech text, the speech start time, and the speaker label. However, it should be understood that the first information including the speaker label and the speech start time is only defined for ease of description, and the first information only needs to include at least one piece of information of the speaker label and the speech start time.

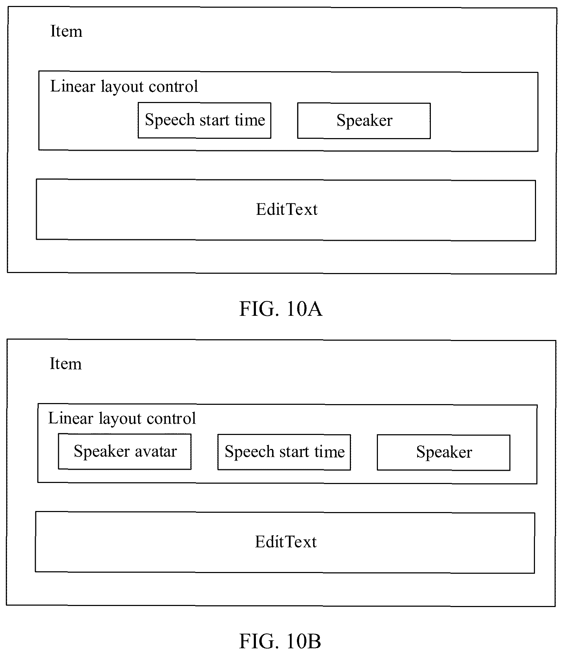

In some embodiments, a plurality of pieces of speech information (i.e., the speech text and the first information) displayed on the interface 3 may be carried by a recycleview component. One piece of speech information (i.e., the speech text and the first information) is one item (or referred to as an Adapter item) of the recycleview component. A layout style of the item may be shown in FIG. 10A, and includes two child layouts, with one child layout being a linear layout control (a LinearLayout) and the other child layout being an EditText field (an EditText).

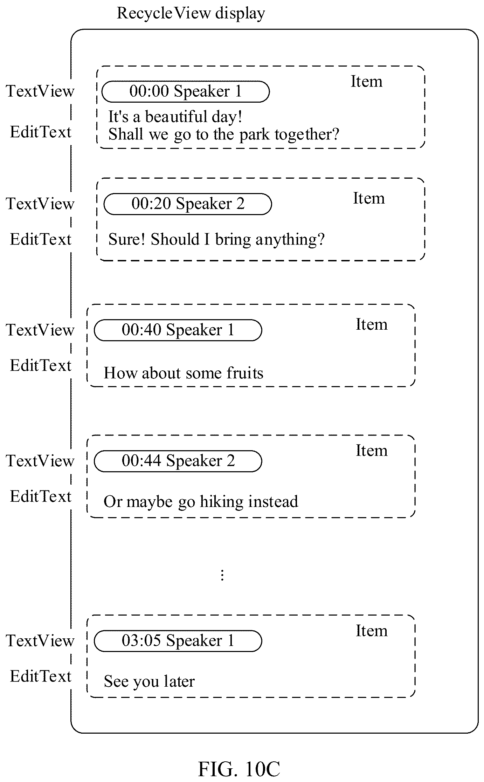

Child controls (for example, textviews) in the LinearLayout are arranged horizontally or vertically. The child controls are arranged horizontally in this application. The child controls are configured to carry the first information. For example, one child control carries the speaker label, and another child control carries the speech start time. The speech start time and the speaker label are located in the same line (or referred to as the same segment), and are arranged horizontally (as shown in FIG. 10C). Optionally, the speech start time and the speaker label may be carried by other types of view components (for example, textviews).

The EditText carries the speech text (as shown in FIG. 10C). Optionally, the speech text may be carried by a textview.

In some embodiments, each item of the recycleview component may further include a speaker avatar. The speaker avatar may be displayed on the left side of the speech start time. The speaker avatar may be carried by an imgview. That is to say, the LinearLayout of items may further include a child control corresponding to the speaker avatar, as shown in FIG. 10B.

S308. The tablet computer receives a click operation inputted by a user.

S309. The tablet computer obtains a click position corresponding to the click operation in response to the click operation.

In the embodiments of this application, when receiving a click operation on the speech information on the interface 3 by the user, the tablet computer obtains a click position corresponding to the click operation, that is to say, obtains a position at which the user's finger touches down, for the tablet computer to determine a use intention of the user by using the click position.

S310. If the click position is in a speech text, the tablet computer determines whether the tablet computer is in a playback state.

For example, the playback state represents that the tablet computer is in a state of playing voice data. When the click position is in one speech text, it indicates that the user clicks the speech text, and the tablet computer may determine whether the tablet computer is in the playback state, to determine the use intention of the user. To put it simply, the tablet computer determines, by determining whether the tablet computer is in the playback state, whether the user intends to edit the clicked speech text or intends to move a playback position of the progress bar to a time corresponding to the clicked speech text. Specifically, when the tablet computer is not in the playback state, it indicates that the tablet computer is currently not playing a recording, and the user is more likely to intend to edit the clicked speech text. The tablet computer may perform S311. When the tablet computer is in the playback state, it indicates that the tablet computer is currently playing a recording, and the user is more likely to intend to make the tablet computer play voice data corresponding to the clicked speech text. The tablet computer may perform S312.

It needs to be noted that the tablet computer may be externally connected to a mouse. Therefore, the click position may be a position clicked by the mouse.

S311. The tablet computer enters an edit mode.

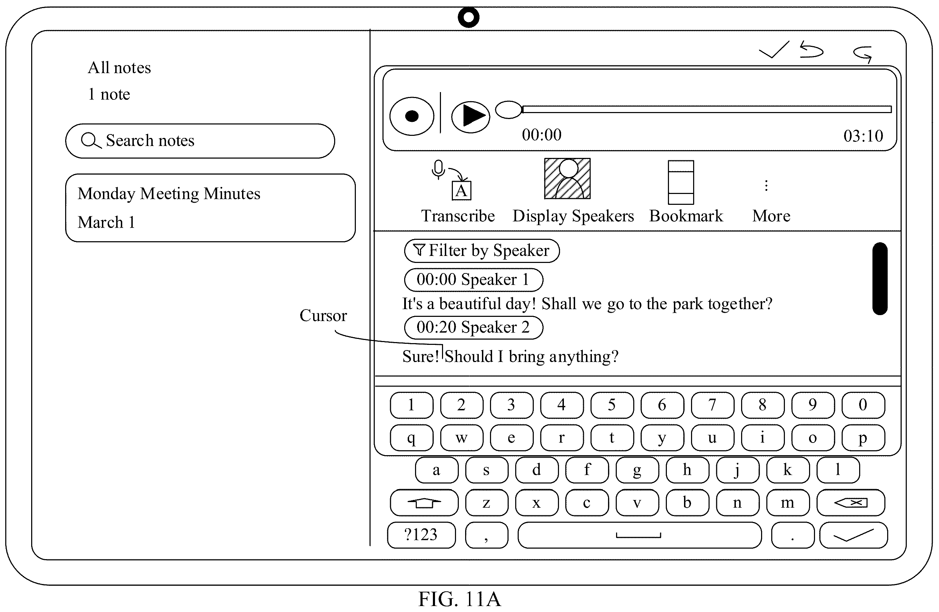

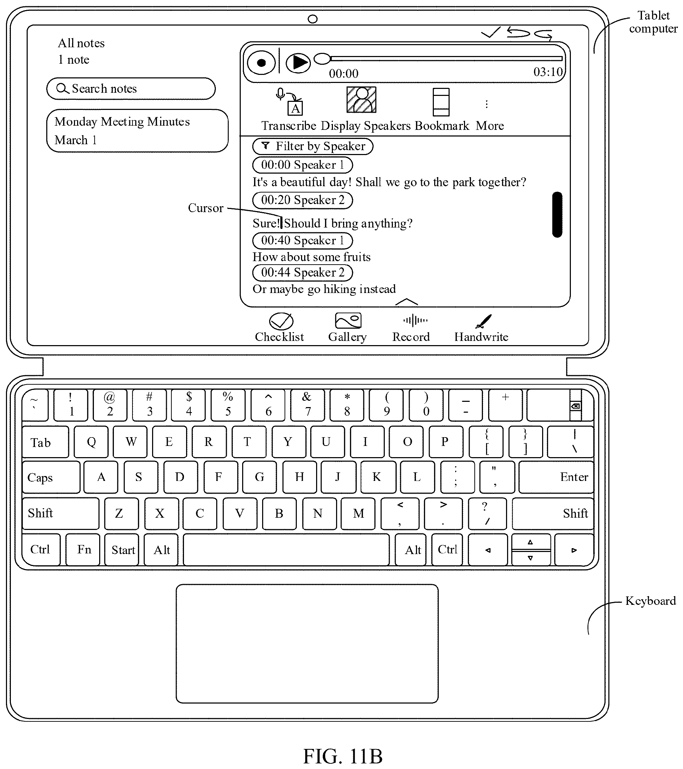

In the embodiments of this application, after entering the edit mode, the tablet computer may receive an edit operation on the clicked speech text (or referred to as a first target speech text) inputted by the user. In response to the edit operation, for example, deletion, modification, character addition, among other operations, on a first target speech text by the user, the tablet computer performs corresponding processing on the first target speech text. For example, when being not in the playback state, the tablet computer displays a virtual keyboard shown in FIG. 11A, so that the user may edit the speech text by using the virtual keyboard. Moreover, the tablet computer may be externally connected to a keyboard (as shown in FIG. 11B). It may be not necessary to display the virtual keyboard when the tablet computer enters the edit mode.

In some embodiments, the tablet computer entering the edit mode may include that the tablet computer moves a cursor to the click position (the position of the cursor shown in FIG. 11A or FIG. 11B is the position of the click operation inputted by the user), or moves a cursor before any character in the first target speech text. This is not limited in this application.

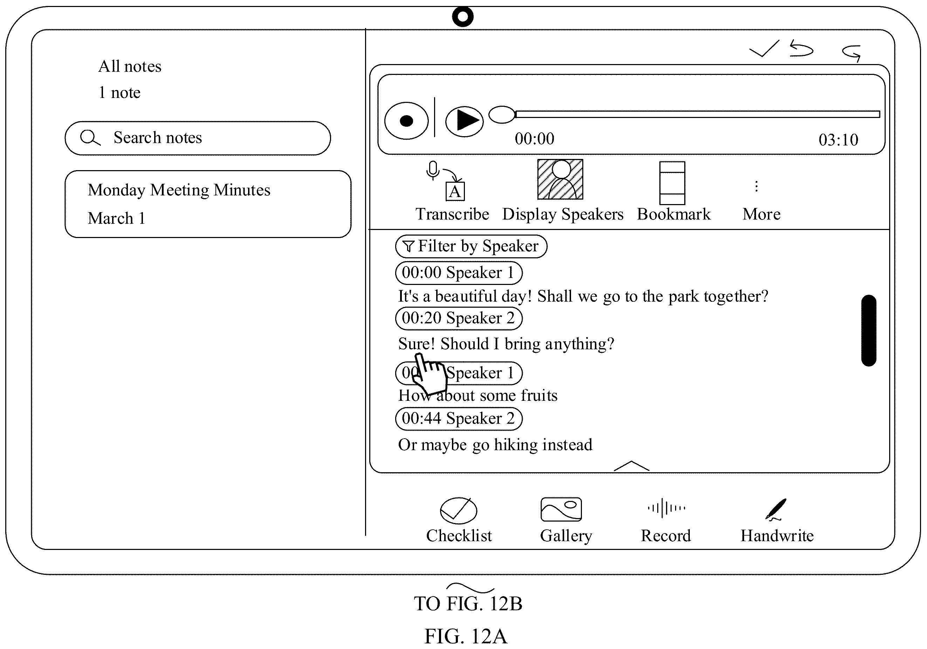

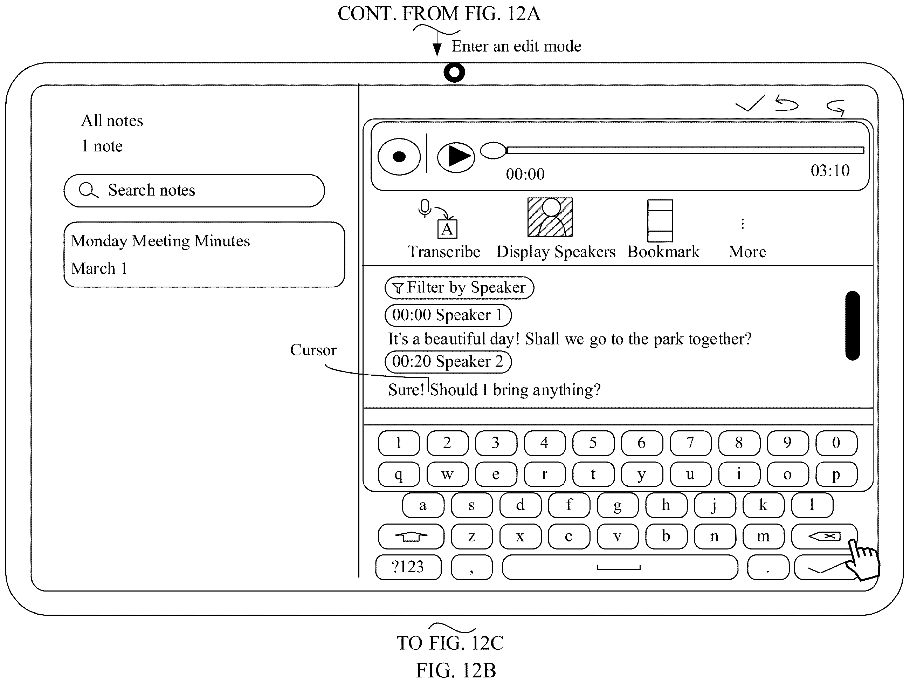

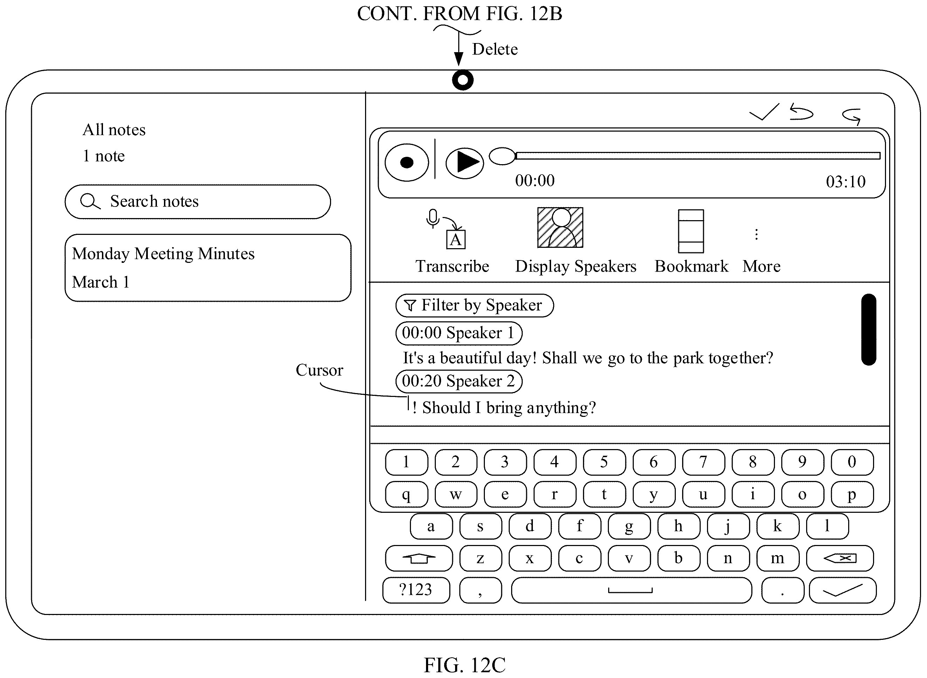

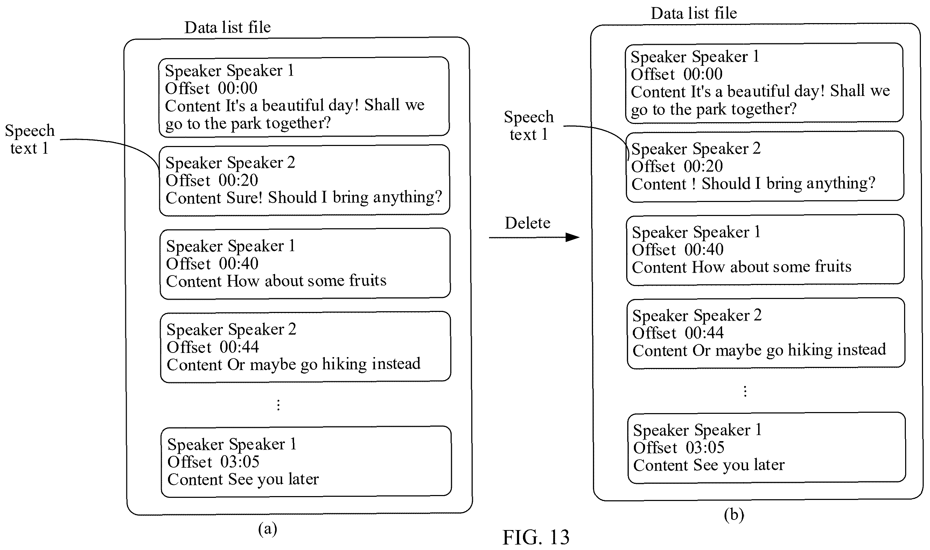

In some embodiments, the tablet computer performs processing on the first target speech text (or referred to as an original speech text) in response to the edit operation on the first target speech text by the user to obtain a processed speech text and displays the processed speech text. The content of the first target speech text at the preset storage position is also the processed speech text. For example, assuming that a speech text 1 is "Sure! Should I bring anything?", the user clicks the speech text 1 (as shown in FIG. 12A), and the speech text 1 is the first target speech text. In response to the click operation on the speech text 1, when the tablet computer is not in the playback state, the tablet computer displays the virtual keyboard (as shown in FIG. 12B). Next, the user deletes the word "Sure" in the speech text 1 by using the virtual keyboard, that is to say, inputs a deletion operation (for example, clicks a delete key in FIG. 12B). The tablet computer deletes the word "Sure" in response to the deletion operation. The processed the speech text 1 turns into "! Should I bring anything?". The tablet computer may display the processed the speech text 1, and no longer displays the original speech text 1 (as shown in FIG. 12C). Correspondingly, the tablet computer also deletes "Sure" in the speech text 1 in the preset storage position. "Sure! Should I bring anything?" in (a) shown in FIG. 13 is the original speech text of the speech text 1, and the speech text 1 after the deletion may be shown in (b) in FIG. 13.

In some embodiments, the preset storage position may be a target data list text shown in (a) or (b) in FIG. 13. The target data list file includes the speech information. Speaker represents the speaker label, Offset represents the speech time, and Content represents the speech content.

In some embodiments, the database may store the target data list file. Correspondingly, the tablet computer may directly query the target data list file from the database to obtain speech information corresponding to a target speaker.

In some other embodiments, the database may store a storage path corresponding to the target data list file. Correspondingly, the tablet computer queries the storage path corresponding to the target data list file from the database for the query of the target data list file by using the storage path.

In some embodiments, the preset storage position (for example, the target data list) may further include duration.

In some embodiments, if the speech text is carried by a textview, when being in the playback state, the tablet computer may transcribe the textview corresponding to the first target speech text into an EditText, to enable the user to edit the speech text in the EditText.

S312. The tablet computer calculates a speech time corresponding to a click character based on the click position. The click character is a character corresponding to the click position.

S313. The tablet computer moves a playback position of the progress bar to the speech time, and plays voice data corresponding to the speech time.

In the embodiments of this application, when being in the playback state, the tablet computer determines, based on a position (i.e., the click position) of the speech text clicked by the user, voice data that the user intends to play. The tablet computer may determine an offset time of the click position with respect to a speech start time corresponding to the first target speech text by using the click position and duration corresponding to the speech text (i.e., the first target speech text) corresponding to the click position. The duration corresponding to the first target speech text is duration in the speech information to which the first target speech text belongs, and the speech start time corresponding to the first target speech text is a speech start time in the speech information to which the first target speech text belongs.

Next, the tablet computer determines, based on the speech start time and the offset time, that is to say, by calculating a sum of the speech start time and the offset time, a speech time (or referred to as a first speech time) corresponding to the click position, that is to say, determines a speech time corresponding to a character being clicked (referred to as the click character for short). Next, the tablet computer moves the playback position of the progress bar to a position corresponding to the speech time, and plays the voice data corresponding to the speech time, that is to say, starts playing the voice data from the speech time, to achieve the synchronized playback of a recording and a speech text, and achieve the precise playback of voice data, so that the user can quickly hear voice data that the user requires, thereby meeting a voice playback requirement of the user.

In some embodiments, specific calculation process of the offset time may include: The tablet computer may obtain a total count of all characters of the first target speech text. Next, the tablet computer may calculate a ratio of the total count of all characters to the duration corresponding to the first target speech text to obtain a speech speed. Next, the tablet computer may count characters preceding the click position in the first target speech text to obtain an offset character count. Next, the tablet computer may calculate a product of multiplying the offset character count by the speech speed to obtain an offset time corresponding to the click position.

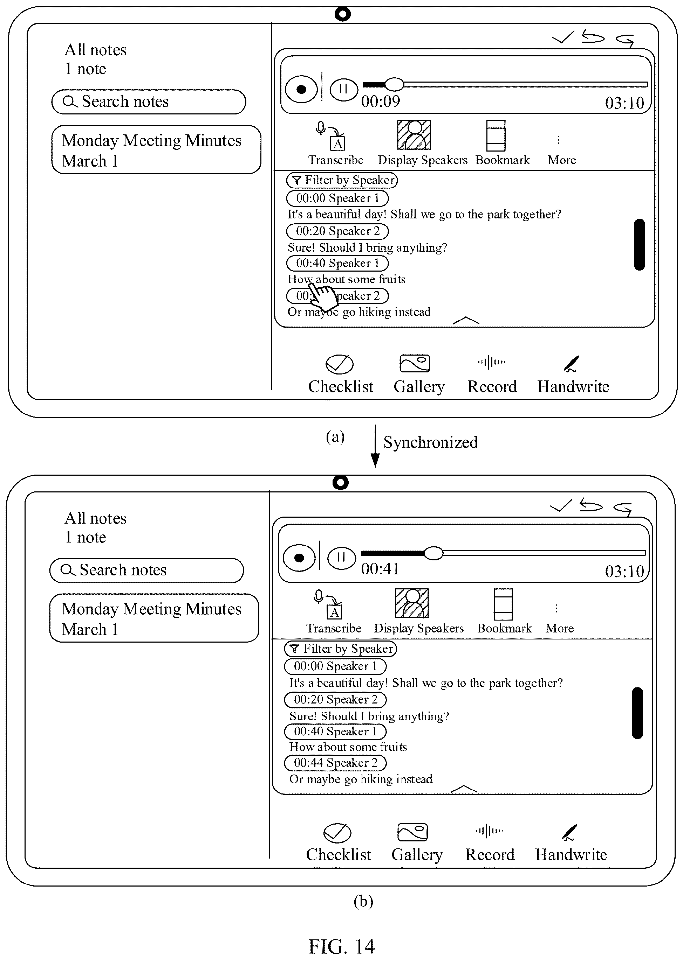

For example, the user clicks "about" in "How about some fruit" shown in (a) in FIG. 14. The tablet computer is in the playback state. The tablet computer calculates that a speech time corresponding to "about" is 00:40, and the duration of "How about some fruit" is 5 seconds. Therefore, the speech speed is 20/5 = 4 character/second. That is to say, 4 characters are uttered per second. Next, a quantity of characters before "about" in "How about some fruit" is 4. That is to say, the offset character count is 4. Correspondingly, the offset time is 4/4 character/second = 1 second. In this case, the speech time corresponding to the click operation is 00:41. The tablet computer moves the playback position of the progress bar to the position 00:41 (as shown in (b) in FIG. 14), and plays voice data from 00:41, to enable the user to quickly hear the voice data at 00:41 without manually moving the playback position by the user, thereby avoiding inaccurate playback position adjustment and repeated movement and adjustment when the user manually adjusts a playback position, achieving quick and accurate playback position adjustment, and meeting a use requirement of the user.

In some embodiments, after calculating the speech time, the tablet computer may only play the voice data corresponding to the speech time without moving the playback position of the progress bar to the speech time.

A case in which the click position corresponding to the click operation is located in a speech text, that is to say, the user clicks the speech text, is described above. A case in which the click position corresponding to the click operation is located in first information, that is to say, the user clicks the first information continues to be described below.

S314. If the click position is in first information, the tablet computer determines whether the tablet computer is in a playback state.

In the embodiments of this application, when the click position is in first information (for example, a speaker label), it indicates that the user clicks the first information, and the tablet computer may determine whether the tablet computer is in the playback state, to determine the use intention of the user. To put it simply, the tablet computer determines, by determining whether the tablet computer is in the playback state, whether the user intends to edit the clicked first information or intends to move a playback position of the progress bar to a speech start time corresponding to the first information. Specifically, when the tablet computer is not in the playback state, it indicates that the tablet computer is currently not playing a recording, and the user is more likely to intend to edit the first information. The tablet computer may perform S315. When the tablet computer is in the playback state, it indicates that the tablet computer is currently playing a recording, and the user is more likely to intend to make the tablet computer play voice data corresponding to the first information. The tablet computer may perform S316.

S315. The tablet computer displays a speaker modification control.

The speaker modification control is configured to obtain a new speaker label inputted by the user.

For example, generally, the speech start time cannot be changed. Therefore, regardless of whether the user clicks a speaker label (or referred to as an original speaker label) or a speech start time, when not being in the playback state, the tablet computer considers that the user intends to modify the speaker label. The tablet computer may enter the edit mode and display the speaker modification control (or referred to as a rename control). Next, the tablet computer may obtain a new speaker label inputted by the user in the speaker modification control, and modify a first target speaker label (i.e., the speaker label in the first information clicked by the user) to the new speaker label.

The modifying the first target speaker label to the new speaker label may include modifying the displayed first target speaker label to the new speaker label, and/or, modifying the first target speaker label at the preset storage position to the new speaker label.

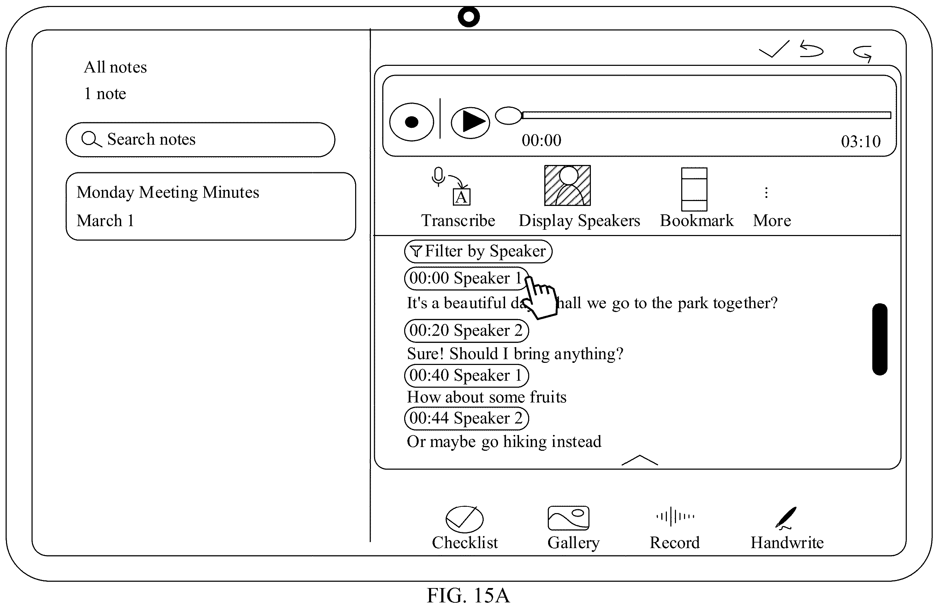

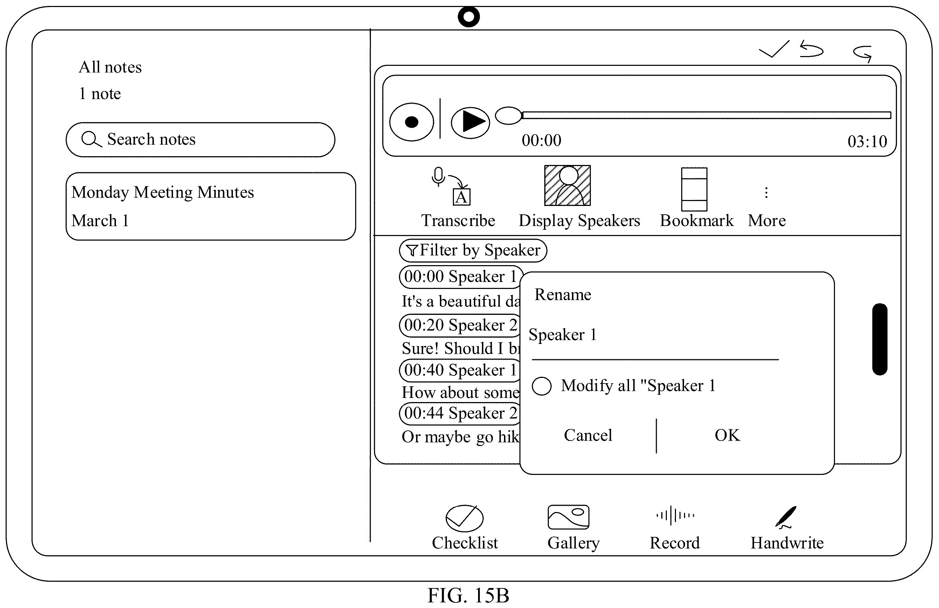

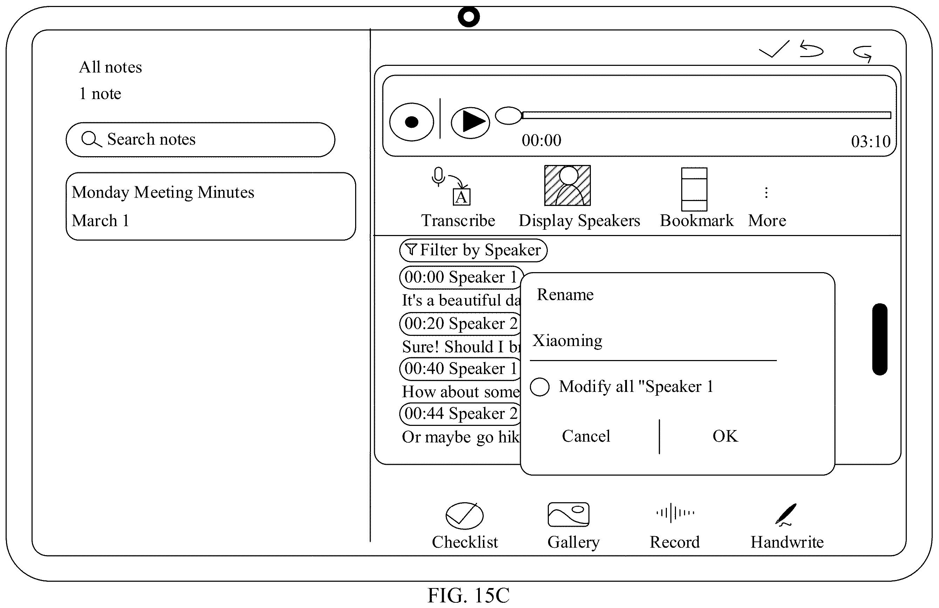

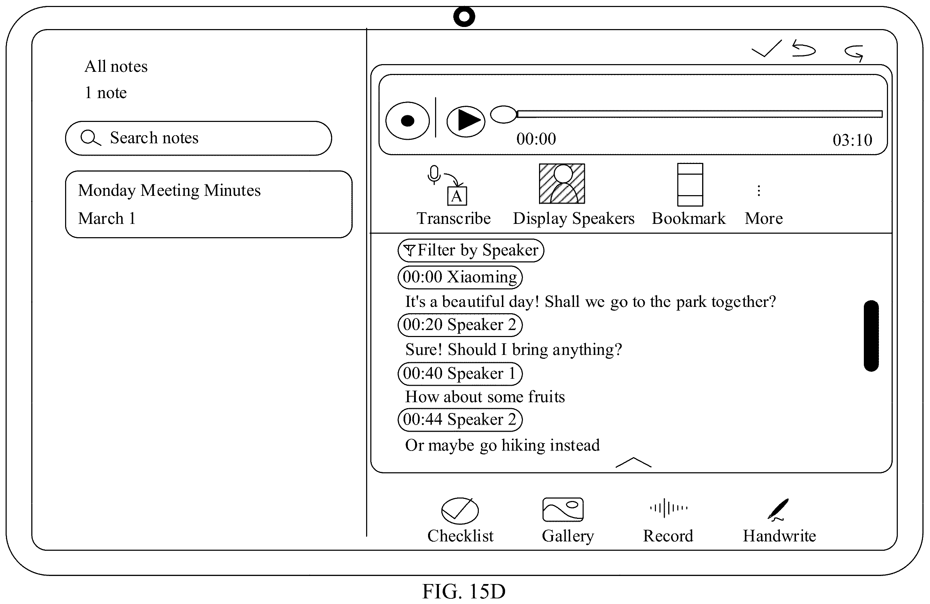

For example, as shown in FIG. 15A, the user clicks a speaker label (i.e., the speaker 1) corresponding to the speech text "It's a beautiful day! Shall we go to the park together?". Next, in response to the click operation on the speaker 1, when being not in the playback state, the tablet computer displays the speaker modification control (a rename control shown in FIG. 15B). The speaker 1 is the first target speaker label. Next, the user inputs Xiaoming (as shown in FIG. 15C) in the rename control, that is to say, inputs the new speaker label. The tablet computer may modify the speaker label corresponding to the displayed speech text "It's a beautiful day! Shall we go to the park together?" to Xiaoming (as shown in FIG. 15D), and modify the first target speaker label in the preset storage position to Xiaoming.

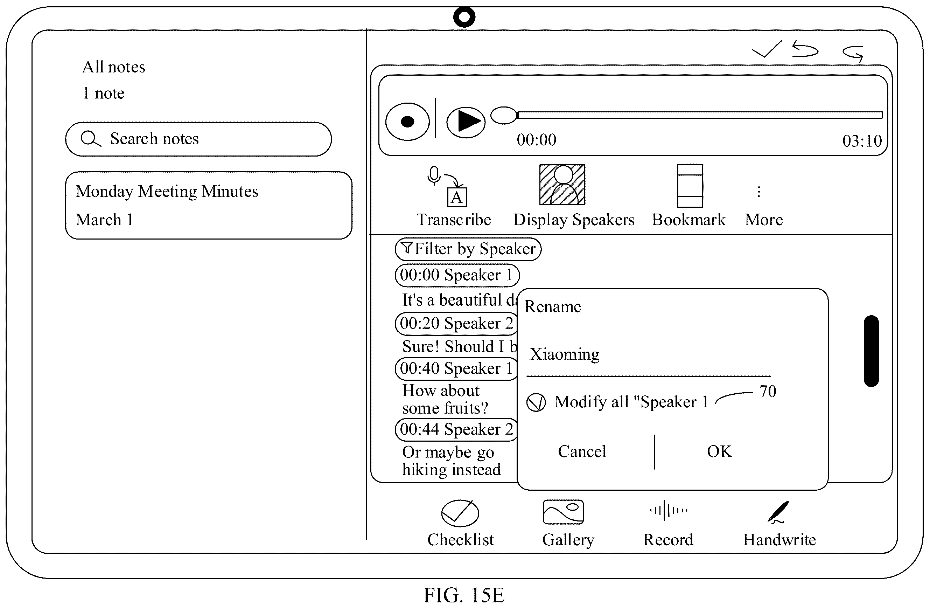

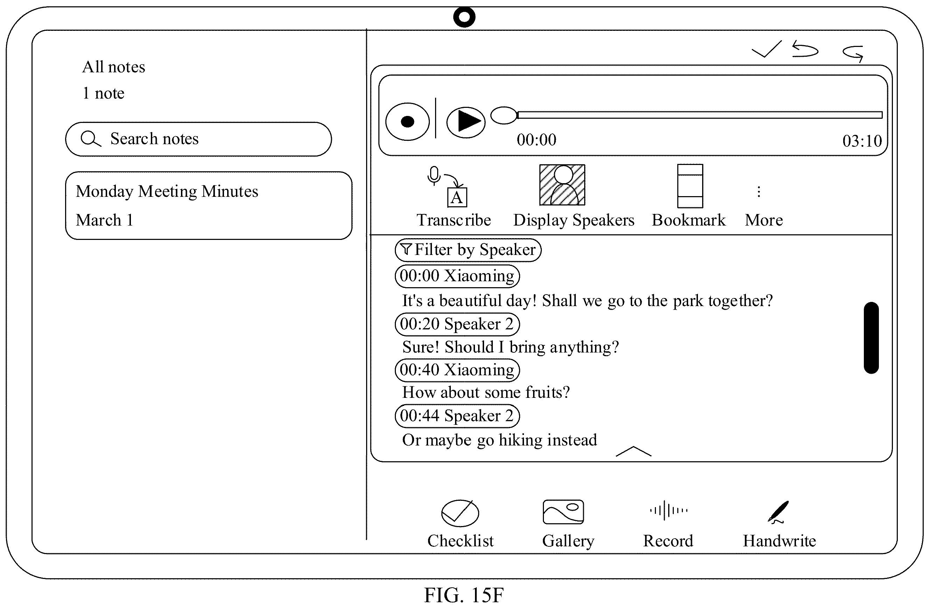

In some embodiments, when the user intends to modify speaker labels the same as the first target speaker label in all speech information to the new speaker label, the user may click a modify all control 70 shown in FIG. 15E. The tablet computer modifies the speaker labels the same as the first target speaker label in all the speech information to the new speaker label in response to the click operation on the modify all control 70, for example, modifies a speaker label with a displayed value being the first target speech label to the new speaker label (as shown in FIG. 15F), and modifies the first target speaker label in the preset storage position to the new speaker label, thereby achieving consistent modification of information.

In the embodiments of this application, because voice-to-text conversion has a probability of a conversion error, for example, has a probability of a transcription error, when the tablet computer is not in the playback state, the user may edit the speech text by clicking a speech text to correct the speech text, thereby improving the accuracy of transcription. The voice-to-text conversion is also susceptible to a voiceprint recognition error. For example, speech content of one speaker is recognized as speech content of another person. When the tablet computer is in the playback state, the user may edit the speaker label by clicking a speaker label or a speech start time to modify the speaker label, to achieve the correction of the speaker label, thereby improving the accuracy of transcription. Certainly, the user may further edit speech information as required. The notes application provides the user with diverse services, thereby meeting the use requirement of the user, and enhancing user experience.

S316. The tablet computer moves a playback position of the progress bar to a target speech start time, and plays voice data corresponding to the target speech start time. The target speech start time is a speech start time in speech information to which a click position belongs.

In some embodiments, when the tablet computer is in the playback state, the tablet computer directly plays voice data corresponding to a speech start time (i.e., a target speech time) in the speech information to which the first information clicked by the user belongs, that is to say, directly starts playing the voice data from the target speech start time, to achieve the synchronized playback of a recording and a speech text, and achieve the quick and precise playback of voice data, so that the user can quickly hear voice data that the user requires, thereby meeting a voice playback requirement of the user without manual adjustment of a playback position by the user, thereby improving user experience. For example, the user clicks the speaker label "speaker 2" at 00:20 shown in (a) in FIG. 14. The tablet computer is in the playback state, and directly moves the playback position of the progress bar to 00:20 to continue to play voice data from 00:20.

In some embodiments, when receiving a click operation, if a click position corresponding to the click operation is not in a preset valid area, the tablet computer may consider the current click operation invalid, and the tablet computer may make no response to the click operation, that is to say, perform no processing. If the click position corresponding to the click operation is in the preset valid area, the tablet computer may consider the current click operation valid, and the tablet computer may perform corresponding processing based on the click position and the playback state in response to the click operation.

The preset valid area may be set as required. For example, the preset valid area is a blank area on the recording card.

A process in which the tablet computer receives a click operation on speech information displayed by the tablet computer by the user and performs processing based on the click operation is described above. The tablet computer may further simultaneously select, based on a long-press operation inputted by the user, different types of information located in different segments displayed by the tablet computer, thereby achieving the cross-segment selection of speech information. A process in which the tablet computer performs processing based on the operation in the scenario continues to be described below.

S317. The tablet computer receives a long-press operation inputted by the user.

S318. The tablet computer obtains a start position and an end position corresponding to the long-press operation in response to the long-press operation.

The start position represents a position at which the user's finger touches down, and the end position represents a position at which the user's finger lifts off. For example, the start position and the end position may be represented by (x, y) coordinates. For example, that the user's finger touches down may represent that the user's finger falls on a display of the tablet computer, or the user's finger presses a mouse button (for example, a left mouse button). That the user's finger lifts off may represent that the user's finger lifts off the display of the tablet computer, or the user's finger lifts off the mouse button.

S319. The tablet computer concatenates characters from the first speech character to the last speech character displayed on the interface 3 to obtain a concatenated character string. The first speech character is the first character in the first speech information displayed on the interface 3. The last speech character is the last character in the last speech information displayed on the interface 3.

For example, the characters include texts, punctuation marks (for example, commas, question marks, and periods), and spaces.

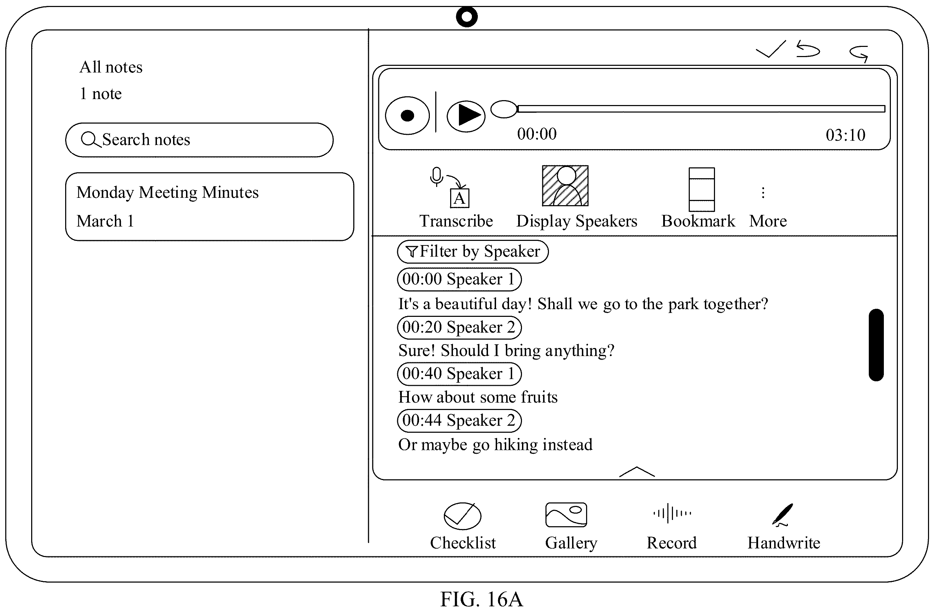

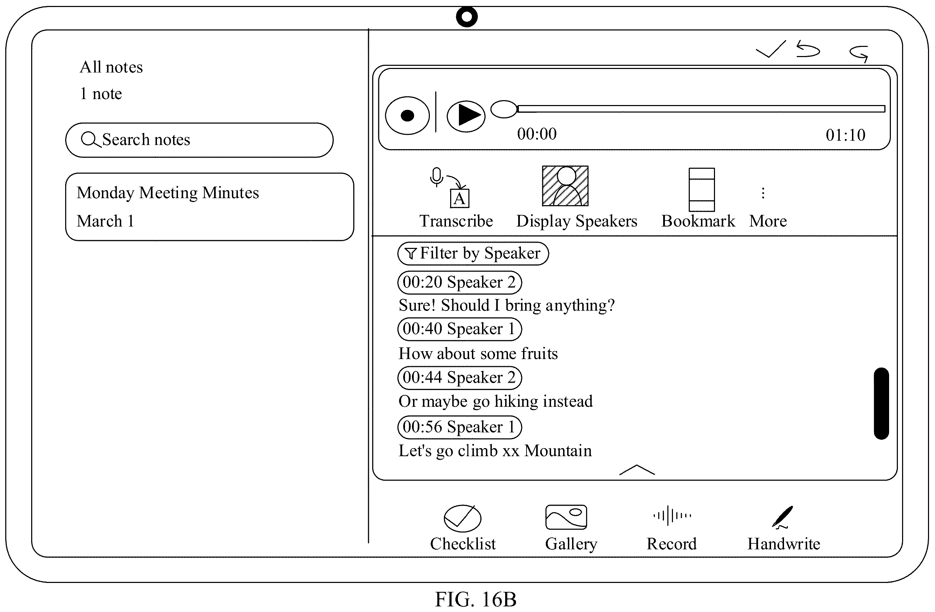

In the embodiments of this application, the tablet computer concatenates characters in all speech information displayed on the interface 3 to obtain the concatenated character string, that is to say, obtains concatenated speech information. The concatenated speech information is in plain text format. For example, as shown in FIG. 16A and FIG. 16B, the interface 3 displays five pieces of speech information. The tablet computer concatenates the displayed speech information one by one. First, the tablet computer concatenates content of the first (or referred to as the first piece of) speech information to obtain a concatenated character string. The concatenated character string is 00:00+space+speaker 1+It's a beautiful day! Shall we go to the park together?. The space is a control between the speech time and the speaker label. Next, the second speech information continues to be concatenated to the concatenated character string to obtain a new concatenated character string 00:00+space+speaker 1+It's a beautiful day! Shall we go to the park together?+00:20+space+speaker 2+Sure! Should I bring anything?. The rest is deduced by analogy, and the concatenation stops when the last character in the fifth speech information has been concatenated, thereby completing the concatenation of all the speech information.

In some embodiments, to enable the concatenated character string to have a format corresponding to that of the speech information displayed on the interface 3, in a concatenation process, if a currently concatenated character and a previous character are in different lines, the tablet computer may further concatenate a line break character (for example, '\n') before the currently concatenated character before, so that when the tablet computer displays the concatenated character string, the user perceives no difference in the speech information displayed on the interface 3, thereby achieving seamless display switching of speech information.

S320. The tablet computer counts corresponding characters from the first speech character to the start position to obtain an offset character position. The offset character position represents a position of the first selected character with respect to the concatenated character string.

In the embodiments of this application, the tablet computer is in the speaker display mode, and one piece of speech information displayed by the tablet computer includes a speech text and first information. The speech text is displayed succeeding the first information, and may be typically displayed in a next line (or referred to as a next segment here) of the first information. The tablet computer determines an item to which the start position corresponding to the received long-press operation belongs, that is to say, determines a sequential position of the item, that is to say, determines the speech information to which the start position belongs (or described as first speech information).

In the process of concatenating the speech information, when the concatenation reaches first speech information, the tablet computer may continue to concatenate from the first character in the first speech information. Next, when the concatenation reaches the a character corresponding to the start position corresponding to the long-press operation, the tablet computer may count characters that have been concatenated to obtain a position of the first character selected by the user in all the speech information, that is to say, obtains the offset character position. The tablet computer may continue to concatenate the remaining characters, i.e., characters succeeding the character corresponding to the start position.

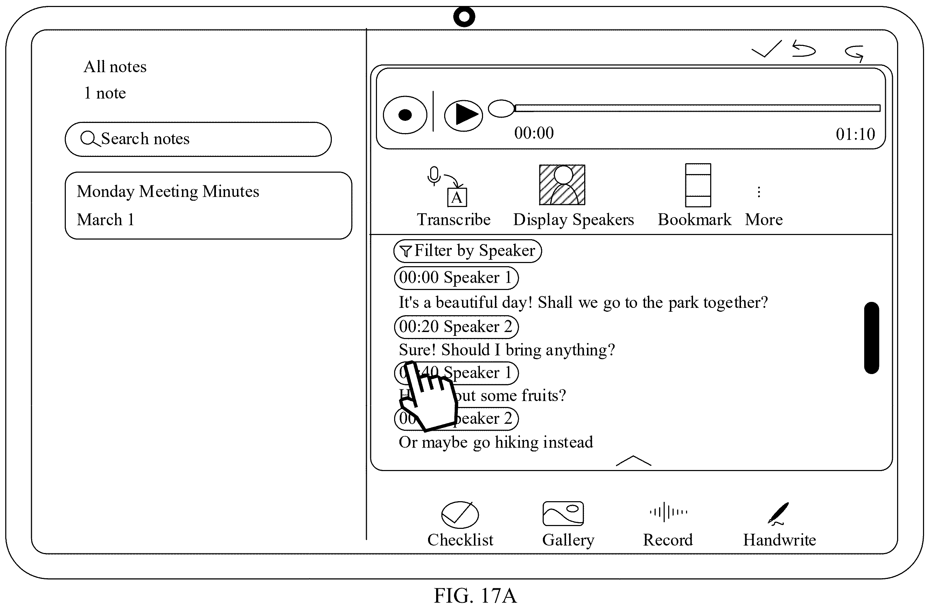

For example, characters corresponding to the start position corresponding to the long-press operation, i.e., a selection operation, inputted by the user are "Sure" in the second speech information shown in FIG. 17A. When the concatenation reaches the second speech information, the concatenated character string obtained by the tablet computer is 00:00+space+speaker 1+It's a beautiful day! Shall we go to the park together?. Next, the tablet computer continues to concatenate characters in the second speech information. When the concatenation reaches the characters "Sure", the currently concatenated character string is 00:00+space+speaker 1+It's a beautiful day! Shall we go to the park together?+00:20+space+speaker 2+Sure. The tablet computer counts characters included in the currently concatenated character string. That is, the quantity of the concatenated characters is 00:00 (5 characters) + space (1 character) + speaker 1 (9 characters) + It's a beautiful day! Shall we go to the park together? (55 characters) + 00:20 (5 characters) + space (1 character)+ speaker 2 (9 character) + Sure (4 characters) = 89. That is to say, the offset character position is 89.

S321. The tablet computer determines a selected character count based on the start position and the end position corresponding to the long-press operation.

For example, the tablet computer counts characters in the area from the start position to the end position to obtain the selected character count. Specifically, the tablet computer determines a character corresponding to the start position as a start character and determines a character corresponding to the end position as an end character. Next, the tablet computer counts characters located between the start character and the end character to obtain the selected character count. The characters between the start character and the end character include the start character, the end character, and the characters that succeed the start character and precede the end character.

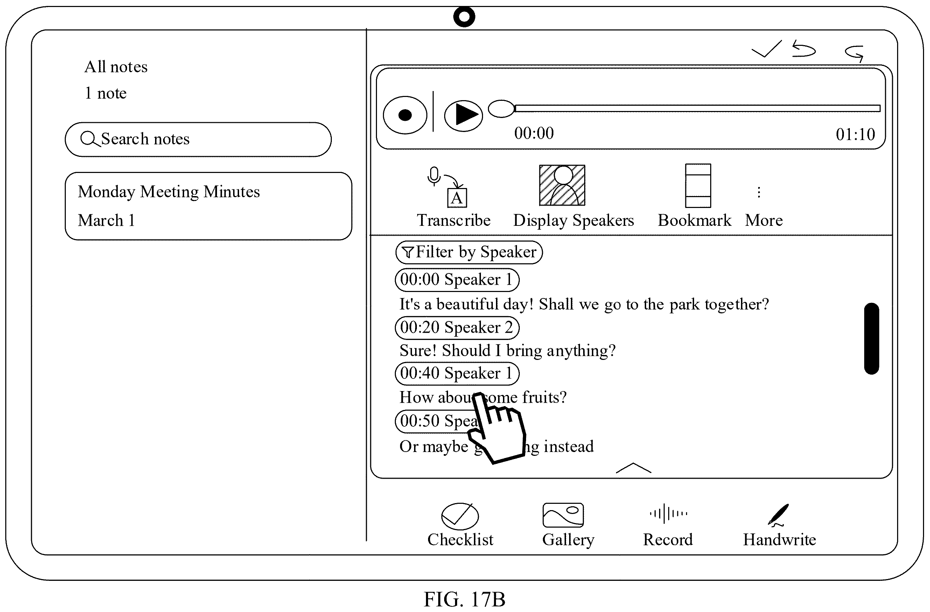

Continuing with the foregoing example, a character corresponding to the end position corresponding to the long-press operation inputted by the user is "t" in third speech information shown in FIG. 17B. Correspondingly, characters located between the start character and the end character is "Sure! Should I bring anything? (30 characters)+00:40 (5 characters)+space (1 character)+speaker 1 (9 characters)+How about some fruit (20 characters)", the quantity of the selected characters is 65.

S322. The tablet computer displays the concatenated character string, and sets a target character range in the concatenated character string to a selected state. The target character range includes the character corresponding to the offset character position and characters within the selected character count succeeding the offset character position.

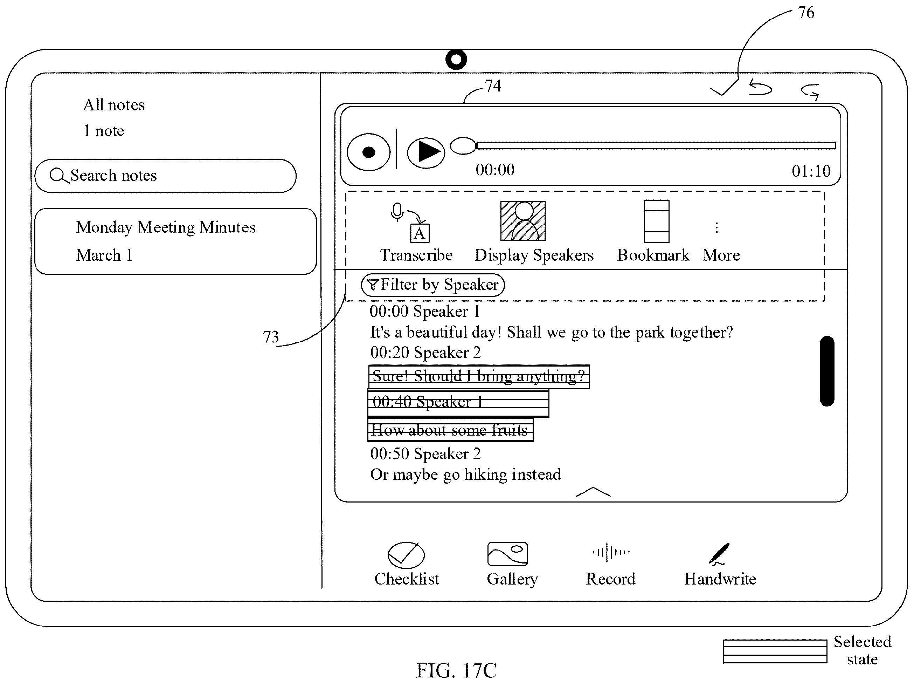

In the embodiments of this application, the tablet computer displays a finally obtained concatenated character string (i.e., displays the concatenated character string in the recording card), to achieve the display of all the speech information in plain text format, so that the tablet computer can select speech content in different segments. The tablet computer displays the target character range in the concatenated character string according to a preset selection style, so that the characters in the target character range are in a selected state (as shown in FIG. 17C). That is to say, the target character range in the concatenated character string in the recording card is selected. Optionally, the preset selection style may be highlighting. Compared with characters that are not selected, the color of the selected characters turns darker. Certainly, the user may set a selection style as required, provided that the selection style is different from the style of characters that are not selected.

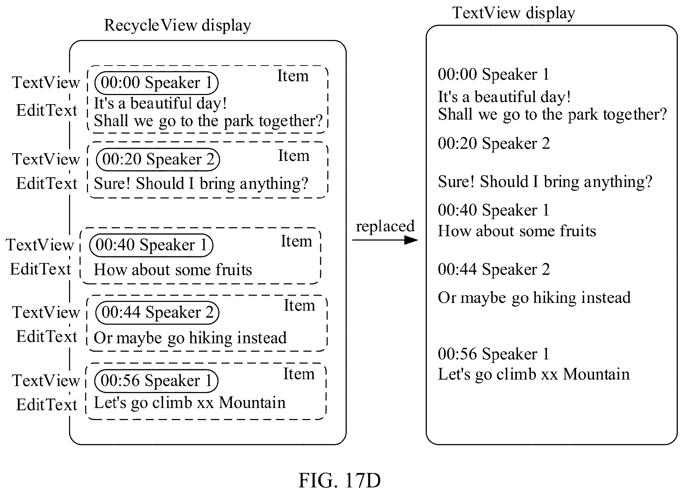

In some embodiments, the speech information is carried by a recycleview. Each speech information is one item. A plurality of items cannot be simultaneously selected. That is to say, the tablet computer cannot select a plurality of pieces of speech information simultaneously across items. The item includes a plurality of view components. The first information and the speech text in the speech information are different view controls in the item. Similarly, view components cannot be selected across lines either. That is to say, information located in different segments (or different types of information in different lines) in one piece of speech information cannot be selected simultaneously. Therefore, to provide diverse text services, after the tablet computer receives a long-press operation, it indicates that the user may have a use requirement of cross-segment selection of speech information. The tablet computer may replace the recycleview component with a textview component (as shown in FIG. 17D). That is to say, all speech information (i.e., the concatenated character string) is located in one textview component. In other words, all the speech information is displayed in the textview in plain text format, so that the user can select a plurality of pieces of speech information at once (for example, perform cross-speaker selection of speech information, that is to say, select the speech information of the different speakers), or selects different types of information (or described as information in different views) in one piece of speech information.

As can be learned from the content described above, the view component in which the first information is located may be a textview, and the view component in which the speech text is located may be an EditView or a textview. Optionally, each of the speaker label and the speech start time in the first information may correspond to one textview, or both the speaker label and the speech start time may correspond to one textview. This is not limited in this application.

S323. The tablet computer displays at least one function control. Each function control in the at least one function control is configured to trigger the tablet computer to perform a corresponding processing operation on the characters in the target character range.

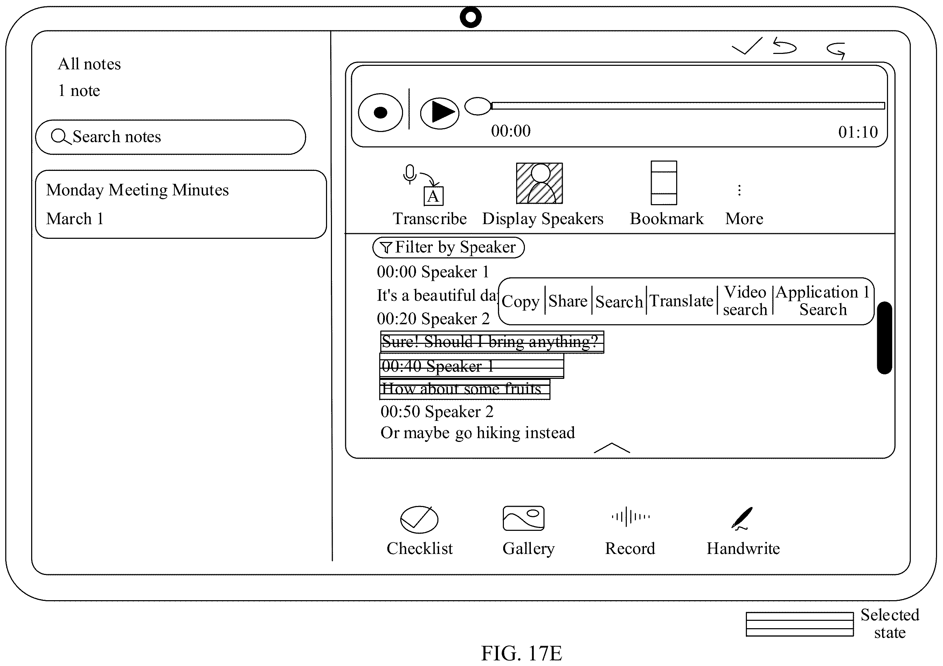

For example, the function control may be a share control, a copy control, a translation control, a search control, a video search control, an application search control, or the like. For example, the tablet computer displays function controls displayed in a bubble form shown in FIG. 17E. "Application 1 Search" shown in FIG. 17E represents searching using selected characters as keywords in an application 1 on the tablet computer.

The share control is configured to trigger the tablet computer to share selected characters, for example, share the selected characters to an application on the tablet computer.

The copy control is configured to trigger the tablet computer to copy selected characters, to enable the user to paste the selected characters to another position as required, so that the user does not need to input the selected characters again.

The translation control is configured to trigger the tablet computer to translate the selected characters into another language.

The search control is configured to trigger the tablet computer to perform a search using selected characters as keywords, for example, search the selected characters in a browser application.

The video control is configured to enable the tablet computer to search a video application on the tablet computer for related videos using selected characters as keywords.

The application search control is configured to enable the tablet computer to search a specific application on the tablet computer for related content using selected characters as keywords.

It should be understood that the function controls listed above are only examples. The function control may alternatively be other types of controls, provided that the tablet computer can be triggered to process a text. This is not limited in this application.

It needs to be noted that when the interface 3 displays a speaker avatar, when displaying speech information in plain text format, the tablet computer no longer displays the speaker avatar.

In some embodiments, after displaying the function controls, when the tablet computer stops displaying the function controls, the tablet computer may replace a textview with a recycleview for a layout component of speech information, that is to say, continue to display speech information according to the layout style shown in FIG. 10A or FIG. 10B, so that the tablet computer may continue to perform corresponding processing based on an operation inputted by the user, for example, edit speech content (for example, a speech text, or a speaker label), achieve the synchronized playback of a recording and a text, or filter the displayed speech information based on a click operation. For example, when receiving a trigger operation (for example, a click operation) in a preset area (for example, a blank area) on the interface 3 by the user, the tablet computer may stop displaying the function controls. For another example, after receiving a click operation on a function control by the user, the tablet computer may stop displaying the function controls, and perform corresponding processing on characters in a target character range, i.e., characters selected by the user, in response to the click operation on the function control. For another example, after the function controls are displayed for specific duration, if the tablet computer still receives no click operation on a function control by the user, the tablet computer may stop displaying the function controls.

It should be understood that compared with a textview, when speech information is carried by a recycleview, the tablet computer can obtain a position (for example, a click position, or a start position or an end position corresponding to a long-press operation) of an operation inputted by the user more accurately, thereby improving the accuracy of processing based on the operation. In addition, when speech information is carried by a recycleview, each piece of speech information corresponds to one item. Therefore, the tablet computer can filter displayed items, that is to say, can filter displayed speech information.

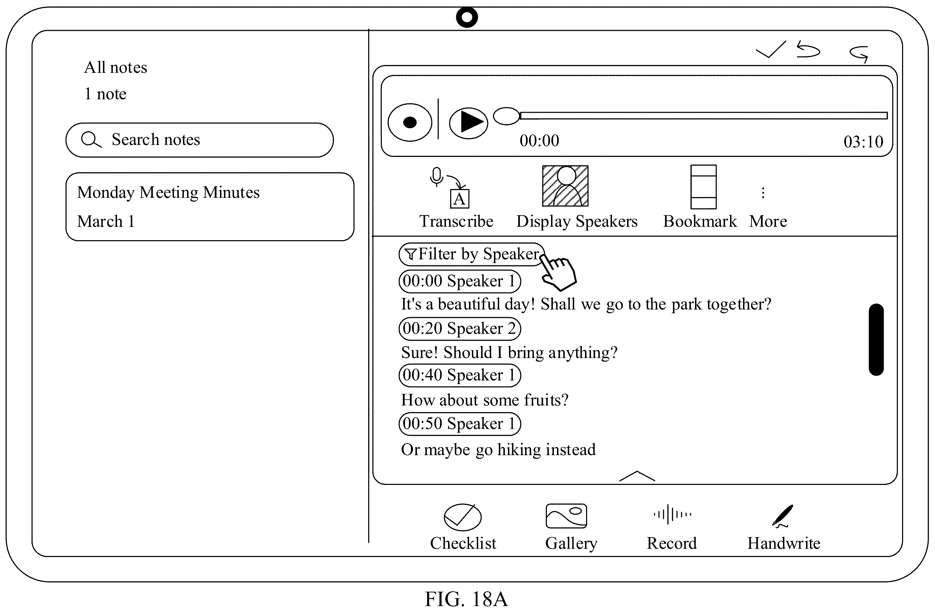

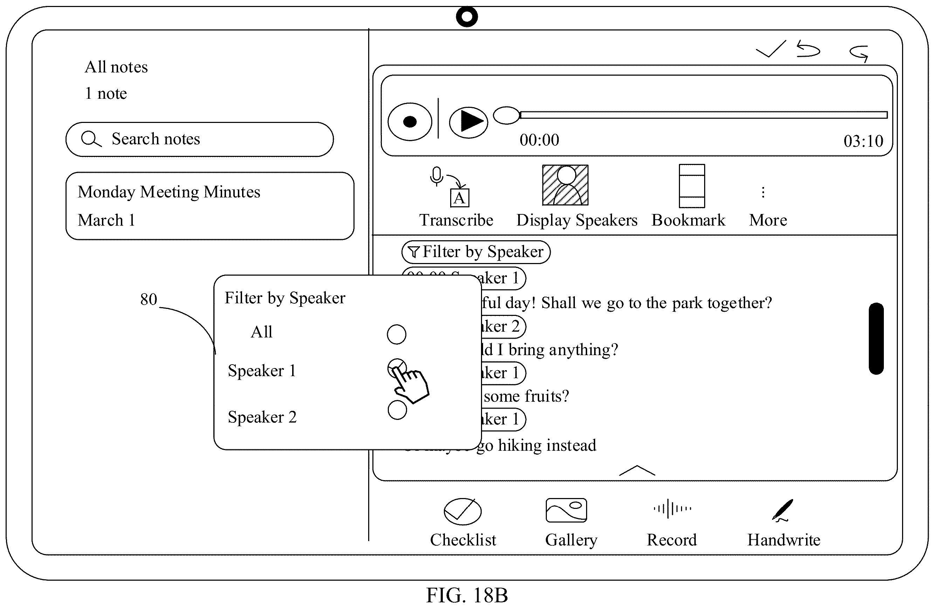

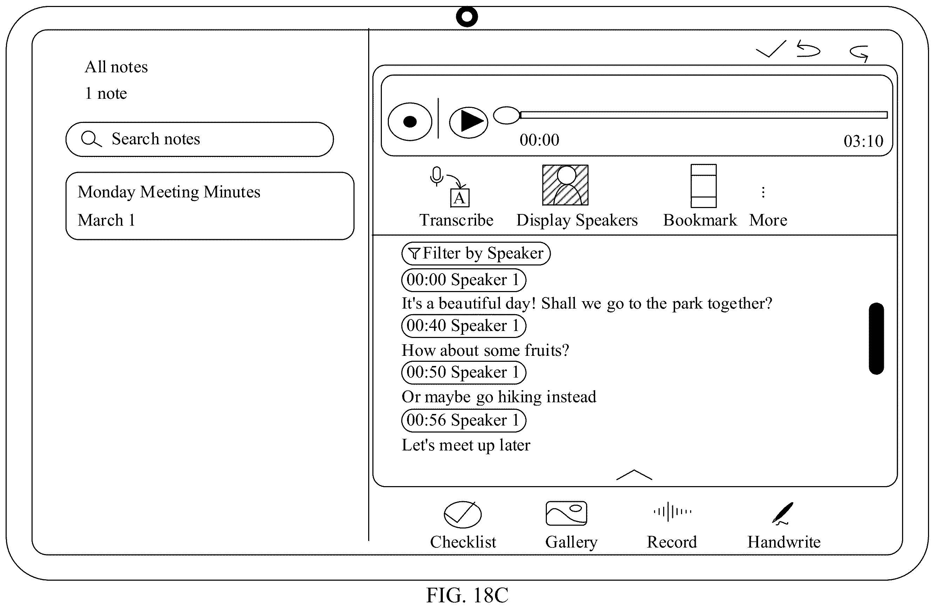

In some embodiments, the tablet computer may perform filtered display, and the tablet computer may receive an operation b on a fourth interface by the user. The operation b is configured to trigger the tablet computer to display speech information corresponding to a target speaker label selected by the user. Next, in response to the operation b, the tablet computer may display only the speech information corresponding to the target speaker label, but no longer displays speech information corresponding to speaker labels other than the target speaker label. For example, the user clicks a filter speaker control shown in FIG. 18A. In response to a click operation on the filter speaker control, the tablet computer displays a speaker option 80 shown in FIG. 18B. After receiving a selection operation of selecting an option of the speaker 1 in the speaker option 80, the tablet computer displays speech information corresponding to the speaker 1 shown in FIG. 18C, thereby filtering of texts of speakers. It should be understood that speech information shown in FIG. 18C is filtered speech information corresponding to the speaker 1. Compared with the speech text shown in FIG. 18A, because speech information corresponding to the speaker 2 is no longer displayed, speech information of the speaker 1 displayed by the tablet computer is increased, and speech information corresponding to the speaker 1 arranged below is moved up and can be directly displayed instead of being displayed only by moving a scroll bar ("Let's meet up later" shown in FIG. 18C).

It needs to be noted that FIG. 18A to FIG. 18C describe a process of filtering speech texts of a speaker when the tablet computer is in the speaker display mode, i.e., a process of displaying speech texts corresponding to a target speaker label selected by the user. When being not in the speaker display mode, the tablet computer also supports filtering of speakers, and displays only speech texts corresponding to the target speaker label.

In this application, the tablet computer supports a speaker filtering function. The user may select as required speech information of a speaker that the user wants to display. The tablet computer can display speech information of a speaker that the user wants, thereby meeting a requirement that the user intends to view only speech information of some speakers.

In some embodiments, when intending to simultaneously select a plurality of pieces of speech information of one speaker, the user may first select a speaker label (i.e., a target speaker label) corresponding to the speaker. The tablet computer displays all speech information corresponding to the target speaker label in response, so that the speech information of the speaker turns into adjacent speech information. Next, the user may input a long-press operation on all the displayed speech information corresponding to the target speaker label as required, so that the tablet computer can simultaneously select a plurality of pieces of speech information of one speaker in response to the long-press operation to perform corresponding processing on the plurality of pieces of speech information of one speaker, thereby meeting a use requirement of the user.

In some embodiments, the processing processes in which the tablet computer receives a click operation and a long-press operation when being in the speaker display mode are described above. The tablet computer may also receive a click operation and a long-press operation when being not in the speaker display mode. The processing processes are similar to the processing process for the click operation and the processing process for the long-press operation described above. A difference only lies in that after a click operation is received, it is not necessary to determine whether the user has clicked a speech text or first information.

In some embodiments, the tablet computer supports an export function for voice data and speech information. The tablet computer receives an operation c. In response to the operation c, the tablet computer exports speech information currently displayed on the tablet computer.

It should be understood that when the tablet computer is not in the speaker display mode, the tablet computer currently displays the speech text in the speech information. In this case, the tablet computer exports a currently displayed speech text in response to the operation c. When the tablet computer is in the speaker display mode, the tablet computer currently displays all content of the speech information. In this case, the tablet computer exports all currently displayed speech information in response to the operation c. For example, it is assumed that the first information includes a speaker label, a speech text, and a speech time. When the tablet computer is in the speaker display mode, the speech information currently displayed by the tablet computer includes the speech text, the speaker label, and the speech time, and the content exported by the tablet computer includes the speech text, the speaker label, and the speech time. When the tablet computer is not in the speaker display mode, the speech information currently displayed by the tablet computer includes the speech text, and the content exported by the tablet computer includes the speech text.

Moreover, when the speech information currently displayed by the tablet computer is speech information corresponding to some speakers, in this case, the exported speech information is also the speech information corresponding to some speakers. When the speech information currently displayed by the tablet computer is speech information corresponding to all speakers, in this case, the exported speech information is also the speech information corresponding to all the speakers, thereby meeting various export requirements of the user.

Optionally, the tablet computer may support export in various formats, that is to say, may save the speech information currently displayed by the tablet computer based on a first target format, that is to say, save currently displayed speech information with a format being the first target format at a target position. The target position may be a default save position, or may be a storage position selected by the user. For example, the first target format may be a file format or an image format. The file format may include at least one of txt format, pdf format, doc format, docx format, and html.

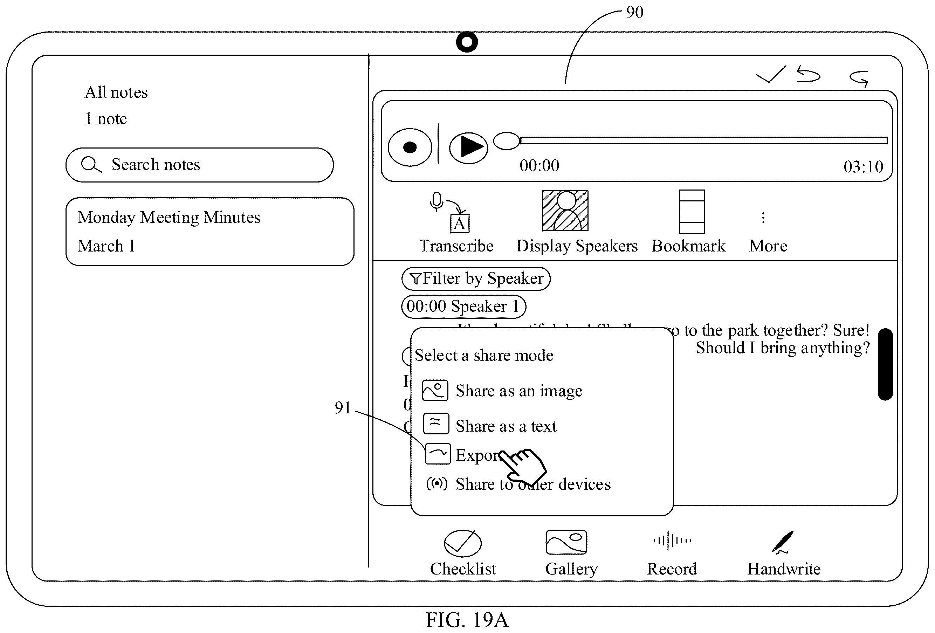

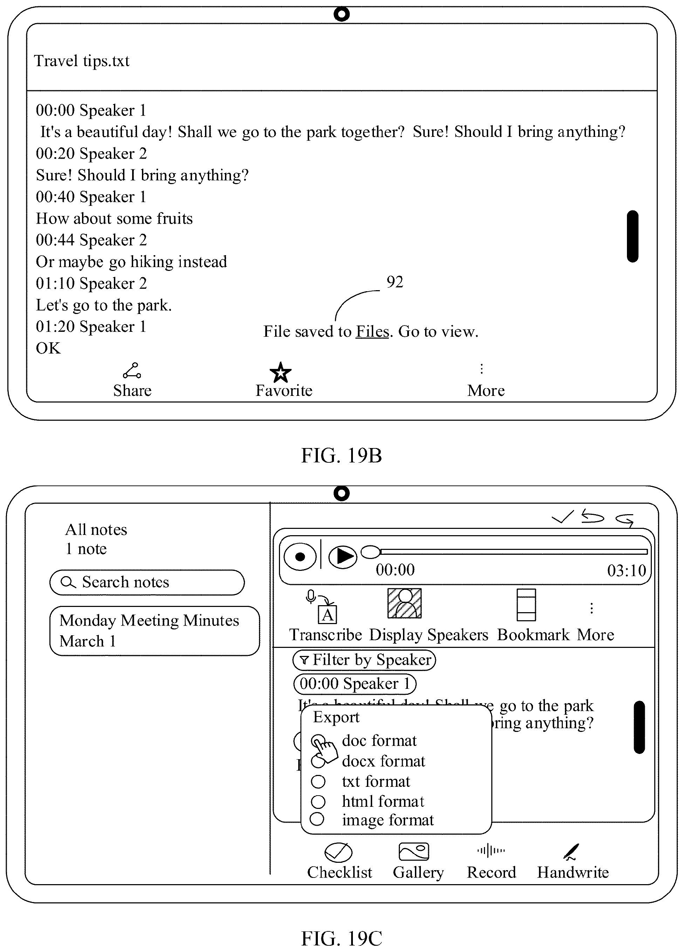

In an example, the first target format may be a default format (or referred to as a default file format). The tablet computer displays an interface 90 shown in FIG. 19A. The interface 90 include a control 91. The control 91 is configured to trigger the tablet computer to save currently displayed speech information. In response to a click operation on the control 91 by the user, the tablet computer save currently displayed speech information at a target position in a default format (for example, a txt format). Moreover, after saving, the tablet computer may further display position prompt information (position prompt information 92 shown in FIG. 19B). The position prompt information prompts the position at which the currently displayed speech information is saved to the user, thereby facilitating viewing by the user.

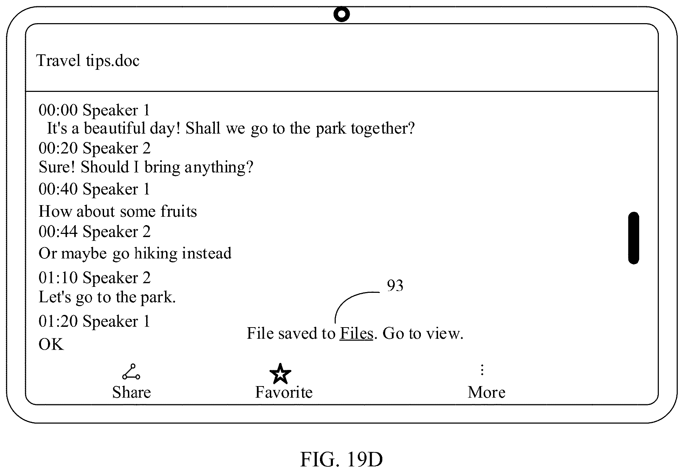

In another example, the first target format may be a format (i.e., a file format) selected by the user. The tablet computer may display at least one first format option. After receiving a selection operation on a target format option in the at least one format option by the user, in response to the selection operation on the target format option, the tablet computer may save currently displayed speech information according to a format (i.e., the first target format) corresponding to the target format option. For example, in response to the click operation on the control 91 in FIG. 19A by the user, the tablet computer displays five first format options, namely, a doc format option, a txt format option, an image format option, an html format option, and a docx format option, shown in FIG. 19C. When the user intends to save the speech information in doc format, the user may click the doc format option. In response to the click operation on the doc format option, the tablet computer may save the currently displayed speech information in doc format. After saving, the tablet computer may further display position prompt information (position prompt information 93 shown in FIG. 19D). The position prompt information prompts a position at which the currently displayed speech information is saved to the user, thereby facilitating viewing by the user.

In some other embodiments, the tablet computer further supports sharing of the speech information currently displayed by the tablet computer in response to a received operation d based on a second target format. For example, the tablet computer share currently displayed speech information with a format being the second target format to an application on the tablet computer.

The second target format is similar to the first target format, and may be a default format or may be a format selected by the user. The second target format is described below in detail in combination with two examples.

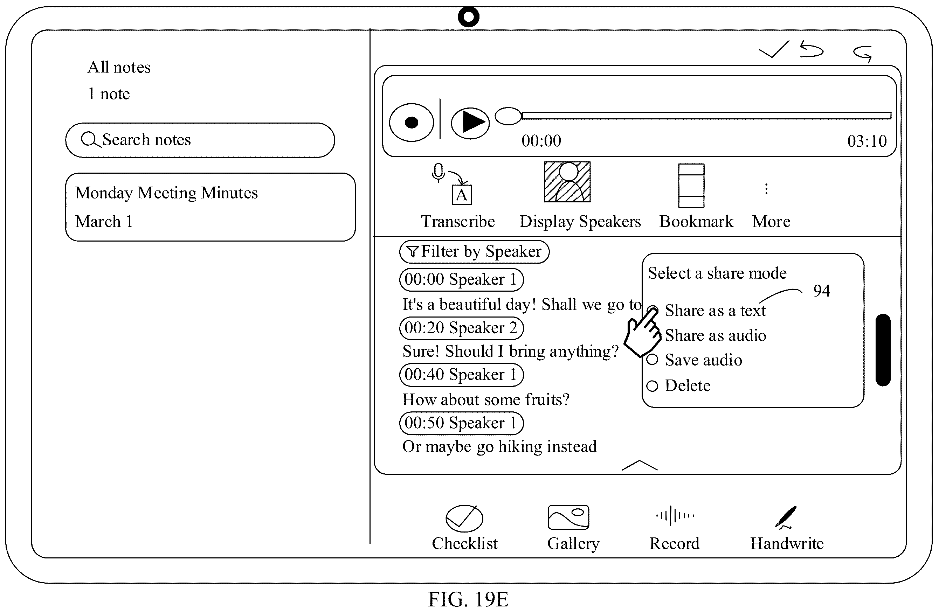

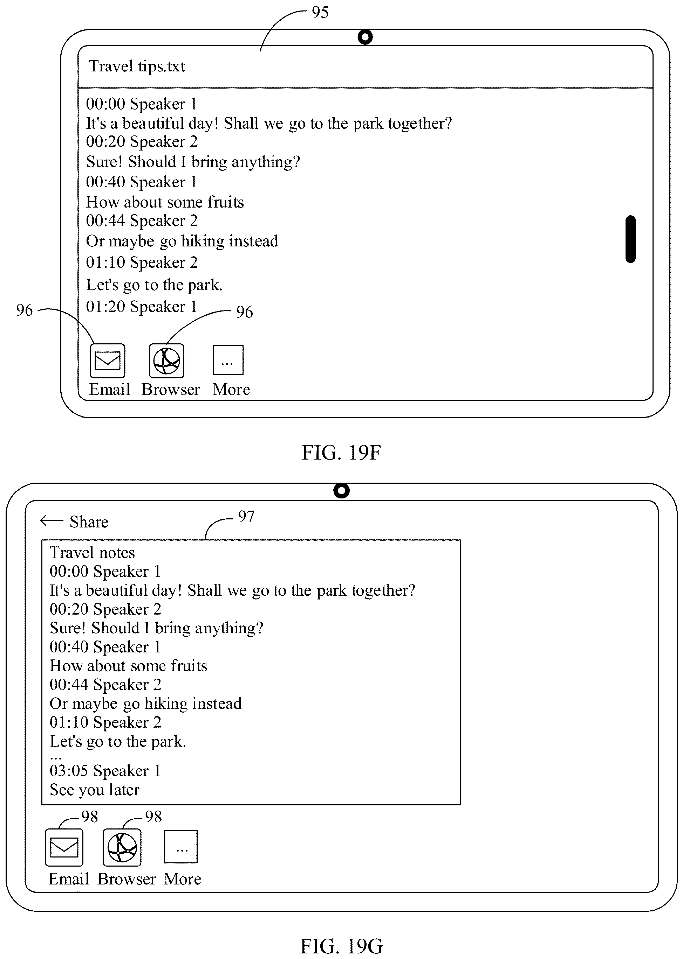

In an example, the second target format is a default format. For example, the tablet computer displays an interface including a third control in response to a sharing operation (for example, a click operation on the share control) inputted by the user. The third control is configured to trigger the tablet computer to display first candidate applications. Next, in response to a selection operation on a first target application in the first candidate applications by the user, currently displayed speech information with a format being the second target format is shared to the first target application. The first candidate applications are applications that can receive a file with a format being the second target format. For example, the tablet computer displays an interface 95 shown in FIG. 19F in response to a click operation on a share control 94 shown in FIG. 19E by the user. The interface 95 displays a format (for example, txt format) of the currently displayed speech information, the speech information, the first candidate applications 96, and the like. The first candidate applications 96 represent applications that can receive a file with a format being txt format, so that the user may select an application as required to perform sharing.

In another example, the second target format is selected by the user. When the user intends to share the currently displayed speech information in an image format, the user may select an image format share option (share shown in FIG. 19A is an image option) displayed by the tablet computer. In response to a selection operation on the image format share option by the user, an interface shown in FIG. 19G is displayed. The interface includes currently displayed speech information 97 with a format being an image format and second candidate applications 98. The second candidate applications 98 represents applications that can receive a file with a format being an image format for the user to select an application to perform sharing.

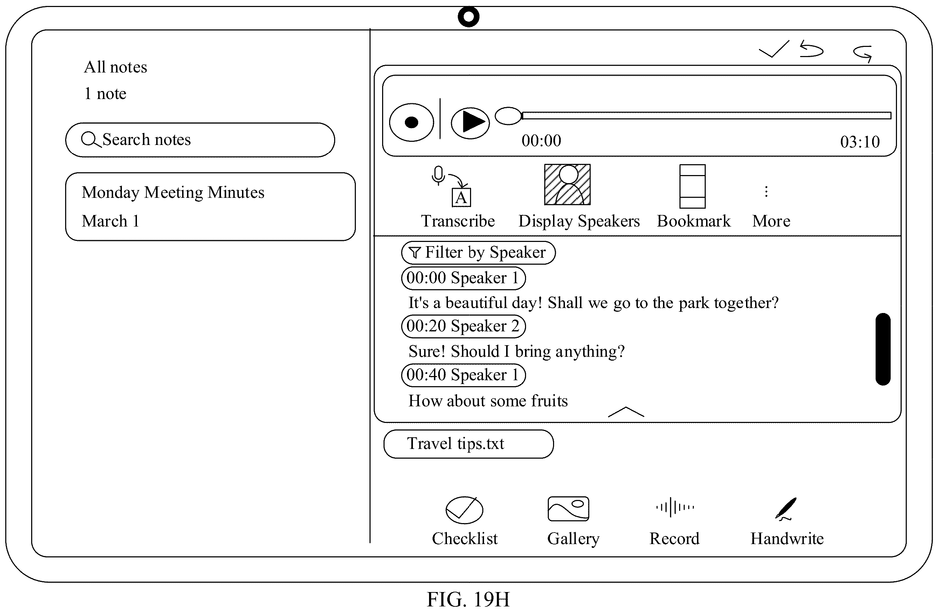

In some embodiments, as shown in FIG. 19H, the tablet computer may display currently displayed speech information with a format being the first target format or the second target format on an interface displaying a recording card (for example, speech information, and various controls).

In some embodiments, the tablet computer may alternatively export or share speech information of all speakers or speech information of some speakers according to selection by the user. For example, in response to the control 91, the tablet computer may display an export speaker option. The export speaker option includes an export all option and at least one export speaker option. The export all option is configured to trigger the tablet computer to export the speech information of all speakers. The export speaker option corresponds one to one to the speaker label. The export speaker option is configured to trigger the tablet computer to export speech information of a speaker corresponding to the speaker option. Similarly, the tablet computer may alternatively export or share content, for example, the speaker label, or the speech time, other than the speech text in the speech information according to selection by the user whether exists.

In some embodiments, the tablet computer may alternatively share the currently displayed speech information to another device in a default file format or a file format selected by the user.

It should be understood that the foregoing sharing and export operations may be performed after the tablet computer stops recording. During recording, the tablet computer typically does not perform exporting and sharing operations on a first voice file or speech information corresponding to the first voice file. The operations such as switching the speaker display mode, filtering speech information of speakers, displaying speech information of all speakers, selecting and editing speech information, and synchronously playing voice data may be performed during recording or may be performed after recording is stopped.

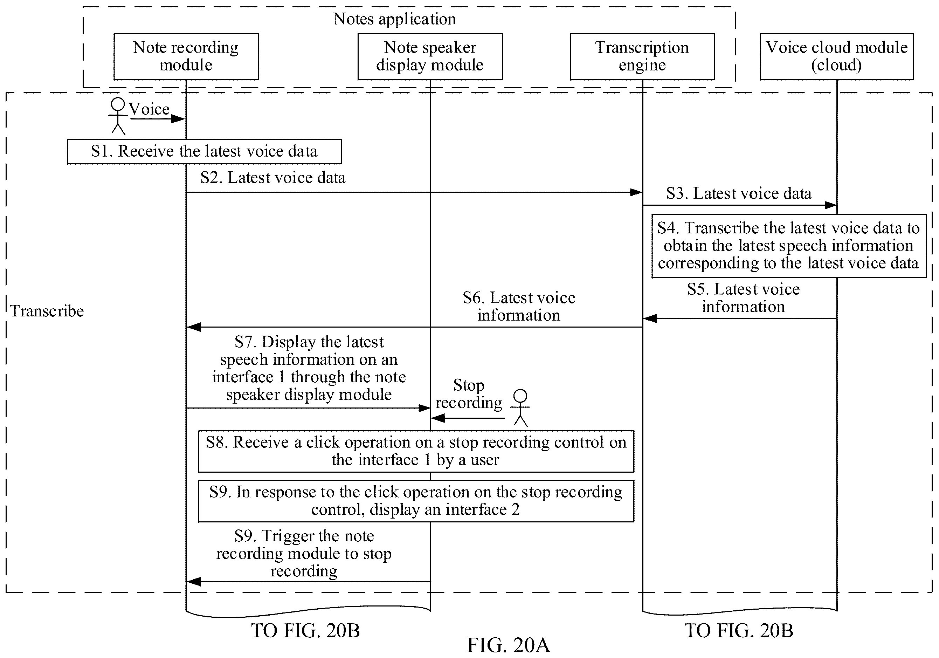

That the electronic device supports the functions such as transcribing voice into speech information, responding to a click operation on speech information by the user, and responding to a selection operation on speech information by the user is described above. Specific implementation processes in which the electronic device achieves the functions of transcribing voice into speech information, responding to a click operation on speech information by the user, and responding to a selection operation on speech information by the user is described below in combination with the software framework shown in FIG. 6. The transcription of voice into speech information may include S1 to S9 shown in FIG. 20A.

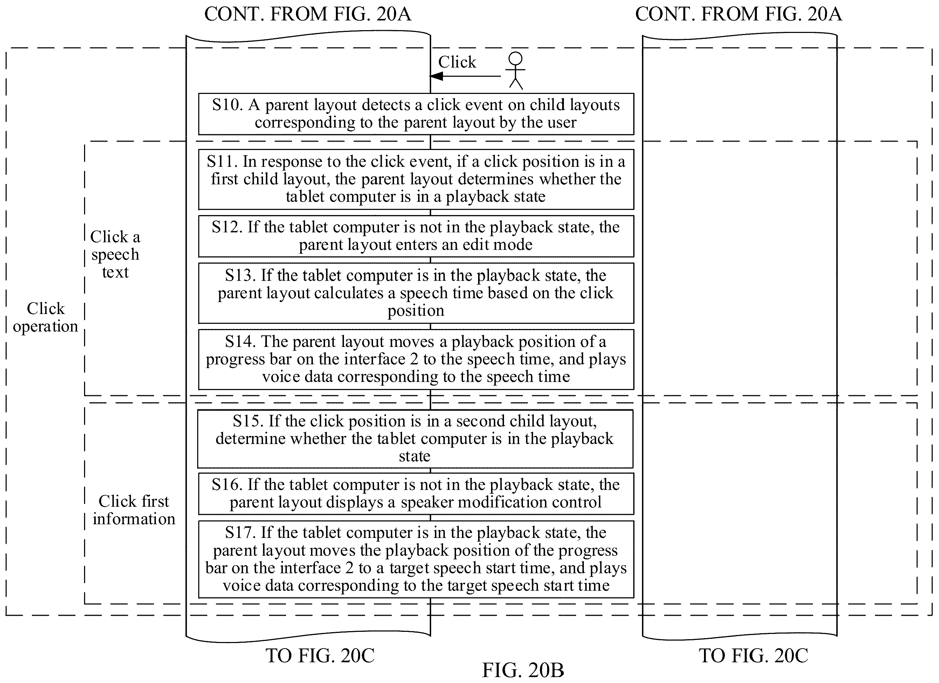

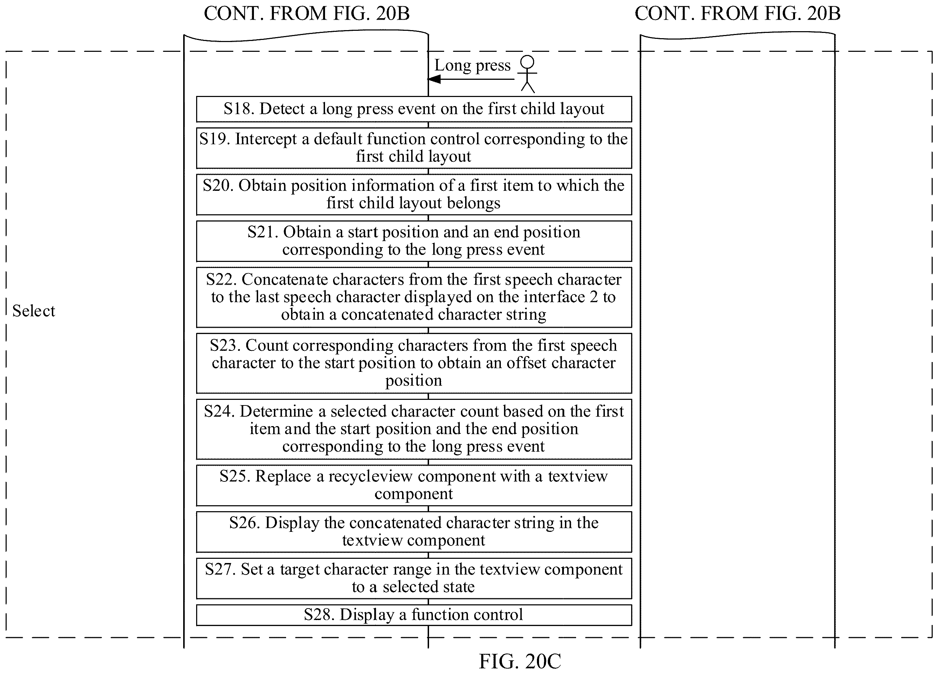

The implementation process of responding to a click operation on speech information by the user may include S10 to S17 shown in FIG. 20B. The implementation process of responding to a click operation on speech information by the user may include S18 to S28 shown in FIG. 20C.

S1. A note recording module receives the latest voice data.

S2. The note recording module sends the latest voice data to a transcription engine.

S3. The transcription engine sends the latest voice data to a voice cloud module.

S4. The voice cloud module transcribes the latest voice data to obtain the latest speech information corresponding to the latest voice data.

S5. The voice cloud module sends the latest speech information to the transcription engine.

For example, the note recording module sends the latest voice data to a cloud (for example, the voice cloud module) through the transcription engine. The cloud transcribes the latest voice data to obtain a text recognition result. The text recognition result includes the latest speech information corresponding to the latest voice data.

In some embodiments, a data structure of the latest speech information in the text recognition result may be {speaker label, speech start time, duration, transcription content}.

S6. The transcription engine sends the latest speech information to the note recording module.

S7. The note recording module displays the latest speech information on an interface 1 through a note speaker display module. The interface 1 further displays historical speech information.

For example, after receiving the text recognition result, the note recording module may extract speech information from the text recognition result, and split and display the speech information through the note speaker display module, that is to say, display speech information corresponding to different speakers in different segments, thereby avoiding the display of the speech information corresponding to different speakers in the same item.

Moreover, the note recording module may further save the extracted speech information at a preset storage position. For example, the note recording module may save the extracted speech information in a target data list file through a note data management module.

S8. The note speaker display module receives a click operation on a stop recording control on the interface 1 by a user.

S9. In response to the click operation on the stop recording control, the note speaker display module triggers the note recording module to stop recording, and displays an interface 2. The interface 2 displays the speech information, a playback control, and a progress bar.

A process of transcribing voice data in real time during recording and stopping recording is described above. A process in which a tablet computer responds to a click operation on the speech information displayed by the tablet computer by the user and a process in which the tablet computer responds to a long-press operation on the speech information displayed by the tablet computer by the user after recording is stopped continue to be described below.

S10. A parent layout in the note speaker display module detects a click event on one of child layouts corresponding to the parent layout by the user. The parent layout is configured to carry one piece of speech information. The child layouts corresponding to the parent layout include a first child layout and second child layout. The first child layout is configured to carry a speech text, and the second child layout is configured to carry first information.

The parent layout corresponds to one item. The first child layout may be the foregoing EditText shown in FIG. 10A or FIG. 10B, and the second child layout may be the foregoing LinearLayout shown in FIG. 10A or FIG. 10B. The parent layout may intercept a click event on a child element (or referred to as a child layout) of the item. After detecting the click event, child layout does not process the click event. Instead, the parent layout to which the child layout belongs processes the click event.

In some embodiments, each item corresponds to one flag bit. In a click event (click event) on the item, response processing is performed according to the flag bit. That is to say, if the user clicks a piece of speech information, a flag bit corresponding to an item corresponding to the speech information is updated from a first flag to a second flag, so that the item corresponding to the speech information responds to the click event. The first flag is different from the second flag. For example, the first flag is 0, and the second flag is 1.

S11. In response to the click event, when a click position is in the first child layout, the parent layout determines whether the tablet computer is in a playback state.

For example, after the parent layout detects a click event, it indicates that the user performs a click operation on the speech information. The parent layout obtains a position clicked by the user, that is to say, obtains a click position corresponding to the click event. When the click position is in the first child layout corresponding to the parent layout, it indicates that the click is located in the speech text carried by the first child layout. The parent layout may determine a use intention of the user based on a playback state of a recording. The playback state of the recording may alternatively be determined through a state of the playback control on the interface 2.

S12. When the tablet computer is not in the playback state, the parent layout enters an edit mode.

S13. When the tablet computer is in the playback state, the parent layout calculates a speech time based on the click position.

S14. The parent layout moves a playback position of the progress bar on the interface 2 to the speech time, and plays voice data corresponding to the speech time.

A case in which the click position corresponding to the click operation is located in a speech text, that is to say, the user clicks the speech text, is described above. A case in which the click position corresponding to the click operation is located in first information, that is to say, the user clicks the first information continues to be described below.

S 15. When the click position is in the second child layout, determine whether the tablet computer is in the playback state.

S16. When the tablet computer is not in the playback state, the parent layout displays a speaker modification control.

S 17. When the tablet computer is in the playback state, the parent layout moves the playback position of the progress bar on the interface 2 to a target speech start time, and plays voice data corresponding to the target speech start time. The target speech start time is a speech start time in speech information to which the click position belongs.

A process in which the tablet computer receives a click operation on speech information displayed by the tablet computer by the user and performs processing based on the click operation is described above. The user may further perform a selection operation on at least one piece of speech information displayed by the tablet computer. A process in which the tablet computer performs processing based on the selection operation continues to be described below.

S18. The note speaker display module detects a long-press event on the first child layout.

S19. The note speaker display module intercepts a default function control corresponding to the first child layout.

S20. The note speaker display module obtains position information of a first item to which the first child layout belongs.

S21. The note speaker display module obtains a start position and an end position corresponding to the long-press event.

For example, an OnTouchListener event listener is set for an EditText, and both a press and a release trigger triggers the event. A position at which a finger touches down and a position at which the finger lifts off every time the EditText is clicked are recorded. When a click has long duration, a click operation is recognized as a long-press event, to achieve listening for a long-press event. Correspondingly, after the user's finger touches down to trigger the event, a position at which the user's finger touches down is recorded to obtain a start position corresponding to the long-press event. Similarly, when the user's finger lifts off to trigger the event, a position at which the user's finger lifts off is recorded to obtain an end position corresponding to the long-press event.

The position information of the first item represents a sequential position of the first item displayed as speech information. The note speaker display module may obtain position (position) information of the first item in onClick of the first item.

In some embodiments, a component, for example, a textview, corresponding to the first information may also listening a long-press event. For example, a listening click event is set for the textview, thereby achieving listening for a long-press event.

S22. The note speaker display module concatenates characters from the first speech character to the last speech character displayed on the interface 2 to obtain a concatenated character string. The first speech character is the first character in the first speech information displayed on the interface 2. The last speech character is the last character in the last speech information displayed on the interface 2.

S23. The note speaker display module counts corresponding characters from the first speech character to the start position to obtain an offset character position.

For example, the offset character position may represent a start index of a currently selected character, i.e., a position of the first selected character.

S24. The note speaker display module determines a selected character count based on the first item and the start position and the end position corresponding to the long-press event.

S25. The note speaker display module replaces a recycleview component with a textview component.

S26. The note speaker display module displays the concatenated character string in the textview component.

S27. The note speaker display module sets a target character range in the textview component to a selected state. The target character range includes the character corresponding to the offset character position and characters within the selected character count succeeding the offset character position.

S28. The note speaker display module displays a function control. The function control is configured to trigger the tablet computer to perform a corresponding processing operation on the selected characters.

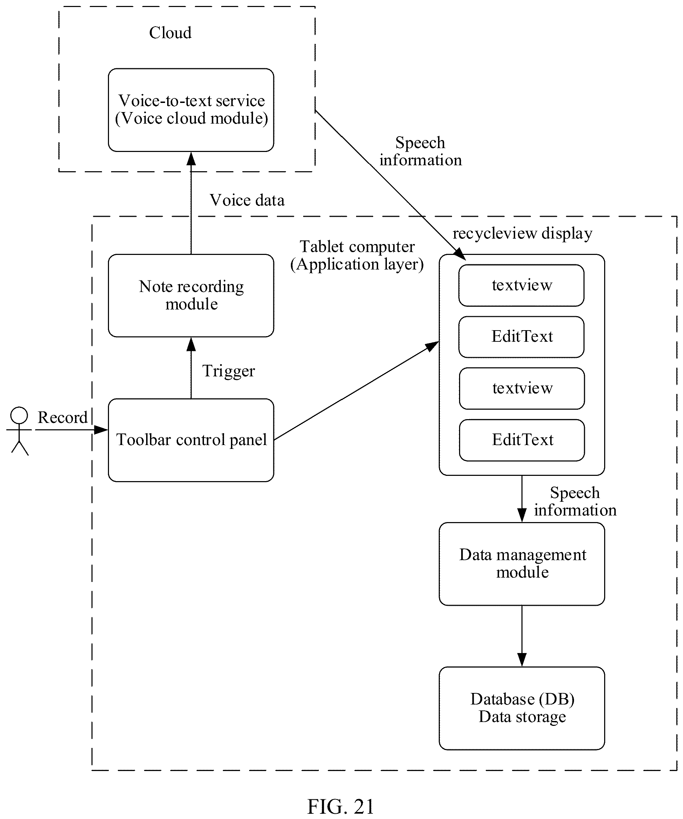

In some embodiments, the notes application further provides a toolbar control panel. The toolbar control panel may be tool controls in the recording card. The toolbar control panel (a toolbar control panel 73 shown in FIG. 17C) is configured to trigger a tablet computer to perform corresponding operations, for example, recording, recording stop, transcription, switching of a speaker display mode, exporting, sharing, speaker filtering, among other operations. The recording card (a recording card 74 shown in FIG. 17C) may further include speech information and the like. As shown in FIG. 21, when the user clicks a recording control, the toolbar control panel triggers the note recording module to perform recording in response to the click operation on the recording control to acquire corresponding voice data. Correspondingly, the tablet computer supports automatic real-time transcription of voice. Therefore, the note recording module may send the voice data to a transcription service (or referred to as the voice cloud module). Next, after transcription succeeds, the transcription service may send speech information to the notes application. After obtaining the speech information, the notes application may display the speech information on the recycleview component, and store data through a data management module, thereby achieving the storage of the speech information.

The transcription service may be located at the cloud, as shown in FIG. 21, or the transcription service is located locally on the tablet computer. This is not limited in this application.

It needs to be noted that tool controls included in a toolbar control panel 73 shown in FIG. 17C are only an example. This is not limited in this application.

In some embodiments, when the note speaker display module receives a click operation on a save control (a save control 76 shown in FIG. 17C), a currently edited notes may be saved by using the note data management module, thereby saving related data (for example, speech information) on a recording card displayed on a current interface.

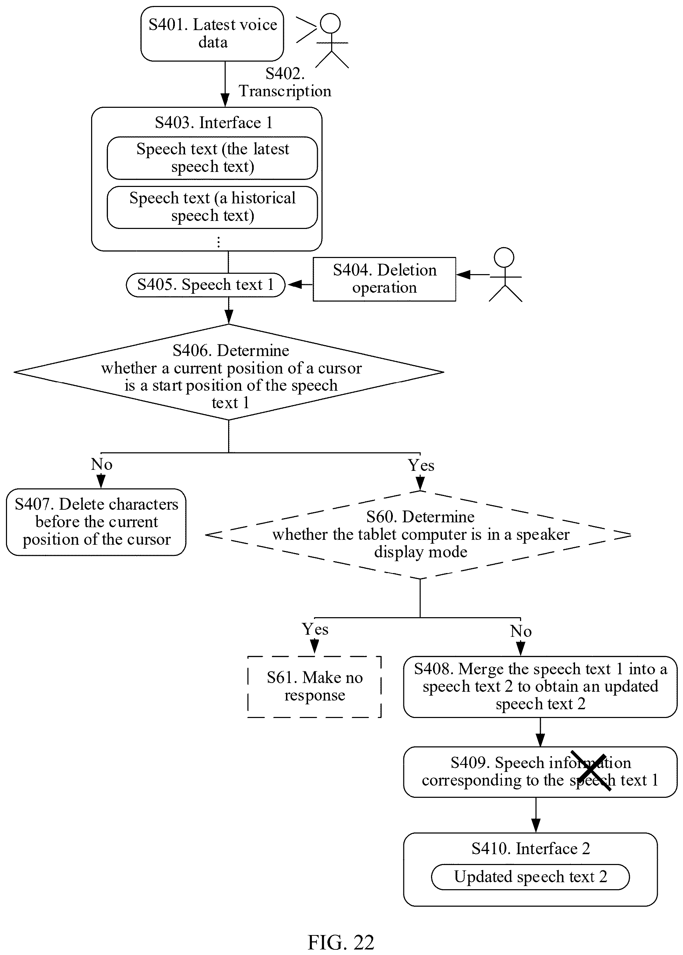

This application provides a voice processing method. After starting recording, an electronic device may transcribe voice data into a text in real time. After receiving a deletion operation inputted by a user, the electronic device may determine a requirement of the user based on a position of a cursor in a speech text, to perform corresponding processing on the speech text in which the cursor is located, thereby meeting a use requirement of the user. The voice data may be a recording in a recording note scenario, a recording in a recording application scenario, a recording (or referred to as a voice file) in a call recording scenario, or the like described above. Certainly, the voice data may be recording data generated in another scenario. The following uses an example in which the electronic device is a tablet computer and the application scenario is a recording note scenario, i.e., a notes application, and describes, with reference to the accompanying drawings, in detail a voice processing method provided in embodiments of this application. As shown in FIG. 22, the method may include steps S401 to S410.

S401. In a recording process, the tablet computer receives the latest voice data.

S402. The tablet computer transcribes the latest voice data to obtain the latest speech information.

S403. The tablet computer displays the latest speech text on an interface 1. The interface 1 further displays a historical speech text.

S404. The tablet computer receives a deletion operation.

S405. In response to the deletion operation, the tablet computer uses a text in which a cursor is currently located as a speech text 1.

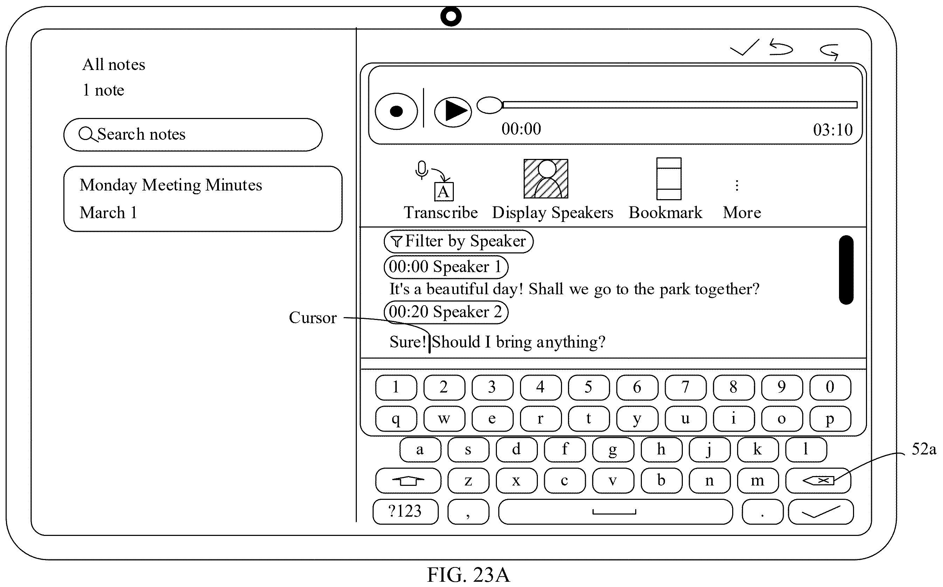

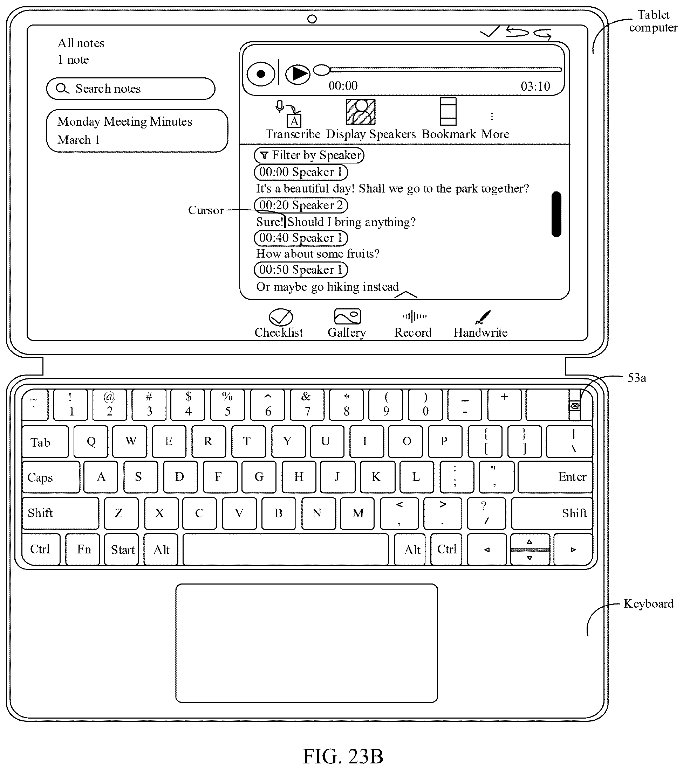

In some embodiments, the deletion operation represents an input operation of a delete key in an input method. The user inputs the delete key (a delete key 52a in a virtual keyboard shown in FIG. 23A) in one speech text in a plurality of speech texts displayed on the interface 1 of the tablet computer. The speech text is the speech text 1, and the input operation of the delete key is the deletion operation. Moreover, a delete key 52a shown in FIG. 23A is only an example. The tablet computer may be further externally connected to a keyboard. The delete key may be a delete key 53a on a keyboard shown in FIG. 23B. The delete key 53a shown in FIG. 23B may also be referred to as a backspace key (backspace).

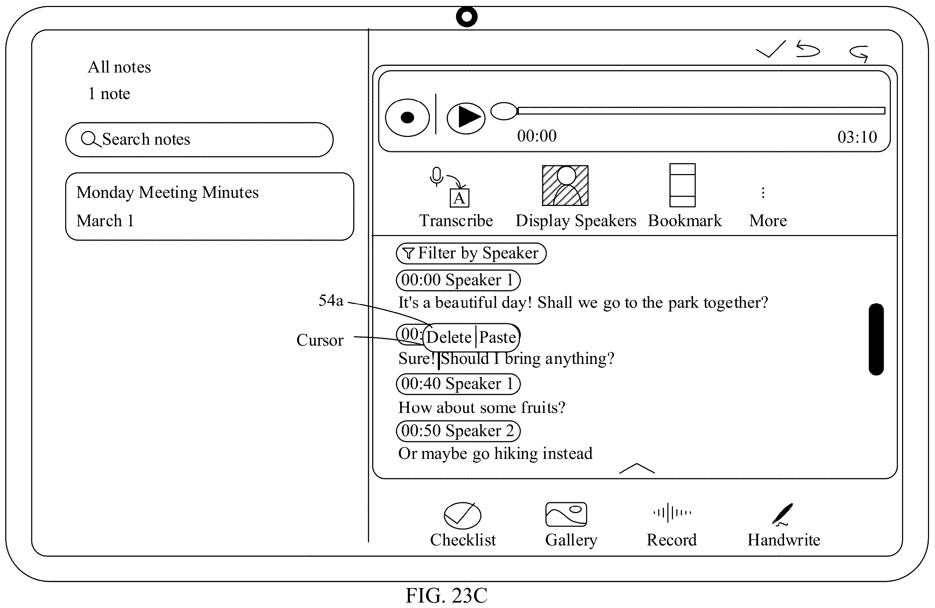

In some other embodiments, the deletion operation may be a trigger operation (for example, a click operation) on a delete control. When the user intends to merge one speech text, for example, the speech text 1, into another speech text, for example, a speech text 2, when the position of the cursor on the tablet computer is a position of the speech text 1, the user may click the delete control (a delete control 54a shown in FIG. 23C) displayed by the tablet computer. An operation of clicking the delete control by the user is the deletion operation. It should be understood that if the position of the cursor on the tablet computer is not in the speech text 1, the user may click a position (for example, an initial position) in the speech text 1. The tablet computer moves the cursor to the corresponding position in response to the click operation.

Optionally, the delete control may be displayed by the tablet computer in response to a specific trigger operation inputted by the user. For example, the user long-presses a screen at the position of the cursor over a specific period of time, or clicks the screen continuously and repeatedly.

In some other embodiments, the deletion operation may be an input operation of a second predefined gesture. When the user intends to merge one speech text into another speech text, the user may input the second predefined gesture on the tablet computer. The tablet computer uses the speech text in which the cursor is located as the speech text 1 in response to the second predefined gesture.

The speech text 2 is a speech text that is currently displayed on the interface 1, is adjacent to the speech text 1, and is earlier than the speech text 1.

In some embodiments, the deletion operation may be performed after the tablet computer stops recording. The tablet computer stops recording in response to a recording stop operation and displays a second interface. The second interface displays a speech text and a start recording control (or referred to as a second control). The start recording control is configured to trigger the tablet computer to continue recording.

A speech text displayed on the second interface includes all speech texts obtained during current recording. The playback control can trigger the tablet computer to play voice data recorded during recording.

In some embodiments, when the tablet computer is not in a speaker display mode, the second interface displays the speech text in speech information, but does not display other information such as a speaker label and a speech start time in the speech information.

When the tablet computer is in the speaker display mode, the second interface displays the speech text in the speech information, and also displays the speaker label in the speech information.

For example, the recording stop operation may a click operation on a pause recording control (or referred to as a first control) by the user.

S406. The tablet computer determines whether a current position of the cursor is a start position of the speech text 1.

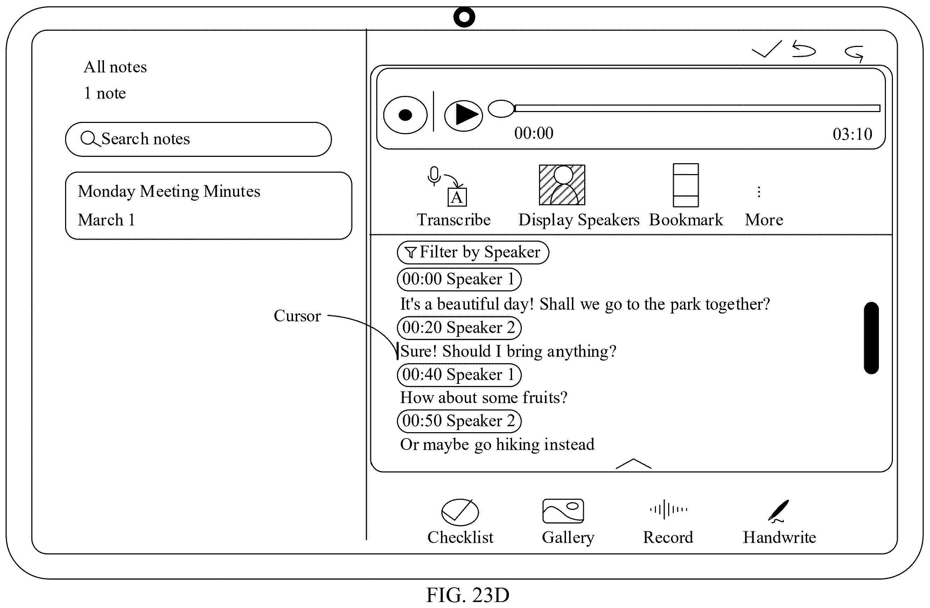

The start position of the speech text 1 represents a position before the first character in the speech text 1. The position of the cursor shown in FIG. 23D is a start position of the speech text (i.e., the speech text 1) in which the cursor is located, i.e., a position at the beginning of a line.

In the embodiments of this application, after receiving the deletion operation, the tablet computer determines, based on the current position of the cursor, whether to merge speech texts, that is to say, determines whether the deletion operation is actually to trigger the merging of speech texts. In other words, the tablet computer determines, based on the current position of the cursor, which type of operation the deletion operation is to trigger.

When the current position of the cursor is not in the start position of the speech text 1, it indicates that the user may intend to delete one character preceding the current position of the cursor instead of intending to merging the speech text 1 into the speech text 2. That is to say, it indicates that the deletion operation and is not to trigger the merging of speech texts, and the tablet computer may perform S407.

When the current position of the cursor is the start position of the speech text 1, it indicates that the cursor currently precedes the first character in the speech text 1. That is to say, it indicates that no character in the speech text 1 exists before the cursor. Instead of intending to delete one character preceding the current position of the cursor, the user intends to merge the speech text 1 into the speech text 2 (i.e., a speech text that is adjacent to the speech text 1 and is earlier than the speech text 1 on the current interface). That is to say, it indicates that the deletion operation is actually to trigger the merging of speech texts. The tablet computer may perform S408.

In some embodiments, the process of determining whether a current position of the cursor is a start position of the speech text 1 may include: The tablet computer may determine whether a character in the speech text 1 exists before the current position of the cursor. If a character in the speech text 1 exists before the current position of the cursor, it indicates that the current position of the cursor is not in the start position of the speech text 1. If a character in the speech text 1 does not exist before the current position of the cursor, it indicates that the current position of the cursor is not in the start position of the speech text 1.

S407. The tablet computer deletes characters before the current position of the cursor.

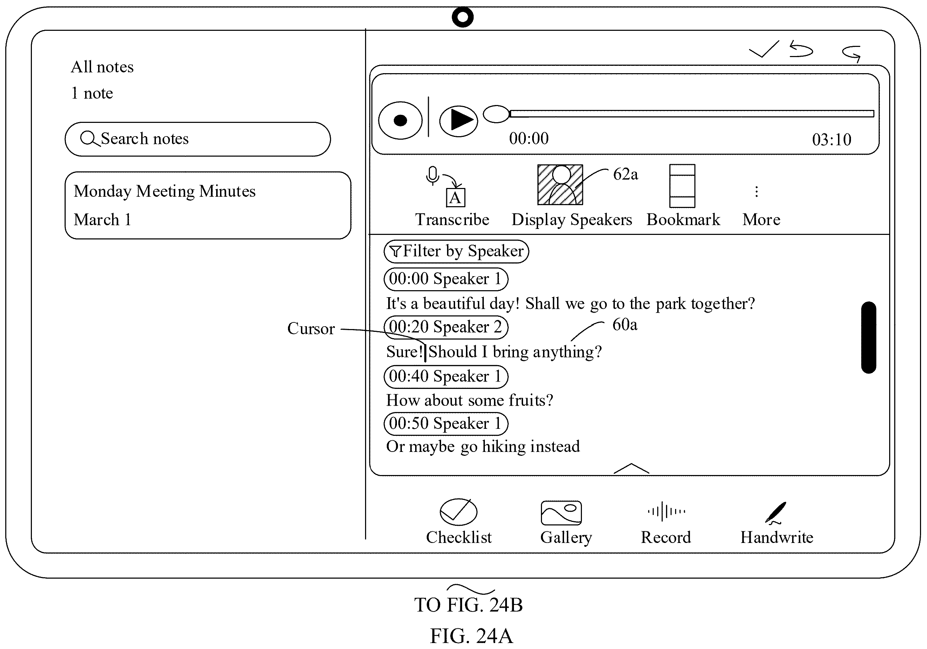

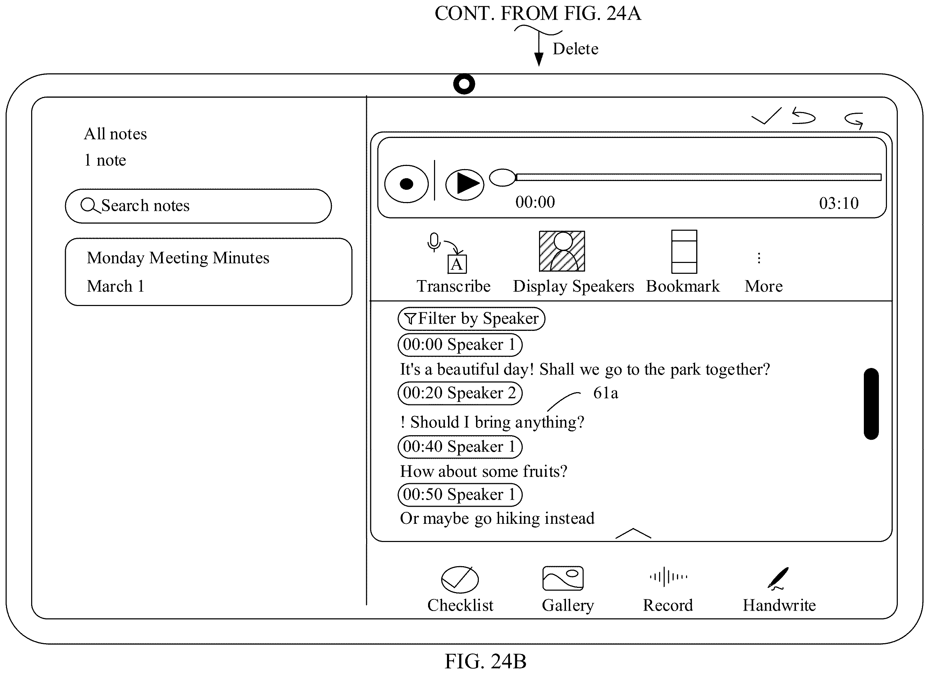

For example, the tablet computer may delete one character that is before the current position of the cursor and is adjacent to the cursor. After the deletion is completed, the latest speech text is displayed. For example, as shown in FIG. 24A, the cursor on the tablet computer is currently located in the middle of "Su" in a speech text 60a. "S" is one character that is located before the current position of the cursor and is adjacent to the cursor. Therefore, the tablet computer may delete may display a speech text 61a shown in FIG. 24B.

S408. The tablet computer merges the speech text 1 into the speech text 2 to obtain an updated speech text 2. The speech text 2 is a previous speech text of the speech text 1 displayed on the interface 1.

In some embodiments, the speech text and the speaker label in the speech information may be presented in different views (for example, textviews). When the tablet computer is in the speaker display mode, a textview (i.e., a second textview) in which the speech text 2 is located and a textview (i.e., a first textview) in which the speech text 1 is located are further separated by a view (for example, a third textview) in which the speaker label is located. Assuming that the speech text 1 is moved according to the method in step S407 in response to the deletion operation, the speech text 1 is only added after a view in which the speaker label is located. The intention of the user is to add the speech text 1 in a first textview to a second textview. Therefore, the tablet computer cannot directly merge the speech text 1 into the speech text 2.

Correspondingly, before S408 is performed, the tablet computer may determine whether speech texts can be merged, that is to say, may perform S60 in which the tablet computer determines whether the tablet computer is in the speaker display mode shown in FIG. 22. When the tablet computer is in the speaker display mode, it indicates that the tablet computer needs to display information such as the speaker label. Therefore, the tablet computer cannot directly add the speech text 1 in the first textview to the second textview. The tablet computer may perform S61, that is to say, does not respond to the current deletion operation. When the tablet computer is not in the speaker display mode, it indicates that no other view exists between the first textview and the second textview. Therefore, the tablet computer may add the speech text 1 to the speech text 2 to obtain updated speech text 2, that is to say, obtain updated speech information 2. The tablet computer may perform S408, thereby supporting quick cross-time segment consolidation of speech texts.

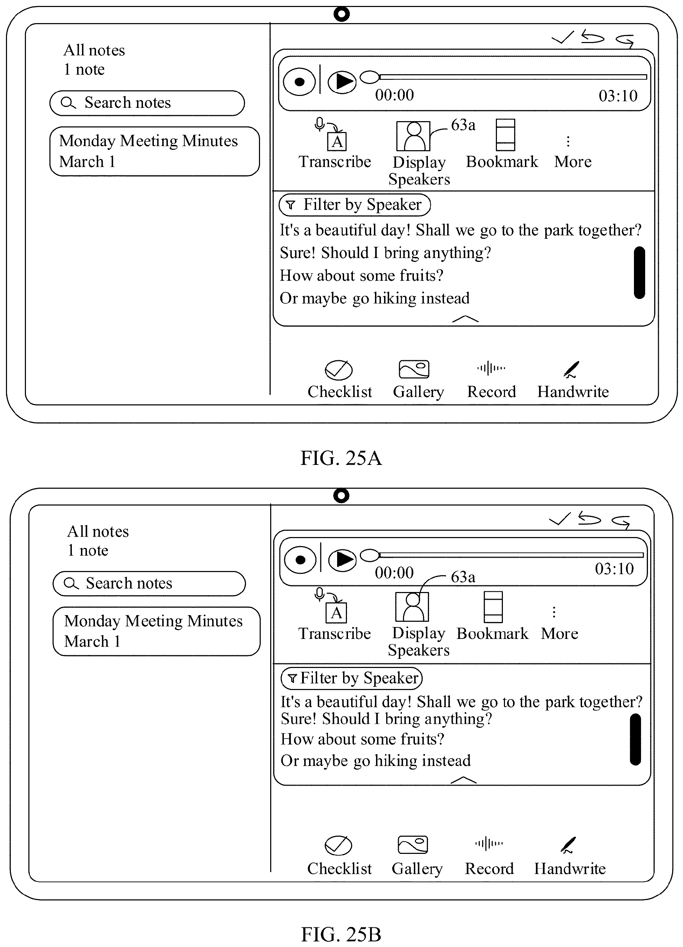

The tablet computer being not in the speaker display mode represents that the tablet computer only displays speech texts (as shown in FIG. 25A) in the speech information, but does not display content, for example, the speaker label and a speech time, other than the speech texts. Correspondingly, the tablet computer being in the speaker display mode represents that the tablet computer displays the speech texts in the speech information and also displays the remaining content in the speech information, that is to say, displays all content of the speech information. For example, the speech information includes the speaker label, the speech time, and the speech text. When the tablet computer displays the speaker label, the speech time, and the speech text (as shown in FIG. 8E), the tablet computer is in the speaker display mode.

In some embodiments, when being in the speaker display mode, the tablet computer receives a click operation (or referred to as a second operation) on a stop speaker display control on the interface 1 by the user, the tablet computer may exit the speaker display mode (or described as displaying a fifth recording card) in response to the click operation, that is to say, display only the speech text in the speech information and cancel display of information other than the speech text in the speech information, for example, cancel display of the speaker label (as shown in FIG. 25A). When being not in the speaker display mode, the tablet computer receives a click operation on a display speaker control by the user. The tablet computer may switch to the speaker display mode in response to the click operation, to achieve switching of speaker states.

It needs to be noted that the stop speaker display control and the display speaker control may be different controls or may be the same control. Specifically, the tablet computer displays all content of the speech information, the control is in the speaker display mode, and the control may be used as the stop speaker display control. A display speaker control 62a shown in FIG. 24A is in a speaker display stop mode, and the control may be used as the display speaker control. The tablet computer displays only the speech text in the speech information, the control is in the speaker display mode, and the control may be used as the stop speaker display control. The display speaker control 63a shown in FIG. 25A is in a speaker display stop mode, and the control may be used as the display speaker control.

In some embodiments, the merging the speech text 1 into the speech text 2 by the tablet computer may represent adding the speech text 1 to a specific position of the speech text 2. In an example, generally, speech content has a sequential order. A speech time corresponding to the speech text 1 is later than a speech time corresponding to the speech text 2. Therefore, the tablet computer may add the speech text 1 to an end position of the speech text 2. The end position of the speech text 2 represents the position of the last character in the speech text 2, that is to say, at the position of the end of a line, to match the order of actual speech content. For example, the speech text 1 is "Sure! Should I bring anything?" in shown in FIG. 25A. The speech text 2 is "It's a beautiful day! Shall we go to the park together?". The tablet computer adds the speech text 1 to the end position of the speech text 2 (as shown in FIG. 25B).

In another example, the tablet computer may add the speech text 1 before an initial position of the speech text 2, thereby meeting a requirement of adjusting the order of speech content by the user. For example, the user finds that speech content corresponding to the speech text 1 should actually precede speech content corresponding to the speech text 2. Therefore, the user may input a deletion operation. The tablet computer adds the speech text 1 to the initial position of the speech text 2 based on the deletion operation. Certainly, the tablet computer may alternatively add the speech text 1 to another position in the speech text 2, for example, add the speech text 1 to a middle position of the speech text 2. This is not limited in this application.

The specific position may be a default position. For example, an end position of a speech text is used as the default position. Certainly, the tablet computer may alternatively provide at least one position option. The user may select a position option according to an actual requirement. After obtaining the position option (i.e., target position option) selected by the user, the tablet computer adds the speech text 1 to a position corresponding to a target position option of the speech text 2. For example, the position option selected by the user is an end position option. In this case, the tablet computer adds the speech text 1 to the end position of the speech text 2.

S61. The tablet computer does not respond.

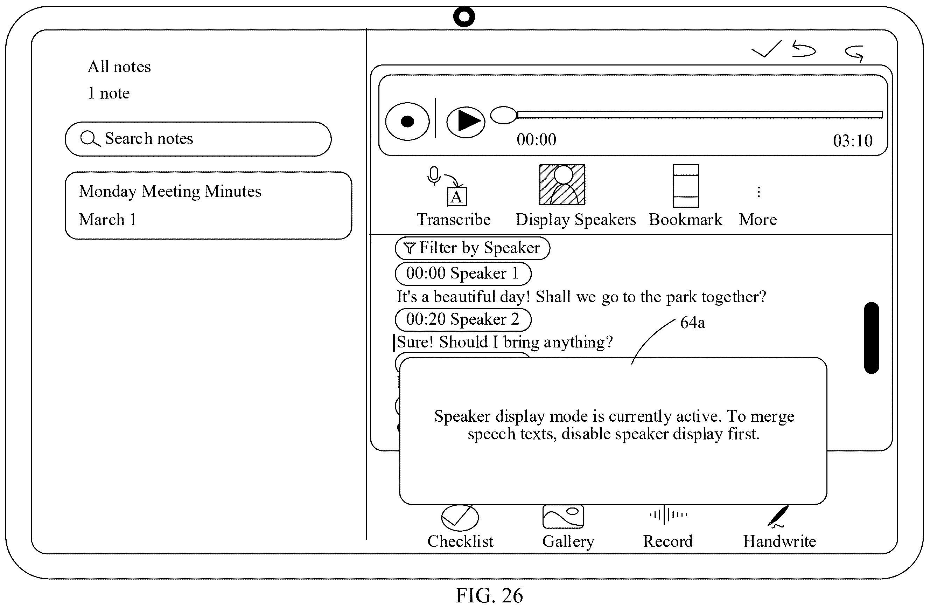

In the embodiments of this application, when the tablet computer is in the speaker display mode, the tablet computer may not merge the speech text 1 into the speech text 2. In some embodiments, to prevent the user from confusion when the tablet computer does not respond after the deletion operation is inputted, the tablet computer may display first prompt information. The first prompt information is configured for prompting the user that the display of speakers needs to be canceled (for example, the tablet computer display first prompt information 64a shown in FIG. 26).

It may be understood that regardless of whether the tablet computer is in the speaker display mode, various edit operations such as deletion, modification, and adding characters may be performed on one speech text.

In some embodiments, when the interface 1 displays speaker labels, it indicates that the tablet computer is in the speaker display mode. When the user intends to merge speech texts, the user may input a second operation on the interface 1. The tablet computer may cancel the display of speaker labels in response to the second operation, to facilitate the merging of different speech texts by the user, thereby meeting a requirement of merging speech texts by the user. The interface 1 with the display of speaker labels canceled may be used as an interface 3. Next, the user may input a deletion operation. The tablet computer adds the speech text 1 to the speech text 2 in response to the deletion operation when the current position of the cursor is the start position of the speech text 1.

In some embodiments, after the tablet computer receives the deletion operation, if the tablet computer is in the speaker display mode but the cursor is currently in the start position of the speech text 1, the tablet computer may automatically exit the speaker display mode, and merge the speech text 1 into the speech text 2, to achieve the merging of speech texts, thereby meeting an operation requirement of the user.

In some embodiments, the speech text 2 and the speech text 1 may be two speech texts with adjacent speech times. That is to say, the speech text 1 and the speech text 2 are directly adjacent. In one case, a second speaker label corresponding to the speech text 2 is different from a first speaker label corresponding to the speech text 1. When the user perceives that the speech text 1 is actually not speech of the speaker 1 but instead is speech of the speaker 2 corresponding to the speech text 2, that is to say, when an error occurs in voiceprint recognition, the user may perform a deletion operation on the speech text 1. The tablet computer responds to the deletion operation. If the cursor is at the start position of the speech text 1, the speech text 1 may be merged into the speech text 2. A speaker label corresponding to a speech text 2 (i.e., an updated speech text 2) merged with the speech text 1 is a label of the speaker 2, to achieve the modification of speakers, thereby improving the accuracy of transcription, so that voice can be represented more accurately.

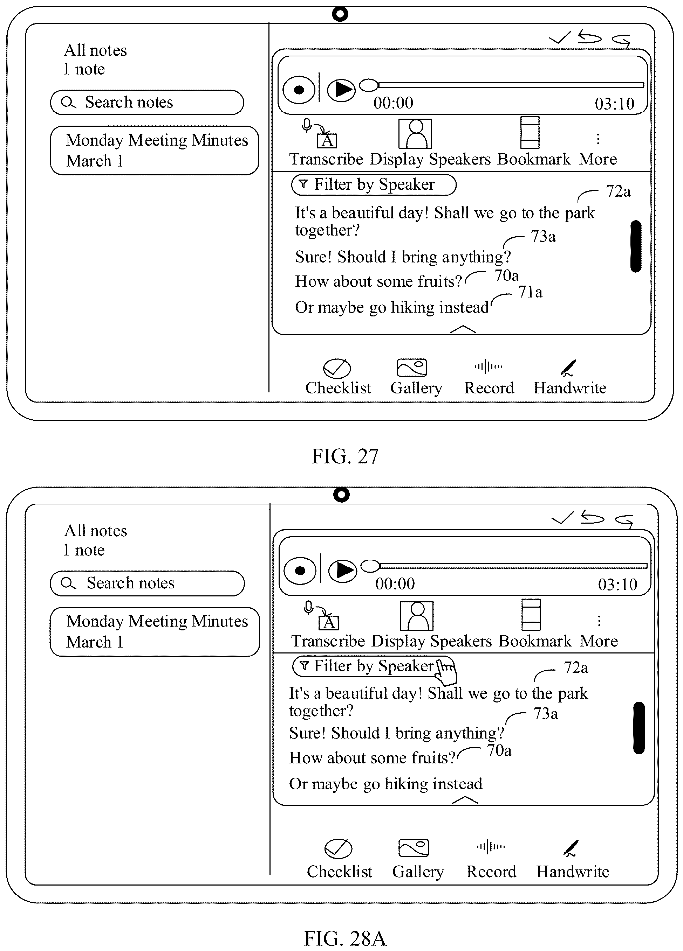

In another case, the second speaker label corresponding to the speech text 2 is the same as the first speaker label corresponding to the speech text 1. That is to say, the tablet computer further supports the merging of two directly adjacent speech texts of the same speaker (a speech text 70a of the speaker 1 and a speech text 71a of the speaker 1 shown in FIG. 27 are directly adjacent). In this case, after the tablet computer receives a deletion operation, if the current position of the cursor is a start position of a speech text 71a, it indicates that the user intends to merge the speech text 71a into a speech text 70a. The tablet computer may merge the speech text 71a into the speech text 70a. Optionally, when the current position of the cursor is a start position of the speech text 71a and the tablet computer is not in the speaker display mode, the tablet computer may merge the speech text 71a into the speech text 70a, so that when the user perceives an association between two speech texts of a speaker, the two speech texts may be merged into one speech text.

In some other embodiments, the second speaker label corresponding to the speech text 2 is the same as the first speaker label corresponding to the speech text 1. However, the speech text 1 and the speech text 2 are indirectly adjacent. That is to say, a speech text (for example, a speech text 3) of another speaker actually further exists between the two adjacent speech texts. That is to say, a speech time corresponding to a speech text 3 lies between that of the speech text 1 and that of the speech text 2. For example, the user perceives an association between the speech text 70a and a speech text 72a of the speaker 1 shown in FIG. 27. The user intends to merge the speech text 70a into the speech text 72a. However, the speech text 70a and the speech text 72a are separated by a speech text 73a of the speaker 2. Therefore, the tablet computer cannot directly merge the speech text 70a of the speaker 1 into the speech text 72a of the speaker 1. The tablet computer may first filter speakers and display only speech texts of the speaker 1, so that two indirectly adjacent speech texts of the speaker 1 turns into directly adjacent speech texts, thereby performing the merging of speech texts. The speech text 70a of the speaker 1 may be considered as the speech text 1, the speech text 72a of the speaker 1 may be considered as the speech text 2, and the speech text 73a of the speaker 2 may be considered as the speech text 3 (or referred to as a third speech text).

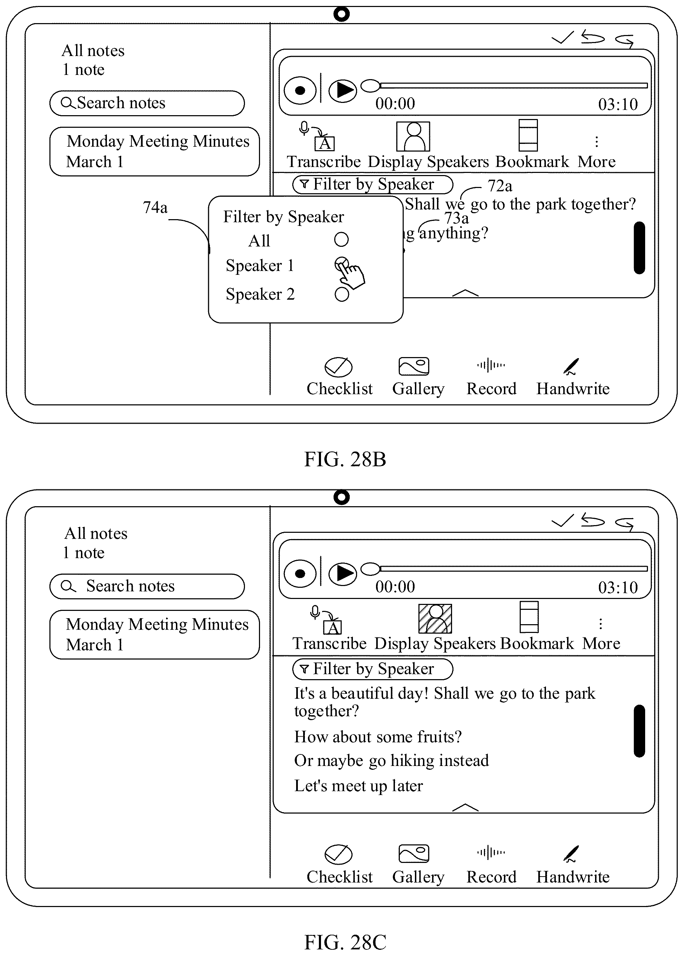

Specifically, the tablet computer may receive an operation B (or referred to as a third operation) on an interface 4 by the user. The operation B is configured for triggering the tablet computer to display speech information of a target speaker label (for example, the first speaker label) selected by the user. Next, in response to the operation B, the tablet computer may display only the speech information corresponding to the first speaker label (or described as updating a currently displayed recording card, the updated recording card display only the speech information corresponding to the first speaker label, and the updated recording card may be a sixth recording card), but no longer displays speech information corresponding other than the first speaker label, so that the speech text 1 and the speech text 2 are displayed adjacently. For example, the user clicks a filter speaker control shown in FIG. 28A. In response to a click operation on the filter speaker control, the tablet computer displays a speaker option 74a shown in in FIG. 28B. After receiving a selection operation of selecting an option of the speaker 1 in the speaker option 74a, the tablet computer displays speech texts corresponding to the speaker 1 shown in FIG. 28C, thereby filtering of texts of speakers. It should be understood that speech texts shown in FIG. 28C are filtered speech texts corresponding to the speaker 1. Compared with the speech text shown in FIG. 28A, because speech texts corresponding to the speaker 2 are no longer displayed, speech texts of the speaker 1 displayed by the tablet computer are increased, and speech texts corresponding to the speaker 1 arranged below are moved up and can be directly displayed instead of being displayed only by moving a scroll bar ("Let's meet up later" shown in FIG. 28C).

Next, the tablet computer may merge the speech text 1 corresponding to the speaker 1 into the speech text 2 corresponding to the speaker 1 in response to the deletion operation inputted by the user, thereby merging two indirectly adjacent speech texts corresponding to the speaker 1 into one speech text. Next, when the user inputs a fourth operation, for example, a selection operation on a displayed all speaker option, the tablet computer displays, in ascending order of speech time, speech information corresponding to all speaker labels corresponding to all voice data obtained during recording in response to the fourth operation, that is to say, displays a seventh recording card. The seventh recording card includes the speech text 2 (i.e., the updated speech text 2) merged with the speech text 1 and also includes a speech text (for example, a speech text 3) corresponding to another speaker label, and the speech text 3 is displayed after the updated speech text 2.

In the embodiments of this application, when the user perceives an association between two successive indirectly adjacent speech texts of one speaker and intends to consolidate the two speech texts or intends to consolidate speech information of one speaker, for example, first display all speech texts of one speaker and then display speech texts of another speaker, the user may first filter a speaker label for which consolidation is required. The tablet computer displays all speech texts corresponding to the speaker label in response, so that the user may perform consolidation as required, to achieve the merging of speech texts, the providing diverse text processing functions, so that the display of speech texts can meet the use requirements of the user.

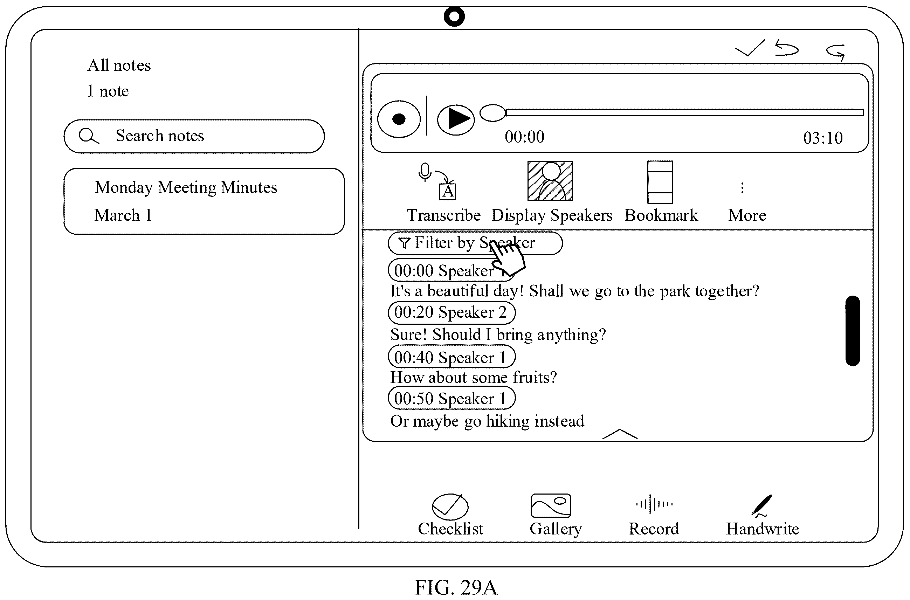

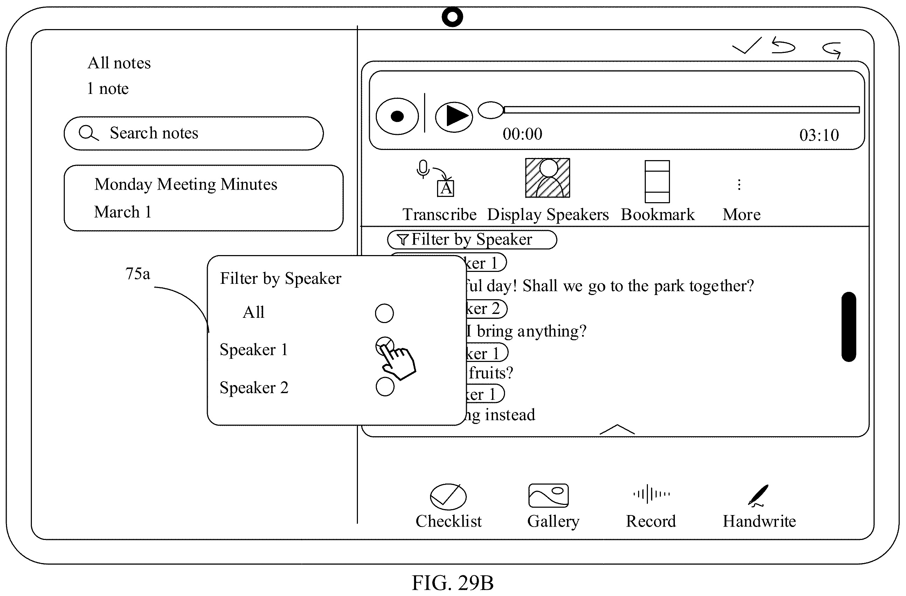

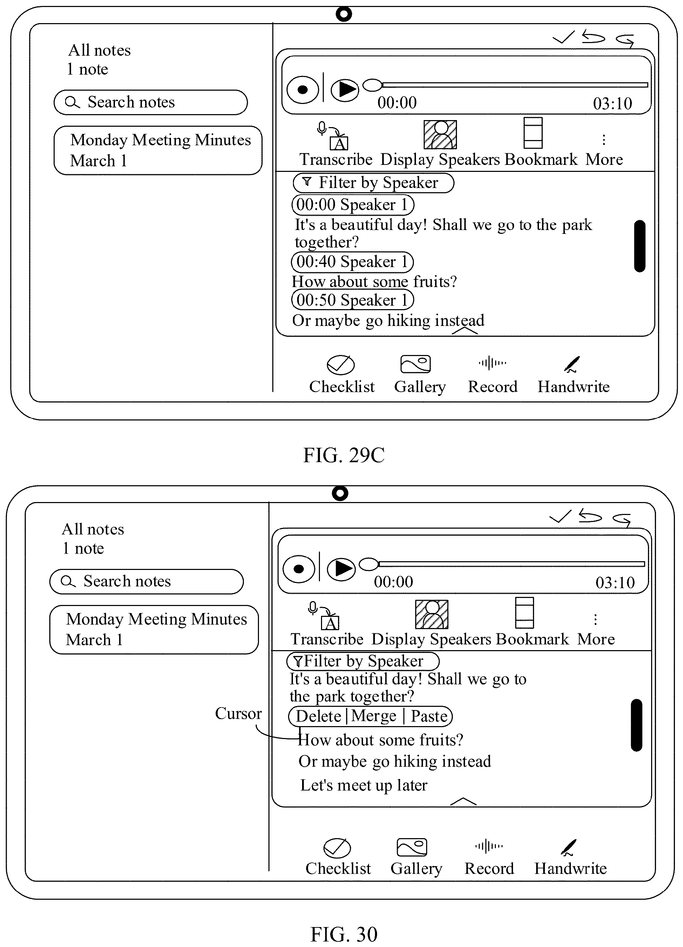

In some embodiments, FIG. 28A to FIG. 28C describe a process of filtering speech texts of a speaker when the tablet computer is not in the speaker display mode, i.e., a process of displaying speech texts corresponding to a target speaker label selected by the user. When being in the speaker display mode, the tablet computer also supports filtering of speakers, and displays only speech information corresponding to the target speaker label. For example, when the tablet computer is in the speaker display mode, the tablet computer displays a speaker option 75a shown in FIG. 29B in response to an operation of clicking a filter speaker control shown in FIG. 29A by the user. After receiving a selection operation of selecting an option of the speaker 1 in the speaker option 75a, the tablet computer displays speech information corresponding to the speaker 1 shown in FIG. 29C, to achieve the filtering of speech information of speakers, thereby meeting a requirement that the user intends to browse speech information of a person.

In this application, the tablet computer supports a speaker filtering function. The user may select as required speech information of a speaker that the user wants to display. The tablet computer can display speech information of a speaker that the user wants, thereby meeting a requirement that the user intends to view only speech information of some speakers.

In some embodiments, the manner in which the tablet computer determines, based on the deletion operation in combination with the current position of the cursor, whether to merge speech texts is only an example of triggering the tablet computer to merge speech texts. The tablet computer may further directly provide a merge control (as shown in FIG. 30). When the user triggers (for example, clicks) the merge control, the tablet computer merges the speech text 1 into the speech text 2 in response to the trigger operation on the merge control. The speech text 1 is a speech text in which the cursor is located. Certainly, the tablet computer may further provide another manner, for example, set a corresponding gesture, to enable the user to trigger the tablet computer to perform a merging operation after the other manner is performed.

In other words, after receiving an operation A, the tablet computer merges the speech text 1 into the speech text 2 based on the operation A. The operation A represents an operation that may trigger the tablet computer to perform a merging operation. For example, the operation A may be a deletion operation, a click operation on the merge control, or the like. It should be understood that when the operation a is a deletion operation, the tablet computer may first determine, based on the current position of the cursor, whether to merge speech texts. Next, when merging speech texts, the tablet computer may merge the speech text 1 into the speech text 2. That is to say, the tablet computer may perform S404 to S408 above. When the operation A is a click operation on the merge control, the tablet computer may directly merge the speech text 1 into the speech text 2.

Optionally, the merge control may be displayed by the tablet computer in response to a specific trigger operation inputted by the user. For example, the user long-presses a screen at the position of the cursor over a specific period of time, clicks the screen continuously and repeatedly, or clicks the position of the beginning of a line in the speech text 1.

S409. The tablet computer deletes speech information corresponding to the speech text 1 to obtain the latest speech information.

S410. The tablet computer displays an interface 2. The interface 2 includes the latest speech information. The latest speech information includes the updated speech text 2.

In some embodiments, the speech information corresponding to the voice data during recording is saved at a preset storage position (for example, a database or another position at which data can be stored). After merging the speech text 1 into the speech text 2, the tablet computer may delete the speech information (i.e., the speech information corresponding to the speech text 1) to which the speech text 1 belongs from the preset storage position to obtain the corresponding latest speech information corresponding to the voice data during the recording. That is to say, the latest speech information includes updated speech information 2, but does not include the speech information to which the speech text 1 belongs. Next, the tablet computer may display the latest speech information. For example, the interface 1 includes the speech text 1 and the speech text 2. After merging the speech text 1 into the speech text 2 to obtain the updated speech text 2, the tablet computer displays the interface 2. The interface 2 includes the updated speech text 2 but no longer includes the speech text 1.

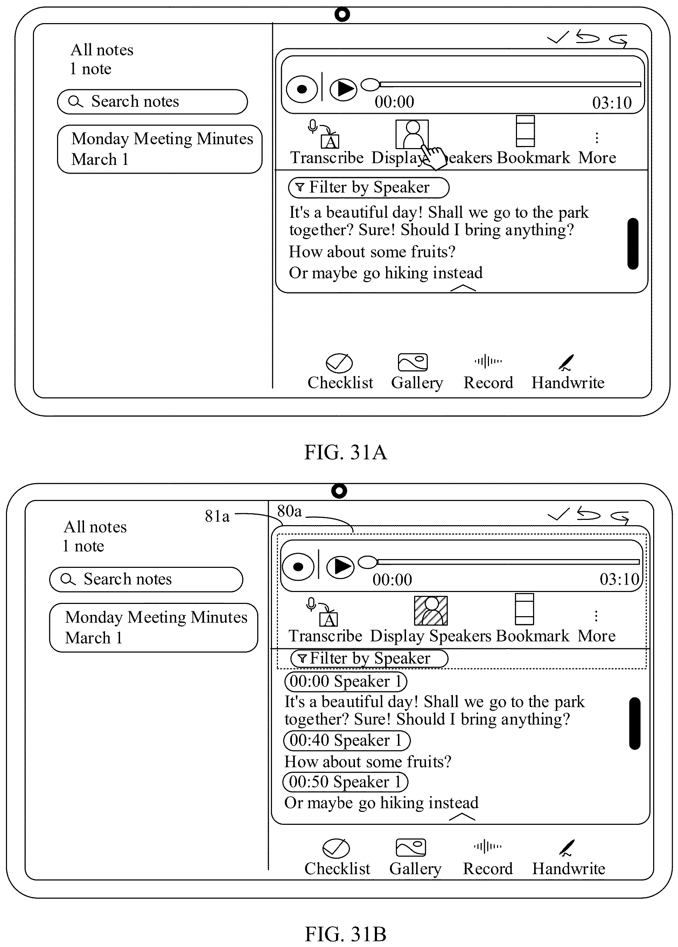

It should be understood that the merging operation is performed when the tablet computer is not in the speaker display mode. Therefore, the tablet computer display the speech text in the latest speech information, but does not display other information. Next, after receiving an operation of clicking a display speaker control shown in FIG. 31A by the user, the tablet computer may display all content (as shown in FIG. 31B) in the latest speech information.

In some embodiments, a storage format of one piece of speech information may be shown in Table 2. After the tablet computer merges the speech text 1 into the speech text 2, the speech text 1 becomes part of content of the speech text 2. That is to say, the Content content of the speech text 1 is added to the Content of speech text 2. In addition, a speech time corresponding to the speech text 1 is a speech time corresponding to the speech text 2. That is to say, a speech time corresponding to the speech text 2 merged with the speech text 1 remains unchanged and continues to be a time recorded by Offset. A speech time corresponding to the first speech text of the speaker 1 shown in FIG. 31B is still 00:00.

**Table 2**

| Column name | Type | Chinese description | Data description |
|---|---|---|---|
| Uuid | TEXT | id value of speech information | Key value, a unique id |
| Offset | TEXT | Time offset, i.e., a speech time | |
| Content | TEXT | Speech text | |
| Speaker | TEXT | Speaker label, for example, a speaker name | |

In some embodiments, in some embodiments, after merging the speech text 1 into the speech text 2, the tablet computer moves the cursor to the end position of the speech text 2 merged with the speech text 1.

In some embodiments, the tablet computer supports an export function for voice data and speech information. The tablet computer receives an operation C (i.e., a fifth operation). The operation C is configured for triggering the tablet computer to export the latest speech information. The tablet computer exports the speech information currently displayed by the tablet computer, for example, the latest speech information, in response to the operation C.

It should be understood that when the tablet computer is not in the speaker display mode, the tablet computer currently displays the speech text in the speech information. In this case, the tablet computer exports a currently displayed speech text in response to the operation C (or referred to as a fifth operation). When the tablet computer is in the speaker display mode, the tablet computer currently displays all content of the speech information. In this case, the tablet computer exports all currently displayed speech information in response to the operation C.

Optionally, the tablet computer may support export in various formats, that is to say, may save the speech information currently displayed by the tablet computer based on a first target format, that is to say, save currently displayed speech information with a format being the first target format at a target position. The target position may be a default save position, or may be a storage position selected by the user.

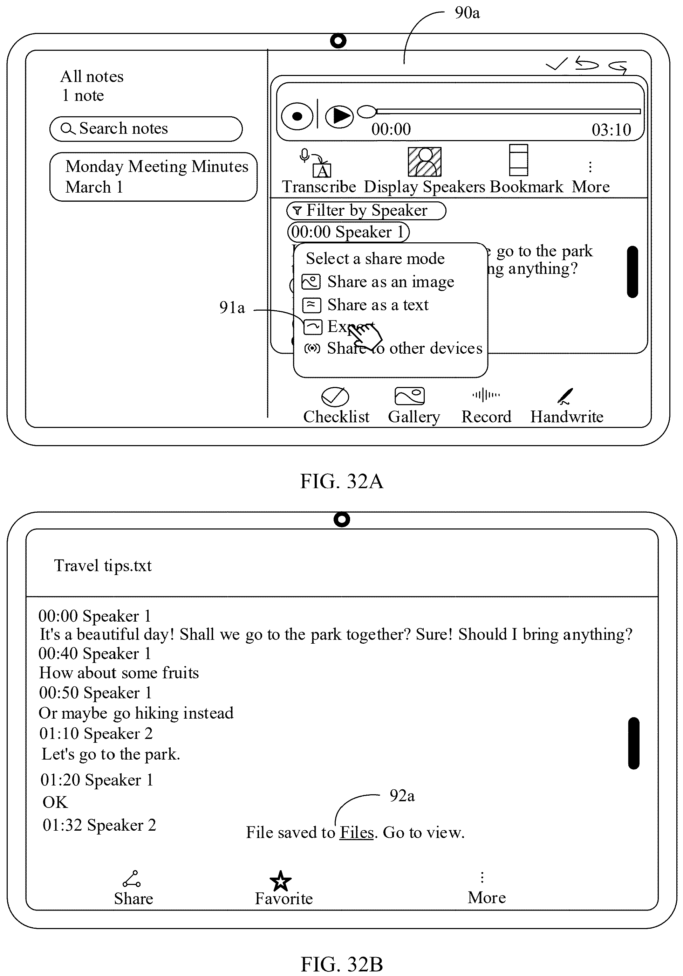

In an example, the first target format may be a default format (or referred to as a default file format). The tablet computer displays an interface 90a shown in FIG. 32A. The interface 90a include a control 91a. The control 91a is configured to trigger the tablet computer to save currently displayed speech information. In response to a click operation on the control 91a by the user, the tablet computer save currently displayed speech information at a target position in a default format (for example, a txt format). Moreover, after saving, the tablet computer may further display position prompt information (position prompt information 92a shown in FIG. 32B). The position prompt information prompts the position at which the currently displayed speech information is saved to the user, thereby facilitating viewing by the user.

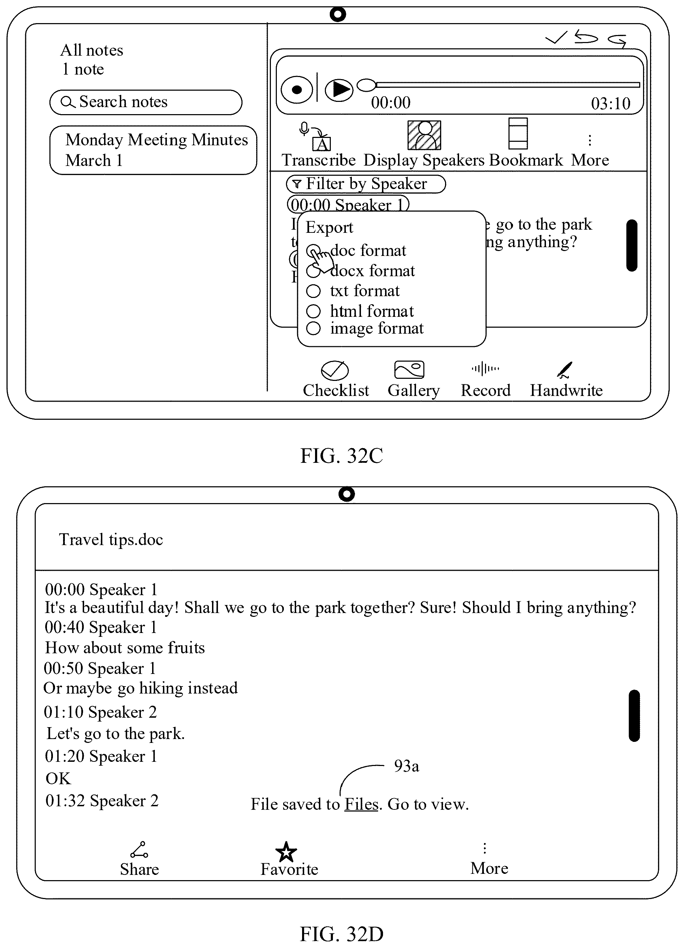

In another example, the first target format may be a format (i.e., a file format) selected by the user. The tablet computer may display at least one first format option. After receiving a selection operation on a target format option in the at least one format option by the user, in response to the selection operation on the target format option, the tablet computer may save currently displayed speech information according to a format (i.e., the first target format) corresponding to the target format option. For example, in response to the click operation on the control 91a in FIG. 32A by the user, the tablet computer displays five first format options, namely, a doc format option, a txt format option, an image format option, an html format option, and a docx format option, shown in FIG. 32C. When the user intends to save the speech information in doc format, the user may click the doc format option. In response to the click operation on the doc format option, the tablet computer may save the currently displayed speech information in doc format. After saving, the tablet computer may further display position prompt information (position prompt information 93a shown in FIG. 32D). The position prompt information prompts a position at which the currently displayed speech information is saved to the user, thereby facilitating viewing by the user.

In some other embodiments, the tablet computer further supports sharing of the speech information currently displayed by the tablet computer in response to an operation D (or referred to as a sixth operation) based on a second target format. For example, the tablet computer share currently displayed speech information with a format being the second target format to an application on the tablet computer.

The second target format is similar to the first target format, and may be a default format or may be a format selected by the user. The second target format is described below in detail in combination with two examples.

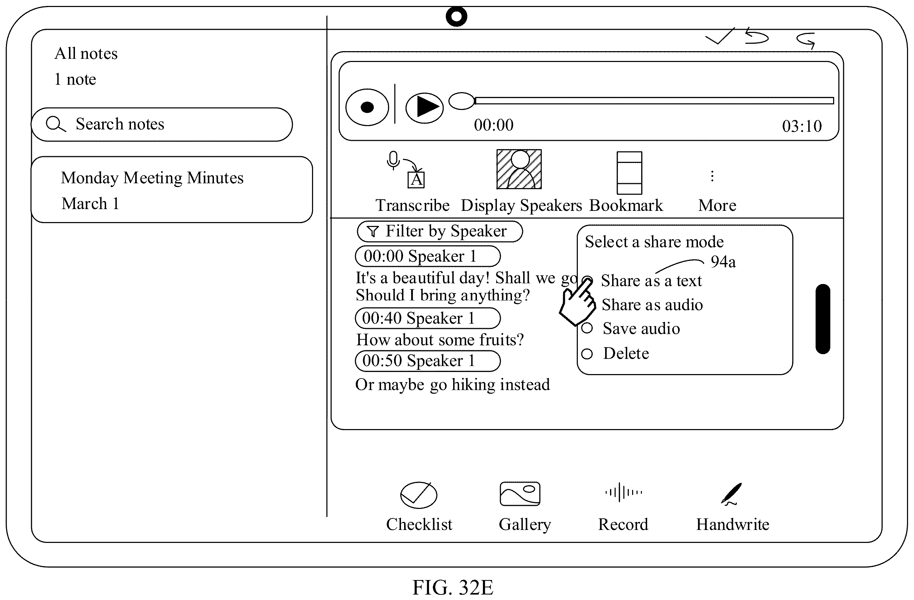

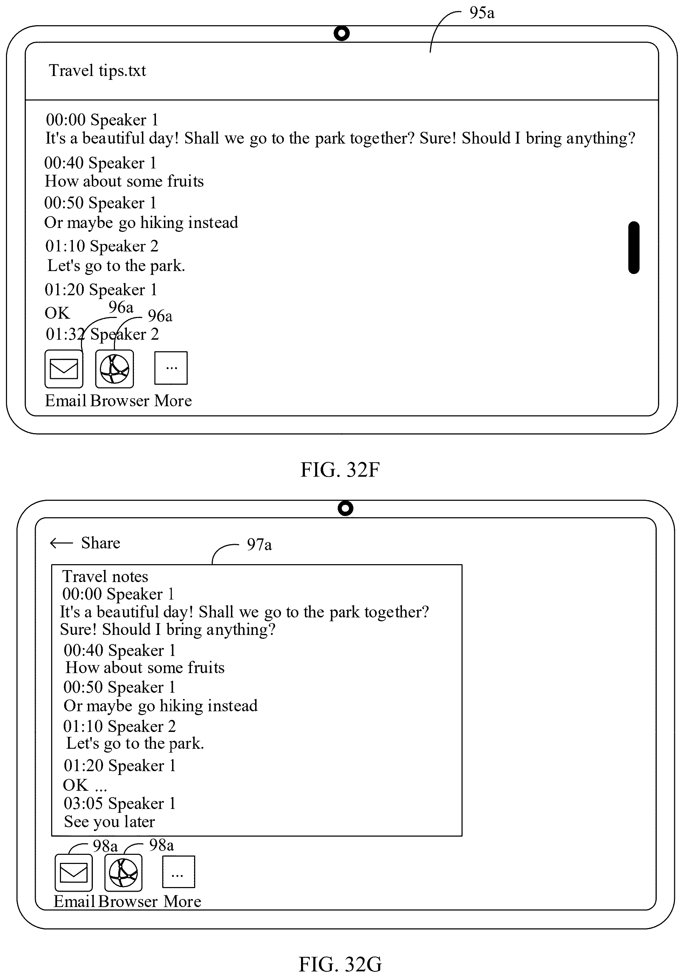

In an example, the second target format is a default format. For example, the tablet computer displays an interface including a third control in response to a sharing operation (for example, a click operation on the share control) inputted by the user. The third control is configured to trigger the tablet computer to display first candidate applications. Next, in response to a selection operation on a first target application in the first candidate applications by the user, currently displayed speech information with a format being the second target format is shared to the first target application. The first candidate applications are applications that can receive a file with a format being the second target format. For example, the tablet computer displays an interface 95a shown in FIG. 32F in response to a click operation on a share control 94a shown in FIG. 32E by the user. The interface 95a displays a format (for example, txt format) of the currently displayed speech information, the speech information, the first candidate applications 96a, and the like. The first candidate applications 96a represent applications that can receive a file with a format being txt format, so that the user may select an application as required to perform sharing.

In another example, the second target format is selected by the user. When the user intends to share the currently displayed speech information in an image format, the user may select an image format share option (share shown in FIG. 32A is an image option) displayed by the tablet computer. In response to a selection operation on the image format share option by the user, an interface shown in FIG. 32G is displayed. The interface includes currently displayed speech information 97a with a format being an image format and second candidate applications 98a. The second candidate applications 98a represents applications that can receive a file with a format being an image format for the user to select an application to perform sharing.

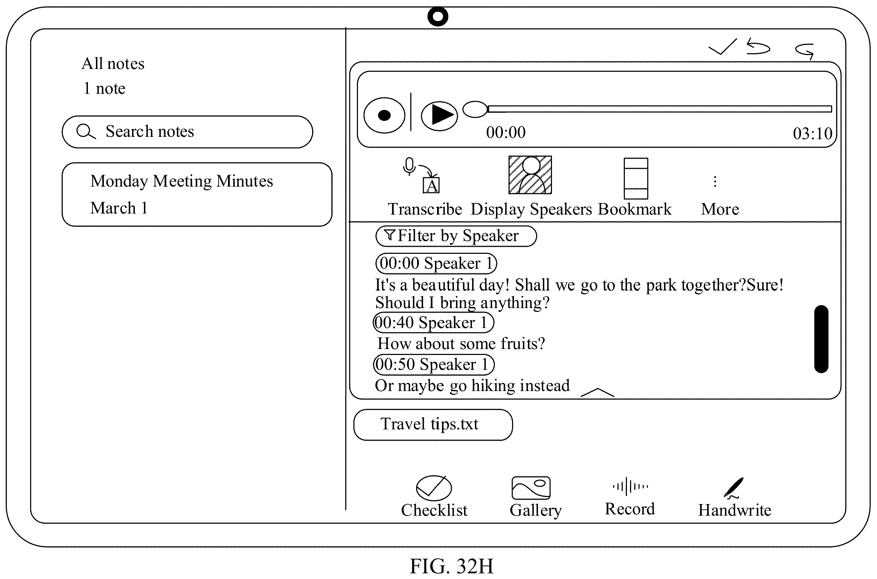

In some embodiments, as shown in FIG. 32H, the tablet computer may display currently displayed speech information with a format being the first target format or the second target format on an interface displaying a related control (for example, a playback control and a first control) of a first voice file, for example, on an interface displaying the currently displayed information.

In some embodiments, the tablet computer may alternatively export or share speech information of all speakers or speech information of some speakers according to selection by the user. For example, in response to the control 91a, the tablet computer may display an export speaker option. The export speaker option includes an export all option and at least one export speaker option. The export all option is configured to trigger the tablet computer to export the speech information of all speakers. The export speaker option corresponds one to one to the speaker label. The export speaker option is configured to trigger the tablet computer to export speech information of a speaker corresponding to the speaker option. Similarly, the tablet computer may alternatively export or share content, for example, the speaker label, or the speech time, other than the speech text in the speech information according to selection by the user whether exists.

In some embodiments, the tablet computer may alternatively share the currently displayed speech information to another device in a default file format or a file format selected by the user.

It should be noted that the foregoing sharing and export operations may be performed after the tablet computer stops recording (as shown in FIG. 32A). During recording, the tablet computer typically does not perform exporting and sharing operations on a first voice file or speech information corresponding to the first voice file. The operations such as switching a speaker display mode, merging speech texts, filtering speech information of speakers, and displaying speech information of all speakers may be performed during recording, or may be performed after recording is stopped. For example, as shown in FIG. 28A to FIG. 28C, the tablet computer filters speech texts of the speaker 1 after the recording is stopped.

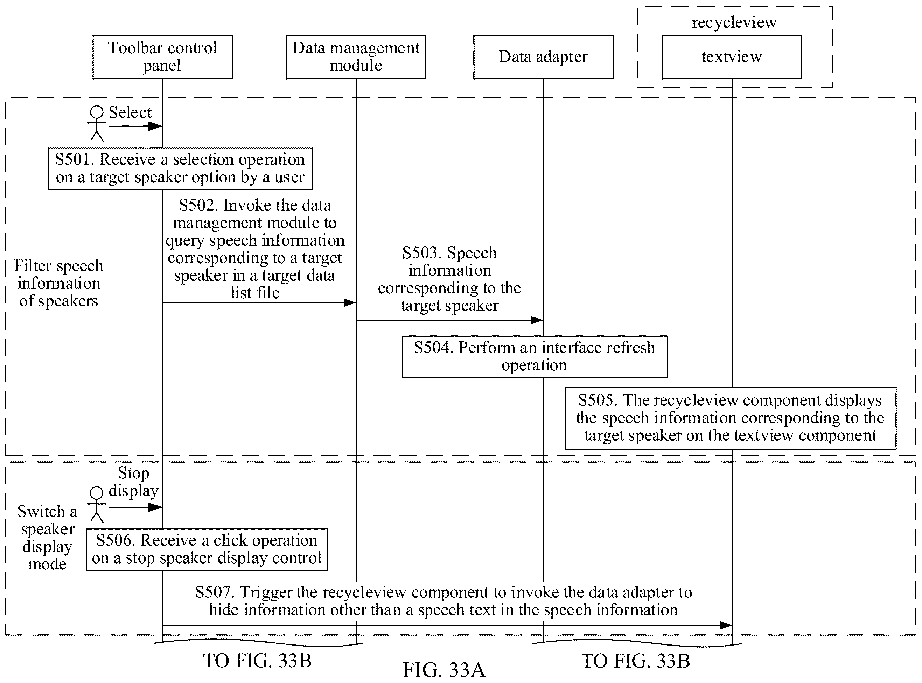

That the electronic device supports the functions of switching a speaker display mode, merging speech texts, filtering speech information of speakers, and displaying speech information of all speakers is described above. Specific implementation processes in which the electronic device achieves the functions of switching a speaker display mode, merging speech texts, filtering speech information of speakers, and displaying speech information of all speakers are described below in combination with the software framework shown in FIG. 6. The filtering of speech information of speakers may include S501 to S505 shown in FIG. 33A.

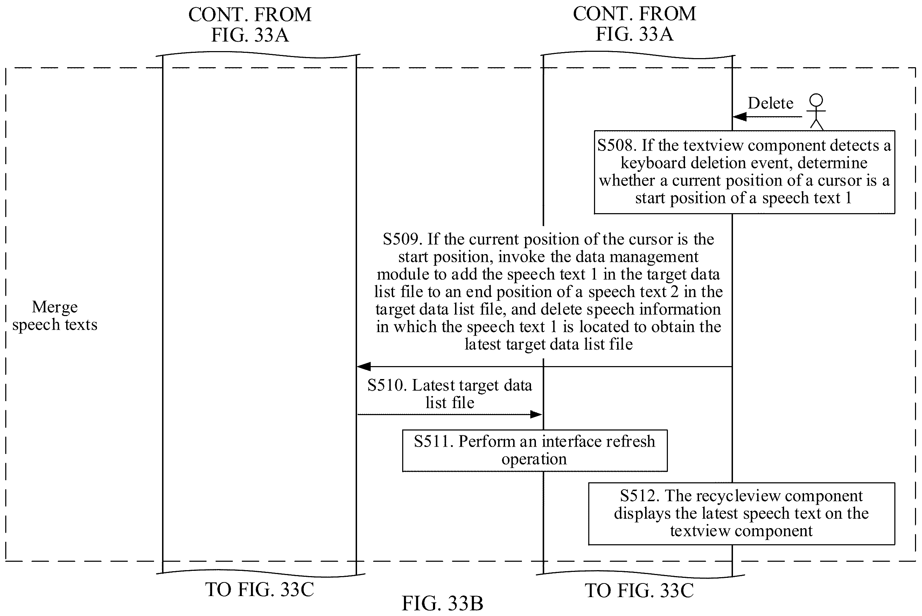

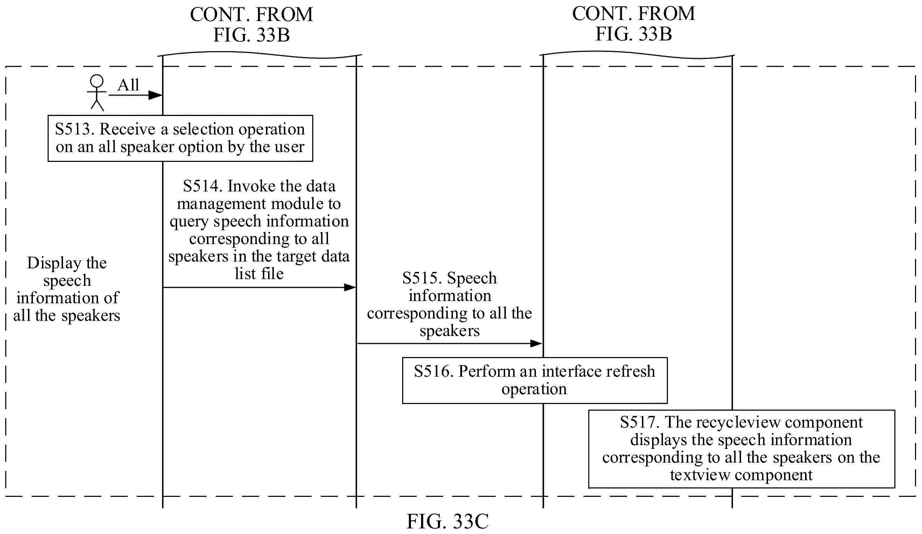

The implementation process of switching a speaker display mode may include S506 to S507 shown in FIG. 33A. The implementation process of merging speakers may include S508 to S512 shown in FIG. 33B. The implementation process of displaying speech information of all speakers may include S513 to S517 shown in FIG. 33C.

S501. A toolbar control panel receives a selection operation on a target speaker option by a user.

The toolbar control panel may be tool controls in a recording card. The toolbar control panel (as shown by 80a in FIG. 31B) is configured to trigger a tablet computer to perform corresponding operations, for example, recording, recording stop, transcription, switching of a speaker display mode, exporting, sharing, speaker filtering, among other operations. The recording card (a recording card 81a shown in FIG. 31B) may further include speech information and the like.

S502. In response to the selection operation on the target speaker option, the toolbar control panel invokes a data management module to query speech information corresponding to a target speaker in a target data list file.

In the embodiments of this application, when the user intends to view speech information of some speakers, the user may click a filter speaker control shown in FIG. 28A. The tablet computer displays speaker options for the user to select one or more speaker options. When the toolbar control panel obtains the speaker option selected by the user, the speaker option selected by the user may be used as the target speaker option. Next, the toolbar control panel may invoke the data management module to query the speech information corresponding to the target speaker corresponding to the target speaker option in the target data list file by using a database (database, DB). For example, the target speaker is a speaker 1. The speech information corresponding to the target speaker is speech information corresponding to the speaker 1.

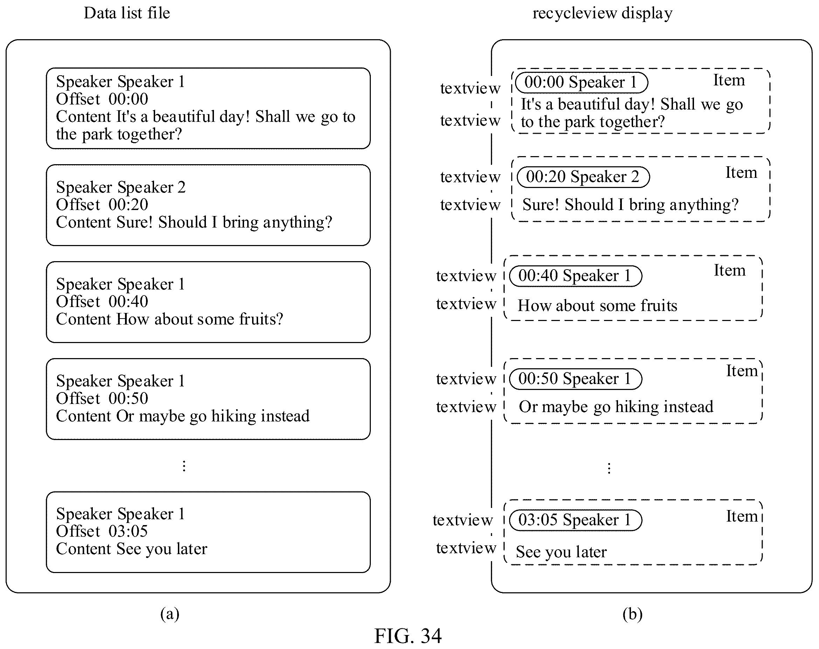

The target data list file (as shown in (a) in FIG. 34) includes speech information. That is to say, one piece of speech information corresponds to one record in the target data list file. Speaker (i.e., a speaker field) represents a speaker label, and records a speaker label in the speech information. Offset (i.e., a speech time field) represents a speech time, and records a speech time in the speech information. Content (i.e., a speech text field) represents speech content, and records a speech text in the speech information.

In some embodiments, the speech information is carried by a recycleview. Each piece of speech information is one item. One item includes a plurality of view components (for example, textview components). One textview component in a plurality of textview components is configured to carry a speech text. That is to say, one textview component includes a speech text, and another textview component is configured to carry a speaker label.

Optionally, the speaker label and the speech time may be in different views components, or may be in one view component.

In some embodiments, the database may store the target data list file. Correspondingly, the data management module may directly query the target data list file from the database to obtain speech information corresponding to a target speaker.

In some other embodiments, the database may store a storage path corresponding to the target data list file. Correspondingly, the data management module queries the storage path corresponding to the target data list file from the database for the query of the target data list file by using the storage path.

S503. The data management module sends the speech information corresponding to the target speaker to a data adapter.

S504. The data adapter performs an interface refresh operation.

S505. A recycleview component displays the speech information corresponding to the target speaker on a textview component.

For example, the textview component may be understood as being arranged on the recycleview component. Each piece of information in the speech information is displayed by a corresponding textview. As shown in (b) in FIG. 34, a speaker label and speaker text are located in different textviews. In a speaker display mode, adjacent speech files are separated by one textview.

In some embodiments, an imgview may be further arranged in the recycleview component, and may be configured to display a speaker avatar. For example, the speaker avatar may be displayed on the left side of the speech time.

The implementation process of filtering speech information of speakers is described above. The implementation process of switching a speaker display mode continues to be described below.

S506. When the tablet computer is in the speaker display mode, the toolbar control panel receives a click operation on a stop speaker display control.

S507. In response to the click operation on the stop speaker display control, the toolbar control panel triggers the recycleview component to invoke the data adapter to hide information other than the speech text in the speech information.

For example, when the toolbar control panel receives the click operation on the stop speaker display control by the user, it indicates that the display of speakers (for example, the speaker label and the speech time) need to be canceled, and only the speech text is displayed. Therefore, the recycleview component may be triggered to invoke the data adapter to hide the textview configured to display the speech time and the speaker label, to display only the speech text, thereby meeting the use requirement of canceling the display of speakers by the user.

The implementation process of switching speaker states is described above. The implementation process of merging speech texts continues to be described below.

S508. When detecting a keyboard deletion event, the textview component determines whether a current position of a cursor is a start position of a speech text 1.

A speech text displayed on the textview component that detects the keyboard deletion event may be the speech text 1.

For example, the user positions the cursor in one speech text. The tablet computer enters an edit mode and displays a soft keyboard. Next, when receiving a click operation on a delete key on the soft keyboard by the user, the textview component detects the keyboard deletion event. The textview component needs to determine a use requirement of the user through the current position of the cursor.

S509. When the current position of the cursor is the start position, the textview component invokes the data management module to add the speech text 1 in the target data list file to an end position of a speech text 2 in the target data list file, and deletes speech information in which the speech text 1 is located to obtain the latest target data list file.

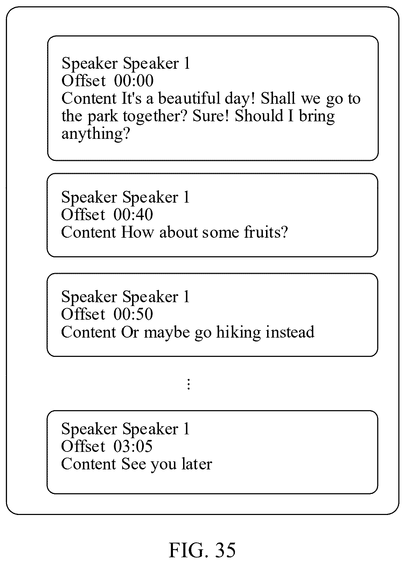

For example, assuming that the tablet computer currently displays speech texts of all speakers (as shown in FIG. 25A), the speech text 1 is "Sure! Should I bring anything", and the speech text 2 is "It's a beautiful day! Shall we go to the park together" In this case, the data management module may concatenate the speech text 1 in the target data list file to the speech text 2 to obtain an updated speech text 2, and deletes the speech information to which the speech text 1 in the target data list file belongs, that is to say, deletes a record to which the speech text 1 belongs to obtain the latest target data list file, as shown in FIG. 35.

S510. The data management module sends the latest target data list file to the data adapter.

S511. The data adapter performs an interface refresh operation.

S512. The recycleview component displays the latest speech text on the textview component.

For example, the latest speech text includes the updated speech text 2 but does not include the speech text 1. When the tablet computer is not in the speaker display mode, in this case, speech texts in the latest target data list are displayed (as shown in FIG. 31A), but speaker labels and speech times are not displayed.

When the tablet computer is in the speaker display mode, in this case, all content of speech information in the latest target data list are displayed (as shown in FIG. 31B). That is to say, the latest speech texts are displayed, and the speaker labels and the speech times are further displayed.

The implementation process of merging speech texts is described above. The implementation process of displaying speech information of all speakers continues to be described below.

S513. The toolbar control panel receives a selection operation on an all speaker option by the user.

For example, when the user intends to make the tablet computer display the speech information of all the speakers, the user may select the all speaker option (an all option shown in FIG. 28B). The toolbar control panel queries the speech information of all the speakers based on the selection operation on the all speaker option.

S514. In response to the selection operation on the all speaker option, the toolbar control panel invokes the data management module to query speech information corresponding to all speakers in the target data list file.

S515. The data management module sends the speech information corresponding to all the speakers to the data adapter.

S516. The data adapter performs an interface refresh operation.

S517. The recycleview component displays the speech information corresponding to all the speakers on the textview component.

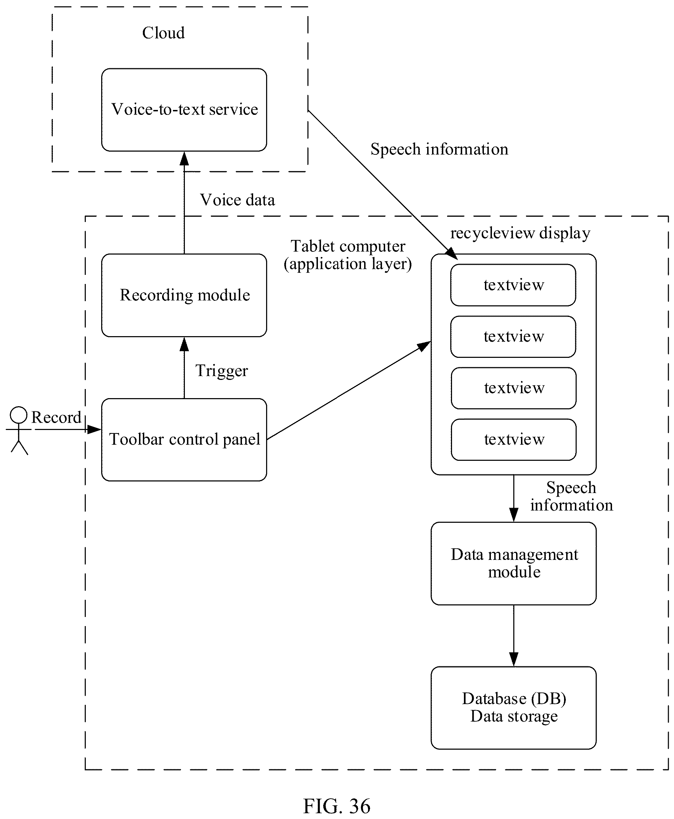

In some embodiments, the toolbar control panel is provided by a notes application. The toolbar control panel may further include a recording control. As shown in FIG. 36, when the user clicks the recording control, the toolbar control panel triggers the recording module to perform recording in response to the click operation on the recording control to acquire corresponding voice data. Correspondingly, the tablet computer supports automatic real-time transcription of voice. Therefore, the recording module may send the voice data to a transcription service. Next, after transcription succeeds, the transcription service may send speech information to the notes application. After obtaining the speech information, the notes application may display the speech information on a corresponding textview component on the recycleview component, and store data through the data management module, thereby achieving the storage of the speech information.

The transcription service may be located at the cloud, as shown in FIG. 36, or the transcription service is located locally on the tablet computer. This is not limited in this application.

In some embodiments, this application provides a computer-readable storage medium, including computer instructions. When the computer instructions are run on an electronic device, the electronic device is enabled to perform the voice processing method described above.

In some embodiments, this application provides a computer program product. When the computer program product runs on an electronic device, the electronic device is enabled to perform the voice processing method described above.

According to the descriptions of the foregoing implementations, a person skilled in the art may clearly understand that, for the purpose of convenient and brief description, the division into the foregoing functional modules is only used as an example for description. In actual application, the foregoing functions may be allocated to and completed by different functional modules based on needs. That is, an inner structure of an apparatus is divided into different functional modules to complete all or some of the functions described above.

In the several embodiments provided in this application, it should be understood that the disclosed apparatus and method may be implemented in another manner. For example, the described apparatus embodiment is merely an example. For example, the division into modules or units the is merely logical function division and may be other division in actual implementation. For example, a plurality of units or components may be combined or integrated into another apparatus, or some features may be ignored or not performed. In addition, the displayed or discussed mutual couplings or direct couplings or communication connections may be implemented through some interfaces. The indirect couplings or communication connections between the apparatuses or units may be implemented in an electrical form, a mechanical form, or another form.

The units described as separate parts may or may not be physically separate, and parts displayed as units may be one or more physical units, may be located in one place, or may be distributed on different places. Some or all of the units may be selected based on actual requirements to achieve the objectives of the solutions in the embodiments.

In addition, the functional units in the embodiments of this application may be integrated into one processing unit, or each of the units may exist alone physically, or two or more units may be integrated into one unit. The integrated unit may be implemented in the form of hardware, or may be implemented in a form of a software functional unit.

When the integrated unit is implemented in the form of a software functional unit and sold or used as an independent product, the integrated unit may be stored in a readable storage medium. Based on such an understanding, the technical solution of this application essentially, or the part contributing to the conventional technologies, or all or some of the technical solution may be implemented in the form of a software product. The software product is stored in a storage medium and includes several instructions for enabling a device (which may be a single-chip microcomputer, a chip or the like) or a processor (processor) to perform all or some of the steps of the method described in embodiments of this application. The storage medium includes: a USB flash disk, a mobile hard disk, a read only memory (ROM), a random access memory (RAM), a magnetic disk, an optical disk, and other media capable of storing program codes.

What is described above is merely specific embodiments of this application, but the protection scope of this application is not limited to such embodiments. Any variation or replacement within the technical scope disclosed herein still fall within the protection scope of this application. Therefore, the protection scope of this application should be subject to the protection scope of the claims.

## Claims

1. A voice processing method, comprising:
when an electronic device displays a first interface of a first note in a notes application, transcribing, by the electronic device, the obtained latest voice data into the corresponding latest speech information, wherein the first interface comprises a first recording card, the first recording card comprises a first control, and the first control is configured to trigger recording stop;
displaying, by the electronic device, the latest speech information in the first recording card;
displaying, by the electronic device, a second interface of the first note in response to a trigger operation on the first control, wherein the second interface comprises a second recording card, the second recording card comprises a plurality of pieces of speech information and a second control, the second control is configured to trigger recording, the speech information comprises at least a speech text, and the second control is configured to trigger recording;
updating, by the electronic device, the second recording card to a third recording card in response to a long-press operation inputted by a user, wherein a target character range in a concatenated character string is selected in the third recording card, the concatenated character is obtained by concatenating the plurality of pieces of speech information, the target character range is determined based on a start position and an end position corresponding to the long-press operation, the target character range comprises at least two pieces of speech information in the plurality of pieces of speech information or information in different lines in one piece of speech information in the plurality of pieces of speech information; and
displaying, by the electronic device, at least one function control, wherein the function control is configured to trigger the electronic device to perform corresponding processing on characters in the target character range.

2. The method according to claim 1, wherein the target character range comprises a character corresponding to an offset character position and characters within a selected character count succeeding the offset character position;
the offset character position represents a quantity of corresponding characters from the first character in the plurality of pieces of speech information to the start position corresponding to the long-press operation, and the offset character position represents a position of the first selected character with respect to the concatenated character string; and
the selected character count is determined based on the start position and the end position corresponding to the long-press operation.

3. The method according to claim 1 or 2, wherein the concatenated character string is concatenated from the first character in the plurality of pieces of speech information to the last character in the plurality of pieces of speech information.

4. The method according to any one of claims 1 to 3, wherein the second recording card comprises a scrollable component, and the plurality of pieces of speech information are carried by the scrollable component; and
the updating, by the electronic device, the second recording card to a third recording card comprises:
replacing, by the electronic device, the scrollable component in the second recording card with a preset text component; and
displaying, by the electronic device, the concatenated character string in the preset text component to obtain the third recording card.

5. The method according to claim 4, wherein after the displaying at least one function control, the method further comprises:
when the function control stops displaying, replacing, by the electronic device, the preset text component of the third recording card with the scrollable component, wherein the scrollable component carries the plurality of pieces of speech information.

6. The method according to any one of claims 1 to 5, further comprising:
in response to a click operation inputted by the user, when a click position corresponding to the click operation is in the speech text, if the electronic device is not in a playback state, making the electronic device enter an edit mode; and
if the electronic device is in the playback state, playing, by the electronic device, voice data corresponding to a first speech time, wherein the first speech time represents a speech time corresponding to a character corresponding to the click position, wherein
the playback state represents that the electronic device plays voice data.

7. The method according to claim 6, wherein the second recording card further comprises a progress bar; and
if the electronic device is in the playback state, the method further comprises:
moving, by the electronic device, a playback position of the progress bar to the first speech time.

8. The method according to claim 6 or 7, wherein the first speech time is obtained by adding an offset time to a speech start time corresponding to a first target speech text, the offset time is obtained based on a speech speed corresponding to the first target speech text and an offset character count, and the offset character count is a quantity of characters preceding the click position in the first target speech text; and
the first target speech text represents a speech text in which the click position is located.

9. The method according to any one of claims 1 to 5, wherein the speech information further comprises a speaker label; and
the method further comprises:
in response to a click operation inputted by the user, when a click position corresponding to the click operation is in the speaker label, if the electronic device is not in a playback state, displaying, by the electronic device, a speaker modification control, wherein the speaker modification control is configured to trigger the electronic device to modify the speaker label; and
if the electronic device is in the playback state, playing, by the electronic device, voice data corresponding to a target speech start time, wherein the target speech start time is a speech start time corresponding to the speaker label, wherein
the playback state represents that the electronic device plays voice data.

10. A voice processing method, comprising:
when an electronic device displays a first interface of a first note in a notes application, transcribing, by the electronic device, the obtained latest voice data into the corresponding latest speech information, wherein the first interface comprises a first recording card, the first recording card comprises a first control, and the first control is configured to trigger recording stop;
displaying, by the electronic device, the latest speech information in the first recording card;
displaying, by the electronic device, a second interface of the first note in response to a trigger operation on the first control, wherein the second interface comprises a second recording card, the second recording card comprises first speech information, second speech information, and a second control, the first speech information comprises a first speech text, the second speech information comprises a second speech text, a speech time corresponding to the first speech information is earlier than a speech time corresponding to the second speech information, the first speech information and the second speech information are displayed adjacently, and the second control is configured to trigger recording;
displaying a cursor at the beginning of a line in the second speech text in response to a first operation on the second speech text; and
updating, by the electronic device, the second recording card to a fourth recording card in response to a deletion operation inputted by a user, wherein the second speech text and the first speech text are merged into third speech information and the second speech information is deleted in the fourth recording card, and a speaker label corresponding to the third speech information is the same as a speaker label corresponding to the second speech text.

11. The method according to claim 10, wherein the updating, by the electronic device, the second recording card to a fourth recording card comprises:
when the second recording card does not display a speaker label, updating, by the electronic device, the second recording card to the fourth recording card.

12. The method according to claim 11, wherein the first speech information further comprises a speaker label corresponding to the first speech text, and the second speech information further comprises the speaker label corresponding to the second speech text;
the method further comprises:
receiving, by the electronic device, a second operation inputted by the user, wherein the second operation is configured for triggering the electronic device to stop displaying a speaker label; and
updating, by the electronic device, the second recording card to a fifth recording card in response to the second operation, wherein the fifth recording card comprises the first speech text and the second speech text and does not comprise the speaker label corresponding to the first speech text and the speaker label corresponding to the second speech text;
the updating, by the electronic device, the second recording card to a fourth recording card comprises:
updating, by the electronic device, the fifth recording card to the fourth recording card.

13. The method according to claim 11, wherein the first speech information further comprises a speaker label corresponding to the first speech text, and the second speech information further comprises the speaker label corresponding to the second speech text; and
the updating, by the electronic device, the second recording card to a fourth recording card in response to a deletion operation inputted by a user comprises:
updating, by the electronic device, the second recording card to a fifth recording card in response to the deletion operation inputted by the user, wherein the fifth recording card comprises the first speech text and the second speech text and does not comprise the speaker label corresponding to the first speech text and the speaker label corresponding to the second speech text; and
updating, by the electronic device, the fifth recording card to the fourth recording card.

14. The method according to any one of claims 10 to 13, wherein the second recording card further comprises fourth speech information, the fourth speech information comprises a fourth speech text, a speech time corresponding to the fourth speech information lies between the speech time corresponding to the first speech information and the speech time corresponding to the second speech information, the first speech text and the second speech text correspond to a first speaker label, and a speaker label corresponding to the fourth speech text is different from the first speaker label;
the method further comprises:
receiving a third operation on the second recording card, wherein the third operation is configured for triggering the electronic device to display all speech information corresponding to the first speaker label; and
updating, by the electronic device, the second recording card to a sixth recording card in response to the third operation, wherein the sixth recording card comprises all the speech information corresponding to the first speaker label and does not comprise the fourth speech information; and
the updating, by the electronic device, the second recording card to a fourth recording card comprises:
updating, by the electronic device, the sixth recording card to the fourth recording card.

15. The method according to claim 14, wherein after the updating, by the electronic device, the sixth recording card to the fourth recording card, the method further comprises:
receiving, by the electronic device, a fourth operation on the fourth recording card, wherein the fourth operation is configured for triggering the electronic device to display speech information corresponding to all speaker labels; and
displaying, by the electronic device, a seventh recording card in response to the fourth operation, wherein the seventh recording card comprises the fourth speech information, and the fourth speech information succeeds the third speech information.

16. The method according to any one of claims 10 to 13, wherein the speaker label corresponding to the first speech text is different from the speaker label corresponding to the second speech text.

17. The method according to any one of claims 10 to 16, wherein the first speech information and the second speech information are carried by a scrollable component, the first speech information is carried by a first item item in the scrollable component, the second speech information is carried by a second item in the scrollable component, the first item is different from the second item, a text component in the first item comprises the first speech text, and a text component in the second item comprises the second speech text; and
that the second speech text and the first speech text are merged into third speech information and the second speech information is deleted comprises: the second speech text in the text component in the second item is merged into the text component in the first item, and the second item is deleted.

18. The method according to any one of claims 10 to 16, wherein the electronic device comprises a target data list file, the target data list file comprises a plurality of records, each record in the plurality of records corresponds to one piece of speech information, and each record comprises a speech text corresponding to a speech text field; and
the method further comprises:
merging, by the electronic device, the second speech text corresponding to a speech text field in a second record in the target data list into the first speech text corresponding to a speech text field in a first record in response to the deletion operation, wherein the first record corresponds to the first speech information, and the second record corresponds to the second speech information.

19. The method according to any one of claims 10 to 18, wherein the electronic device saves all currently displayed speech information based on a first target format in response to a fifth operation, and the first target format represents a default file format or a selected file format;
or,
the electronic device shares all the currently displayed speech information to an application on the electronic device based on a second target format in response to a sixth operation, and the second target format represents a default file format or a selected file format; and
all the currently displayed speech information corresponds to the same speaker label.

20. An electronic device, wherein the electronic device comprises a display, a memory, and one or more processors; the display and the memory are coupled to the processor; the display is configured to display an image generated by the processor; the memory is configured to store computer program code, and the computer program code comprises computer instructions; and when the processor executes the computer instructions, the electronic device is enabled to perform the method according to any one of claims 1 to 19.

21. A computer-readable storage medium, comprising computer instructions, wherein when the computer instructions are run on an electronic device, the electronic device is enabled to perform the method according to any one of claims 1 to 19.
